# EUROPÄISCHE PATENTANMELDUNG

(11) **EP 3 779 082 A1**
(43) Veröffentlichungstag der Anmeldung: **17.02.2021**
(21) Anmeldenummer: 19192059.4
(22) Anmeldetag: 16.08.2019
(51) Int. Cl.: E04B 2/88

(54) **DOPPELFASSADENANORDNUNG**

(71) Anmelder: Glas Trösch Holding AG, 6374 Buochs (CH)
(72) Erfinder: Graf, Roman, 4617 Gunzgen (CH); Synowczyk, Andreas, 4800 Zofingen (CH)
(74) Vertreter: Keller Schneider Patent- und Markenanwälte AG (Bern)

(57) **Zusammenfassung**

Die Erfindung betrifft eine Doppelfassadenanordnung (1) für einen Hochbau (70), insbesondere ein Gebäude, eine Brückenstütze, ein Brückenpfeiler oder eine Lärmschutzwand, umfassend eine Doppelfassade (20) zur Erzeugung eines vertikal gerichteten Luftstroms (50) mittels Kamineffekt. Dabei umfasst die Doppelfassade (20) eine Innenfassade (21) und eine Aussenfassade (22), wobei zwischen der Innenfassade (21) und der Aussenfassade (22) ein Fassadenzwischenraum (23) zur Führung des Luftstroms (50) besteht, wobei die Innenfassade (21) den Fassadenzwischenraum (23) zum Hochbau (70) hin abgrenzt und die Aussenfassade (22) den Fassadenzwischenraum (23) zu einer Umgebung (60) des Hochbaus (70) hin abgrenzt. Weiter umfasst die Doppelfassade (20) einen Lufteinlass (24) zum Einlassen des Luftstroms (50) mit Luft aus der Umgebung (60) in den Fassadenzwischenraum (23) und einen oberhalb des Lufteinlasses (24) angeordneten Luftauslass (25) zum Auslassen zumindest eines Teils des Luftstroms (50) aus dem Fassadenzwischenraum (23). Zudem umfasst die Doppelfassadenanordnung (1) eine Kohlendioxidabscheidevorrichtung (2) zum Abscheiden zumindest eines Teils des Kohlendioxids aus der Luft des Luftstroms (50). Weiter betrifft die Erfindung einen Hochbau (70), insbesondere ein Gebäude, eine Brückenstütze oder einen Brückenpfeiler mit einer derartigen Doppelfassadenanordnung (1). Ausserdem betrifft die Erfindung die Verwendung einer derartigen Doppelfassadenanordnung (1) oder Hochbaus (70) mit einer derartigen Doppelfassadenanordnung (1) zur Erzeugung eines vertikal gerichteten Luftstroms (50) mittels Kamineffekt und zur Abscheidung von Kohlendioxid aus der Luft des Luftstroms (50).

## Beschreibung

### Technisches Gebiet

Die Erfindung betrifft eine Doppelfassadenanordnung für einen Hochbau, insbesondere ein Gebäude, eine Brückenstütze, ein Brückenpfeiler oder eine Lärmschutzwand, umfassend eine Doppelfassade zur Erzeugung eines vertikal gerichteten Luftstroms mittels Kamineffekt, wobei die Doppelfassade eine Innenfassade und eine Aussenfassade umfasst, wobei zwischen der Innenfassade und der Aussenfassade ein Fassadenzwischenraum zur Führung des Luftstroms besteht, wobei die Innenfassade den Fassadenzwischenraum zum Hochbau hin abgrenzt und die Aussenfassade den Fassadenzwischenraum zu einer Umgebung des Hochbaus hin abgrenzt, und wobei die Doppelfassade einen Lufteinlass zum Einlassen des Luftstroms mit Luft aus der Umgebung in den Fassadenzwischenraum und einen oberhalb des Lufteinlasses angeordneten Luftauslass zum Auslassen zumindest eines Teils des Luftstroms aus dem Fassadenzwischenraum umfasst. Weiter betrifft die Erfindung einen Hochbau mit einer solchen Doppelfassadenanordnung sowie die Verwendung einer solchen Doppelfassadenanordnung bzw. eines solchen Hochbaus.

### Stand der Technik

Doppelfassadenanordnungen gemäss dem eingangs genannten technischen Gebiet sind bekannt. Die DE 20 2009 015 506 U1 der Franz Hesendenz GmbH beispielsweise beschreibt eine Doppelfassadeanordnung mit einer Doppelfassade für mehrstöckiges Gebäude, welche eine Aussenfassade, eine Innenfassade und einen zwischen der Aussenfassade und der Innenfassade angeordneten Fassadenzwischenraum aufweist. In der Aussenfassade ist unten ein Lufteinlass und oben ein Luftauslass angeordnet, sodass bei einem Wärmeeintrag im Fassadenzwischenraum Luft im Fassadenzwischenraum aufsteigt.

Eine weitere, ähnliche Doppelfassadenanordnung ist in der WO 2013/053486 A2 der Thermic Renewables GmbH beschrieben.

Einige dieser bekannten Doppelfassadenanordnungen ermöglichen zwar die Gewinnung alternativer Energien und sind damit klima- und umweltfreundlich. Allerdings haben solche Doppelfassadenanordnungen kaum Einfluss auf die Umwelt in der direkten Umgebung des Hochbaus mit der entsprechenden Doppelfassadenanordnung. Damit haben diese Doppelfassadenanordnungen den Nachteil, dass ihr lokaler Einfluss auf die Lebensqualität von Menschen, Tieren und Pflanzen sehr beschränkt ist.

Im vorliegenden Text wird mehrfach die Formulierung "und/oder" verwendet. Dabei werden jeweils zwei Aussagen oder Merkmale mit dieser Formulierung miteinander verknüpft. Dies ist jeweils eine nicht-ausschliessliche Disjunktion der beiden Aussagen bzw. Merkmale. Somit trifft jeweils mindestens eine der beiden Aussagen zu bzw. ist jeweils mindestens eines der beiden Merkmale vorhanden. Entsprechend können jeweils beide Aussagen zutreffen oder es kann auch nur eine der beiden Aussagen zutreffen, bzw. können jeweils beide Merkmale zusammen vorkommen oder es kann auch nur eines der beiden Merkmale vorkommen.

Im vorliegenden Text bedeutet die Formulierung "sonnenstrahlenabsorbierendes Glas" in Bezug auf Glas sowie Aussenfassadenglas, Innenfassadenglas und Zwischenfassadenglas bevorzugt, dass das betreffende sonnenstrahlenabsorbierende Glas eine Sonnenstrahlenabsorption aufweist, welche über einen Bereich von Wellenlängen von 800 nm bis 2300 nm der Sonnenstrahlung integriert um mindestens 20%, besonders bevorzugt um mindestens 50% grösser ist als eine über den gleichen Bereich integrierte Sonnenstrahlenabsorption eines Referenzglases. Falls die Sonnenstrahlenabsorption des sonnenstrahlenabsorbierenden Glases hauptsächlich durch einen erhöhten Eisenoxidgehalt erzielt wird, so ist das Referenzglas vorzugsweise ein zum sonnenstrahlenabsorbierenden Glas identisches Glas, ausser dass das Referenzglas einen Eisenoxidgehalt von 200ppm aufweist. Falls die Sonnenstrahlenabsorption des sonnenstrahlenabsorbierenden Glases hingegen hauptsächlich durch einen erhöhten Anteil einer anderen Komponente erzielt wird, so ist das Referenzglas vorzugsweise ein zum sonnenstrahlenabsorbierenden Glas identisches Glas, ausser dass das Referenzglas einen Gehalt dieser Komponente von 50ppm aufweist. Falls die Sonnenstrahlenabsorption des sonnenstrahlenabsorbierenden Glases hauptsächlich durch eine sonnenstrahlenabsorbierende Zwischenlage erzielt wird, so ist das Referenzglas vorzugsweise ein zum sonnenstrahlenabsorbierenden Glas identisches Glas, ausser dass das Referenzglas die sonnenstrahlenabsorbierende Zwischenlage nicht aufweist.

Im vorliegenden Text bedeutet die Formulierung "sonnenstrahlenreflektierendes Glas" in Bezug auf Aussenfassadenglas, Innenfassadenglas und Zwischenfassadenglas bevorzugt, dass das betreffende sonnenstrahlenreflektierende Glas eine Sonnenstrahlenreflexion aufweist, welche über einen Bereich von Wellenlängen von 800 nm bis 2300 nm der Sonnenstrahlung integriert um mindestens 20%, besonders bevorzugt um mindestens 50% grösser ist als eine über den gleichen Bereich integrierte Sonnenstrahlenreflexion eines Referenzglases. Falls die Sonnenstrahlenreflexion des sonnenstrahlenreflektierenden Glases hauptsächlich durch eine sonnenstrahlenreflektierende Zwischenlage erzielt wird, so ist das Referenzglas vorzugsweise ein zum sonnenstrahlenreflektierenden Glas identisches Glas, ausser dass das Referenzglas die sonnenstrahlenreflektierende Zwischenlage nicht aufweist.

Im vorliegenden Text bedeutet die Formulierung "sonnenstrahlenabsorbierende Beschichtung" bevorzugt, dass das betreffende Glas wie beispielsweise Aussenfassadenglas, Innenfassadenglas oder Zwischenfassadenglas, welches mit der sonnenstrahlenabsorbierenden Beschichtung beschichtet ist, eine Sonnenstrahlenabsorption aufweist, welche über einen Bereich von Wellenlängen von 800 nm bis 2300 nm der Sonnenstrahlung integriert um mindestens 20%, besonders bevorzugt um mindestens 50% grösser ist als eine über den gleichen Bereich integrierte Sonnenstrahlenabsorption eines Referenzglases, wobei das Referenzglas identisch zum betreffenden Glas ist, aber die sonnenstrahlenabsorbierende Beschichtung nicht aufweist, d.h. wobei das Referenzglas abgesehen von der fehlenden sonnenstrahlenabsorbierenden Beschichtung identisch zum betreffenden Glas ist.

Im vorliegenden Text bedeutet die Formulierung "sonnenstrahlenreflektierende Beschichtung" bevorzugt, dass das betreffende Glas wie beispielsweise Aussenfassadenglas, Innenfassadenglas oder Zwischenfassadenglas, welches mit der sonnenstrahlenreflektierende Beschichtung beschichtet ist, welche über einen Bereich von Wellenlängen von 800 nm bis 2300 nm der Sonnenstrahlung integriert um mindestens 20%, besonders bevorzugt um mindestens 50% grösser ist als eine über den gleichen Bereich integrierte Sonnenstrahlenreflexion eines Referenzglases ist, wobei das Referenzglas identisch zum betreffenden Glas ist, aber die sonnenstrahlenreflektierende Beschichtung nicht aufweist, d.h. wobei das Referenzglas abgesehen von der fehlenden sonnenstrahlenabsorbierenden Beschichtung identisch zum betreffenden Glas ist.

### Darstellung der Erfindung

Aufgabe der Erfindung ist es, eine dem eingangs genannten technischen Gebiet zugehörende Doppelfassadenanordnung zu schaffen, welche sowohl klima- und umweltfreundlich ist als auch lokal die Lebensqualität von Menschen, Tieren und Pflanzen in der direkten Umgebung der Doppelfassadenanordnung erhöht.

Die Lösung der Aufgabe ist durch die Merkmale des Anspruchs 1 definiert. Gemäss der Erfindung umfasst die Doppelfassadenanordnung eine Kohlendioxidabscheidevorrichtung zum Abscheiden zumindest eines Teils des Kohlendioxids aus der Luft des Luftstroms. Dabei ist unerheblich, auf welchem Prinzip die von der Kohlendioxidabscheidevorrichtung bewirkte Abscheidung von Kohlendioxid basiert. So kann die Abscheidung auf einem biologischen Prinzip wie zum Beispiel auf der kohlendioxidabscheidenden Wirkung von Enzymen, Algen, Bakterien oder auch Pflanzen wie zum Beispiel Moosen beruhen. Die Abscheidung kann aber auch auf einem chemischen Prinzip wie beispielsweise einer Katalysereaktion an einer aktivierten Oberfläche beruhen. Dabei kann sich die aktivierte Oberfläche beispielsweise in einem Filter befinden. Weiter kann die Abscheidung auf einem physikalischen Prinzip wie beispielsweise Absorption/Desorption beruhen. Weiter kann die Abscheidung auch auf einem elektrochemischen Prinzip wie einer Redoxreaktion in einer Elektrolysezelle beruhen.

Erfindungsgemäss ist die Doppelfassadenanordnung für einen Hochbau, insbesondere ein Gebäude, eine Brückenstütze, einen Brückenpfeiler oder eine Lärmschutzwand geeignet. Dabei ist unter einem Gebäude ein Bauwerk zu verstehen, welches wenigstens einen Raum einschliesst, betreten werden kann und dem Aufenthalt von Menschen, Tieren, oder der Lagerung von Sachen dient. Darunter fallen beispielsweise Industriebauten, Bürohochbauten, Konferenzzentren, Stadien, Wohn- und Hotelhochbauten sowie Terminals von Bahnhöfen und Flugplätzen. Genauso fallen beispielsweise auch Silos darunter, welche bekanntermassen grosse Speicher für Schüttgut sind und für Unterhaltsarbeiten betreten werden können. Demgegenüber dienen Brückenstützen und Brückenpfeiler in erster Linie als Stützen für eine Brücke. Brückenpfeiler sind wandartige Bauteile, welche sich im Wesentlichen über eine gesamte Breite des Überbaus der Brücke erstrecken, während Brückenstützen eine Breite aufweisen, die wesentlich geringer als die Breite des Überbaus der Brücke sind. Damit sind Brückenstützen und Brückenpfeiler zwar Hochbauten, aber nicht unbedingt auch Gebäude. Allerdings besteht durchaus auch die Möglichkeit, dass eine Brückenstütze bzw. ein Brückenpfeiler zugleich auch ein Gebäude ist, wenn sie wenigstens einen Raum einschliesst, betreten werden kann und dem Aufenthalt von Menschen, Tieren, oder der Lagerung von Sachen dient.

Gemäss der Erfindung umfasst die Doppelfassadenanordnung eine Doppelfassade. Dabei kann es sich um eine vertikal ausgerichtete Doppelfassade handeln. Es kann sich aber auch um eine geneigte bzw. schräg ausgerichtete Doppelfassade handeln, welche um bis zu 45°, bevorzugt bis zu 35° zu einer vertikale ausgerichteten Ebene geneigt ist. In diesem Fall kann die Doppelfassade überhängend sein oder anstelle von überhängend sein eine Dachfunktion übernehmen. Zudem besteht die Möglichkeit, dass die Doppelfassade gekrümmt oder geknickt ist. In diesem Fall besteht die Möglichkeit, dass die Doppelfassade nur überhängende Bereiche aufweist, nur dachfunktionübernehmende Bereiche aufweist, überhängende und vertikal ausgerichtete Bereiche aufweist, vertikal ausgerichtete Bereiche und dachfunktionübernehmende Bereiche aufweist, oder überhängende und dachfunktionübernehmende Bereiche sowie allenfalls auch vertikale Bereiche aufweist.

Für die erfindungsgemässe Lösung ist unerheblich, wie viel der Gesamtfassade des Hochbaus die Doppelfassade ausmacht. So kann die Doppelfassade nur eine Wand oder eine Seite des Hochbaus abdecken. Sie kann aber auch nur einen Teil einer Wand oder einer Seite des Hochbaus abdecken. Genauso kann die Doppelfassade aber auch mehrere Wände wie zum Beispiel alle Wände bzw. mehrere Seiten wie zum Beispiel alle Seiten des Hochbaus abdecken.

Erfindungsgemäss ist die Doppelfassade zur Erzeugung eines vertikal gerichteten Luftstroms mittels Kamineffekt geeignet. Dabei bedeutet die Formulierung vertikal gerichteter Luftstrom bevorzugt ein Luftstrom, welcher einen Nettofluss von Luft aufweist, wobei eine Flussrichtung des Nettoflusses eine vertikale Komponente aufweist und entsprechend nicht nur rein horizontal ausgerichtet ist. Bevorzugt ist die Flussrichtung des Nettoflusses im Wesentlichen vertikal ausgerichtet und ist daher bevorzugt in einem Winkel von höchstens 45°, besonders bevorzugt höchstens 35° zu einer vertikal ausgerichteten Linie geneigt. Dabei ist unerheblich, ob der Luftstrom laminar ist oder Verwirbelungen aufweist. Da erfindungsgemäss der Luftauslass oberhalb des Lufteinlasses angeordnet ist, ist ein durch den Lufteinlass in den Fassadenzwischenraum einströmender Luftstrom, von welchem zumindest ein Teil durch den Luftauslass wieder aus dem Fassadenzwischenraum austritt, ein vertikal ausgerichteter Luftstrom. Dabei ist der Nettofluss des Luftstroms nach oben gerichtet, womit auch der Luftstrom vertikal nach oben gerichtet ist.

Gemäss der Erfindung wird der Luftstrom mittels Kamineffekt erzeugt. Der Kamineffekt ist ein physikalischer Effekt, welcher vertikal gerichtete Luftströmungen verursacht. Der Kamineffekt beruht auf der natürlichen Konvektion. Er wird beispielsweise technisch genutzt, um Abgase von Feuerungen durch Schornsteine abzuführen. Der Kamineffekt beruht darauf, dass warme Luft eine geringere Dichte als kalte Luft hat, wodurch eine thermische Konvektion entsteht. Im vorliegenden Fall der Doppelfassade tritt aufgrund der thermischen Konvektion Luft durch den oberhalb des Lufteinlasses angeordneten Luftauslass aus. Dadurch entsteht im Fassadenzwischenraum ein Unterdruck und der Außendruck drückt Luft durch den Lufteinlass in den Fassadenzwischenraum, die ebenfalls erwärmt wird. Das führt zu einer Selbsterhaltung des Effekts, womit der vertikal gerichtete Luftstrom erzeugt wird und erhalten bleibt.

Erfindungsgemäss dient der Lufteinlass zum Einlassen des Luftstroms mit Luft aus der Umgebung des Hochbaus und damit mit Umgebungsluft in den Fassadenzwischenraum. Dabei kann der Lufteinlass Umgebungsluft direkt und unmittelbar in den Fassadenzwischenraum einlassen. In diesem Fall ist der Lufteinlass direkt an der Doppelfassade angeordnet und verbindet somit die Umgebung des Hochbaus mit dem Fassadenzwischenraum. In diesem Fall kann der Lufteinlass beispielsweise in der Aussenfassade angeordnet sein und damit die Umgebung des Hochbaus direkt mit dem Fassadenzwischenraum verbinden. In einer Variante dazu kann der Lufteinlass auch mit einer gegebenenfalls zur Doppelfassadenanordnung gehörenden Luftleitung verbunden sein, welche Umgebungsluft via den Lufteinlass in den Fassadenzwischenraum führt. In diesem Fall kann beispielsweise die Luftleitung einen Einlass direkt im Strassenbelag oder im Boden neben einer neben dem Hochbau vorbeiführenden Strasse aufweisen und unterirdisch zum Lufteinlass und damit direkt zum Fassadenzwischenraum führen oder erst durch ein Inneres des Hochbaus zum Lufteinlass und damit indirekt zum Fassadenzwischenraum führen. In dieser letzten Variante ist der Lufteinlass bevorzugt in der Innenfassade angeordnet.

Gemäss der Erfindung dient der Luftauslass zum Auslassen zumindest eines Teils des Luftstroms aus dem Fassadenzwischenraum. Bevorzugt dient der Luftauslass dabei zum Auslassen von wenigstens 90%, besonders bevorzugt wenigstens 95% des Luftstroms aus dem Fassadenzwischenraum. Dabei ist unerheblich, ob der Luftauslass den Fassadenzwischenraum direkt oder indirekt mit der Umgebung des Hochbaus verbindet, damit Luft aus dem Fassadenzwischenraum in die Umgebung des Hochbaus gelangen kann. So kann der Luftauslass beispielsweise in der Aussenfassade oder im Dach des Hochbaus angeordnet sein und den Fassadenzwischenraum direkt mit der Umgebung des Hochbaus verbinden. Genauso kann der Luftauslass aber auch in ein Inneres des Hochbaus führen, von wo der Luftstrom anschliessend in die Umgebung des Hochbaus weitergeführt wird.

Die erfindungsgemässe Doppelfassadenanordnung kann zusammen mit einem Hochbau, insbesondere einem Gebäude, einer Brückenstütze oder einem Brückenpfeiler konstruiert und erstellt werden. Die erfindungsgemässe Doppelfassadenanordnung kann aber auch nachträglich für einen bereits bestehenden Hochbau insbesondere einem Gebäude, einer Brückenstütze oder einem Brückenpfeiler konstruiert werden und an diesem bereits bestehenden Hochbau durch erstellen der Doppelfassadenanordnung ergänzt werden.

Da die Doppelfassadenanordnung die Kohlendioxidabscheidevorrichtung zum Abscheiden zumindest eines Teils des Kohlendioxids aus der Luft des Luftstroms umfasst, ist die Doppelfassadenanordnung klima- und umweltfreundlich und erhöht lokal die Lebensqualität von Menschen, Tieren und Pflanzen in der direkten Umgebung der Doppelfassadenanordnung.

Vorteilhafterweise ist die Kohlendioxidabscheidevorrichtung zugleich auch eine Stickoxidabscheidevorrichtung zum Abscheiden zumindest eines Teils der Stickoxide aus der Luft des Luftstroms. Dies hat den Vorteil, dass mit der Kohlendioxidabscheidevorrichtung sowohl Kohlendioxid als auch Stickoxide aus der Luft des Luftstroms abgeschieden werden können. Dabei kann die Abscheidung der Stickoxide auf einem biologischen Prinzip wie zum Beispiel auf der kohlendioxidabscheidenden Wirkung von Enzymen, Algen, Bakterien oder auch Pflanzen wie zum Beispiel Moosen beruhen. Die Abscheidung kann aber auch auf einem chemischen Prinzip wie beispielsweise einer Katalysereaktion an einer aktivierten Oberfläche beruhen. Dabei kann sich die aktivierte Oberfläche beispielsweise in einem Filter befinden. Weiter kann die Abscheidung auf einem physikalischen Prinzip wie beispielsweise Absorption/Desorption beruhen. Weiter kann die Abscheidung auch auf einem elektrochemischen Prinzip wie einer Redoxreaktion in einer Elektrolysezelle beruhen. In einer bevorzugten Variante beruhen die Abscheidung des Kohlendioxids und die Abscheidung der Stickoxide auf dem gleichen biologischen Prinzip, chemischen Prinzip oder physikalischen Prinzip. In einer weiteren Variante beruhen die Abscheidung des Kohlendioxids und die Abscheidung der Stickoxide auf unterschiedlichen Prinzipen.

Alternativ dazu besteht aber auch die Möglichkeit, dass die Kohlendioxidabscheidevorrichtung nicht zugleich eine Stickoxidabscheidevorrichtung ist.

Vorteilhafterweise ist die Kohlendioxidabscheidevorrichtung zugleich auch eine Schwefeloxidabscheidevorrichtung zum Abscheiden zumindest eines Teils der Schwefeloxide aus der Luft des Luftstroms. Dabei besteht die Möglichkeit, dass die Kohlendioxidabscheidevorrichtung zugleich eine Stickoxidabscheidevorrichtung ist, oder dass die Kohlendioxidabscheidevorrichtung nicht zugleich eine Stickoxidabscheidevorrichtung ist. Unabhängig davon, ob die Kohlendioxidabscheidevorrichtung zugleich eine Stickoxidabscheidevorrichtung ist oder nicht, wird dadurch, dass die Kohlendioxidabscheidevorrichtung zugleich eine Schwefeloxidabscheidevorrichtung ist, der Vorteil erreicht, dass mit der Kohlendioxidabscheidevorrichtung sowohl Kohlendioxid als auch Schwefeloxide sowie gegebenenfalls Stickoxide aus der Luft des Luftstroms abgeschieden werden können. Dabei kann die Abscheidung der Schwefeloxide auf einem biologischen Prinzip wie zum Beispiel auf der kohlendioxidabscheidenden Wirkung von Enzymen, Algen, Bakterien oder auch Pflanzen wie zum Beispiel Moosen beruhen. Die Abscheidung kann aber auch auf einem chemischen Prinzip wie beispielsweise einer Katalysereaktion an einer aktivierten Oberfläche beruhen. Dabei kann sich die aktivierte Oberfläche beispielsweise in einem Filter befinden. Weiter kann die Abscheidung auf einem physikalischen Prinzip wie beispielsweise Absorption/Desorption beruhen. Weiter kann die Abscheidung auch auf einem elektrochemischen Prinzip wie einer Redoxreaktion in einer Elektrolysezelle beruhen. In einer bevorzugten Variante beruhen die Abscheidung des Kohlendioxids und die Abscheidung der Schwefeloxide sowie gegebenenfalls die Abscheidung der Stickoxide auf dem gleichen biologischen Prinzip, chemischen Prinzip oder physikalischen Prinzip. In einer weiteren Variante beruhen die Abscheidung des Kohlendioxids bzw. der Stickoxide und die Abscheidung der Schwefeloxide auf unterschiedlichen Prinzipen.

Alternativ dazu besteht aber auch die Möglichkeit, dass die Kohlendioxidabscheidevorrichtung nicht zugleich eine Schwefeloxidabscheidevorrichtung ist. Dabei kann die Kohlendioxidabscheidevorrichtung eine reine Kohlendioxidabscheidevorrichtung oder aber eine Kohlendioxidabscheidevorrichtung sowie eine Stickoxidabscheidevorrichtung sein. Sofern in den nachfolgend genannten Varianten und Ausführungsformen nichts anderes explizit erwähnt ist, ist in einer ersten Variation die Kohlendioxidabscheidevorrichtung zugleich eine Stickoxidabscheidevorrichtung und eine Schwefeloxidabscheidevorrichtung. In einer zweiten Variation hingegen ist die Kohlendioxidabscheidevorrichtung zugleich eine Stickoxidabscheidevorrichtung, aber nicht eine Schwefeloxidabscheidevorrichtung. In einer dritten Variante ist die Kohlendioxidabscheidevorrichtung zugleich eine Schwefeloxidabscheidevorrichtung, aber nicht eine Stickoxidabscheidevorrichtung. In einer vierten Variante hingegen ist die Kohlendioxidabscheidevorrichtung nicht zugleich eine Stickoxidabscheidevorrichtung und auch nicht zugleich eine Schwefeloxidabcheidevorrichtung.

In einer bevorzugten Variante weist die Kohlendioxidabscheidevorrichtung einen Innenraum und einen Luftstromlufteinlass zum Einlassen von zumindest eines Teils des Luftstroms, besonders bevorzugt des gesamten Luftstroms in den Innenraum der Kohlendioxidabscheidevorrichtung auf. Dabei ist unerheblich, ob die Kohlendioxidabscheidevorrichtung im Fassadenzwischenraum, gerade an den Fassadenzwischenraum angrenzend, in einem Inneren des Hochbaus oder in einer Umgebung des Hochbaus angeordnet ist. Unabhängig davon hat der Innenraum der Kohlendioxidabscheidevorrichtung den Vorteil, dass die für die Abscheidung von Kohlendioxid relevanten Elemente und Einheiten der Kohlendioxidabscheidevorrichtung optimal vor äusseren, beschädigenden Einwirkungen geschützt werden können.

In einer bevorzugten Variante davon ist der Luftauslass der Doppelfassade mit dem Luftstromlufteinlass verbunden oder der Luftauslass bildet zugleich den Luftstromlufteinlass. Dadurch wird der Vorteil erreicht, dass möglichst viel Luft, insbesondere bevorzugt der gesamte Luftstrom zur Kohlendioxidabscheidevorrichtung geführt werden kann, womit die Gesamtmenge des im Betrieb der Doppelfassadenanordnung abgeschiedenen Kohlendioxids erhöht werden kann. Dabei besteht die Möglichkeit, dass die Kohlendioxidabscheidevorrichtung auch einen Luftstromluftauslass zum Auslassen der in den Innenraum der Kohlendioxidabscheidevorrichtung gelangten Luft aufweist.

In einer Variante dazu besteht aber auch die Möglichkeit, dass der Luftstromlufteinlass nicht mit dem Luftauslass verbunden ist. So kann die Kohlendioxidabscheidevorrichtung beispielsweise nebst dem Luftstromlufteinlass auch einen Luftstromluftauslass zum Auslassen der in den Innenraum der Kohlendioxidabscheidevorrichtung gelangten Luft aufweisen, wobei sowohl der Luftstromlufteinlass als auch der Luftstromluftauslass zwischen dem Lufteinlass und dem Luftauslass mit dem Fassadenzwischenraum verbunden sind, sodass zumindest ein Teil des Luftstroms, bevorzugt der gesamte Luftstrom, beim Durchfliessen des Fassadenzwischenraums vom Lufteinlass zum Luftauslass zwischenzeitlich zur Kohlendioxidabscheidung in den Innenraum der Kohlendioxidabscheidevorrichtung geleitet wird. Dabei ist unerheblich, ob der Luftstrom aus dem Fassadenzwischenraum in den Innenraum der Kohlendioxidabscheidevorrichtung geleitet wird, oder ob der Luftstrom im Fassadenzwischenraum verbleibt, weil der Innenraum der Kohlendioxidabscheidevorrichtung im Fassadenzwischenraum angeordnet ist.

Alternativ zu diesen Varianten besteht auch die Möglichkeit, dass die Kohlendioxidabscheidevorrichtung keinen solchen Innenraum und keinen solchen Luftstromlufteinlass aufweist.

Unabhängig davon, ob die Kohlendioxidabscheidevorrichtung einen Innenraum und einen Luftstromlufteinlass zum Einlassen von zumindest eines Teils des Luftstroms in den Innenraum der Kohlendioxidabscheidevorrichtung aufweist oder nicht, weist die Kohlendioxidabscheidevorrichtung bevorzugt eine Kontaktfläche zur Kontaktierung von Luft des Luftstroms zur Abscheidung von Kohlendioxid aus der Luft des Luftstrom auf. Wenn die Kohlendioxidabscheidevorrichtung zugleich eine Stickoxidabscheidevorrichtung ist, so weist die Kohlendioxidabscheidevorrichtung bevorzugt eine Kontaktfläche zur Kontaktierung von Luft des Luftstroms zur Abscheidung von Stickoxiden aus der Luft des Luftstroms auf. Bevorzugt handelt es sich bei der Kontaktfläche zur Abscheidung von Stickoxiden um die gleiche Kontaktfläche wie die Kontaktfläche zur Abscheidung von Kohlendioxid. Allerdings können die Kontaktflächen auch unterschiedliche Kontaktflächen sein. In diesem Fall ist die Kontaktfläche zur Abscheidung von Stickoxiden eine Stickoxidabscheidekontaktfläche, während die Kontaktfläche zur Abscheidung von Kohlendioxid eine Kohlendioxidabscheidekontaktfläche ist. Wenn die Kohlendioxidabscheidevorrichtung zugleich eine Schwefeloxidabscheidevorrichtung ist, so weist die Kohlendioxidabscheidevorrichtung bevorzugt eine Kontaktfläche zur Kontaktierung von Luft des Luftstroms zur Abscheidung von Schwefeloxiden aus der Luft des Luftstroms auf. Bevorzugt handelt es sich bei der Kontaktfläche zur Abscheidung von Schwefeloxiden um die gleiche Kontaktfläche wie die Kontaktfläche zur Abscheidung von Kohlendioxid. Allerdings können die Kontaktflächen auch unterschiedliche Kontaktflächen sein. In diesem Fall ist die Kontaktfläche zur Abscheidung von Schwefeloxiden eine Schwefeloxidabscheidekontaktfläche, während die Kontaktfläche zur Abscheidung von Kohlendioxid eine Kohlendioxidabscheidekontaktfläche ist. Dabei besteht die Möglichkeit, dass die Kontaktfläche zum Abscheiden von Schwefeloxiden zugleich eine Kontaktfläche zum Abscheiden von Stickoxiden. Genauso kann die Kontaktfläche zum Abscheiden von Schwefeloxiden aber auch nicht zugleich eine Kontaktfläche zum Abscheiden von Stickoxiden sein. Falls die Kohlendioxidabscheidevorrichtung dabei einen Innenraum und einen Luftstromlufteinlass zum Einlassen von zumindest eines Teils des Luftstroms in den Innenraum der Kohlendioxidabscheidevorrichtung aufweist, so befindet sich die Kontaktfläche bzw. befinden sich die Kontaktflächen bevorzugt im Innenraum der Kohlendioxidabscheidevorrichtung. Alternativ dazu besteht aber auch die Möglichkeit, dass sich die Kontaktfläche bzw. die Kontaktflächen ausserhalb des Innenraums der Kohlendioxidabscheidevorrichtung befindet bzw. befinden. Nachfolgend wird jeweils auf "die Kontaktfläche" Bezug genommen. Wenn die Kohlendioxidabscheidevorrichtung zugleich eine Stickoxidabscheidevorrichtung ist und zwei Kontaktflächen bzw. eine Kohlendioxidabscheidekontaktfläche und eine Stickoxidabscheidekontaktfläche aufweist, so bezieht sich "die Kontaktfläche" jeweils sowohl auf die Kohlendioxidabscheidekontaktfläche als auch auf die Stickoxidabscheidekontaktfläche. Ansonsten bezieht sich "die Kontaktfläche" jeweils auf die Kontaktfläche, welche eine Kontaktfläche zur Kontaktierung von Luft des Luftstroms zur Abscheidung von Kohlendioxid aus der Luft des Luftstrom sowie gegebenenfalls eine Kontaktfläche zur Kontaktierung von Luft des Luftstroms zur Abscheidung von Stickoxiden aus der Luft des Luftstroms ist. Wenn die Kohlendioxidabscheidevorrichtung hingegen zugleich eine Schwefeloxidabscheidevorrichtung ist und zwei Kontaktflächen bzw. eine Kohlendioxidabscheidekontaktfläche und eine Schwefeloxidabscheidekontaktfläche aufweist, so bezieht sich "die Kontaktfläche" jeweils sowohl auf die Kohlendioxidabscheidekontaktfläche als auch auf die Schwefeloxidabscheidekontaktfläche. Ansonsten bezieht sich "die Kontaktfläche" jeweils auf die Kontaktfläche, welche eine Kontaktfläche zur Kontaktierung von Luft des Luftstroms zur Abscheidung von Kohlendioxid aus der Luft des Luftstrom sowie gegebenenfalls eine Kontaktfläche zur Kontaktierung von Luft des Luftstroms zur Abscheidung von Schwefeloxiden aus der Luft des Luftstrom ist. Wenn die Kohlendioxidabscheidevorrichtung hingegen zugleich eine Stickoxidabscheidevorrichtung und auch eine Schwefeloxidabscheidevorrichtung ist und drei Kontaktflächen bzw. eine Kohlendioxidabscheidekontaktfläche, eine Stickoxidabscheidekontaktfläche und eine Stickoxidabscheidekontaktfläche oder aber zwei Kontaktflächen bzw. eine Kohlendioxidabscheidekontaktfläche und eine Kontaktfläche zum Abscheiden von Stickoxiden und Schwefeloxiden, eine Stickoxidabscheidekontaktfläche und eine Kontaktfläche zum Abscheiden von Kohlendioxid und Schwefeloxiden, oder eine Schwefeloxidabscheidekontaktfläche und eine Kontaktfläche zum Abscheiden von Kohlendioxid und Stickoxiden aufweist, so bezieht sich "die Kontaktfläche" jeweils auf die jeweiligen Kontaktflächen. Ansonsten bezieht sich "die Kontaktfläche" jeweils auf die Kontaktfläche, welche eine Kontaktfläche zur Kontaktierung von Luft des Luftstroms zur Abscheidung von Kohlendioxid aus der Luft des Luftstrom sowie gegebenenfalls eine Kontaktfläche zur Kontaktierung von Luft des Luftstroms zur Abscheidung von Stickoxiden aus der Luft des Luftstroms und gegebenenfalls eine Kontaktfläche zur Kontaktierung von Luft des Luftstroms zur Abscheidung von Schwefeloxiden aus der Luft des Luftstroms ist.

In einer ersten bevorzugten Variante weist die Kontaktfläche selber eine kohlendioxidabscheidende bzw. gegebenenfalls stickoxidabscheidende bzw. schwefeloxidabscheidende Wirkung auf. Beispielsweise kann die Kontaktfläche hierzu eine reaktive Metalloberfläche sein. Wenn die Kontaktfläche selber eine kohlendioxidabscheidende bzw. gegebenenfalls stickoxidabscheidende bzw. schwefeloxidabscheidende Wirkung aufweist, so kann die Kontaktfläche beispielsweise auf einer Oberfläche angeordnet sein, an welcher der Luftstrom oder zumindest ein Teil des Luftstroms vorbeifliesst. Genauso kann die Kontaktfläche aber auch durch eine Oberfläche eines Filters gebildet sein, durch welchen der Luftstrom oder zumindest ein Teil des Luftstroms geführt wird. Dabei bildet die gesamte aktive Filteroberfläche, welche mit dem Luftstrom bzw. zumindest einen Teil des Luftstroms in Berührung kommt, die Oberfläche des Filters und damit die Kontaktfläche. Wenn der Filter eine poröse Struktur aufweist, durch welche der Luftstrom bzw. zumindest ein Teil des Luftstroms geführt wird, so bilden entsprechend auch Innenseiten der Poren Bestandteile der Kontaktfläche.

In einer zweiten bevorzugten Variante umfasst die Kohlendioxidabscheidevorrichtung eine Kontaktfläche zur Kontaktierung von Luft des Luftstroms zur Abscheidung von Kohlendioxid aus der Luft des Luftstroms, wobei die Kontaktfläche eine Membran ist, mittels welcher Luft des Luftstroms von einer Flüssigkeit, insbesondere einer wasserhaltigen Flüssigkeit, trennbar ist, wobei die Membran für Kohlendioxid permeabel ist, wodurch Kohlendioxid aus der Luft des Luftstroms in die Flüssigkeit zur Abscheidung des Kohlendioxids gelangen kann. Dabei kann die Flüssigkeit eine gelartige, hochviskose Flüssigkeit oder eine niederviskose Flüssigkeit wie zum Beispiel Wasser sein. Unabhängig von der Viskosität der Flüssigkeit ist die Membran bevorzugt durch ein kompaktes, gasdurchlässiges Material gebildet. Dieses Material kann beispielsweise in der Form einer dünnen Folie vorliegen. Wenn die Kohlendioxidabscheidevorrichtung zugleich eine Stickoxidabscheidevorrichtung ist, so ist die Membran bevorzug für Stickoxide permeable, wodurch Stickoxide aus der Luft des Luftstroms in die Flüssigkeit zur Abscheidung der Stickoxide gelangen kann. Wenn die Kohlendioxidabscheidevorrichtung zugleich eine Schwefeloxidabscheidevorrichtung ist, so ist die Membran bevorzug für Schwefeloxide permeable, wodurch Schwefeloxide aus der Luft des Luftstroms in die Flüssigkeit zur Abscheidung der Schwefeloxide gelangen kann. Das bedeutet, dass die Membran zwar die Flüssigkeit vom Luftstrom trennt, aber für Kohlendioxid und gegebenenfalls Stickoxide bzw. Schwefeloxide durchlässig ist, sodass Kohlendioxid bzw. Stickoxide bzw. Schwefeloxide aus der Luft des Luftstroms in die Flüssigkeit gelangen können. In diesem Fall umfasst die Kohlendioxidabscheidevorrichtung vorzugsweise ein Flüssigkeitsreservoir mit der Flüssigkeit, insbesondere der wasserhaltigen Flüssigkeit. Dabei erfolgt eine Abscheidung von Kohlendioxid bzw. von Stickoxiden bzw. von Schwefeloxiden aus der Luft des Luftstroms, indem das Kohlendioxid bzw. die Stickoxide bzw. die Schwefeloxide in die Flüssigkeit gelangen. Allerdings erfolgt bevorzugt zudem auch eine Abscheidung des Kohlendioxids bzw. der Stickoxide bzw. der Schwefeloxide aus der Flüssigkeit. Diese Abscheidung kann nach wie bereits erwähnt nach einem biologischen, chemischen oder physikalischen Prinzip beruhen. Beispielsweise kann die Kohlendioxidabscheidevorrichtung eine in der Flüssigkeit angeordnete nanoporöse Metallfolie zur Anlagerung von Kohlendioxid bzw. Stickoxid bzw. Schwefeloxid umfassen. Da je nach Membran Wasserdampf von der wasserhaltigen Flüssigkeit durch die Membran in den Luftstrom austreten kann, umfasst die Kohlendioxidabscheidevorrichtung zudem gegebenenfalls bevorzugt einen Nachfülleinlass zum Nachfüllen der Flüssigkeit im Flüssigkeitsreservoir. In einer bevorzugten Variante ist die Flüssigkeit ein Elektrolyt, insbesondere ein wässriger Elektrolyt.

Bevorzugt ist die Membran mit einem Metall, besonders bevorzugt mit Gold, Silber, Platin, Palladium, Kupfer, Mangan, Tantal, Vanadium oder einer Kombination davon beschichtet. Von diesen Varianten weist beispielsweise eine Beschichtung mit Platin den besonderen Vorteil auf, dass an der Platinbeschichtung nasziender Wasserstoff erzeugt wird, mittels welchem das Kohlendioxid reduziert werden kann. Beispielsweise können dadurch aus dem Kohlendioxid und dem Wasserstoff Wasser und Ethanol erzeugt werden. Somit kann durch eine Beschichtung mit Metall bereits an der Membran eine chemische Reaktion zur Abscheidung von Kohlendioxid erzielt werden, womit die Effizienz der Kohlendioxidabscheidung erhöht wird.

Bevorzugt ist die Beschichtung auf einer der Luft des Luftstroms abgewandten Seite der Membran und damit auf einer der Flüssigkeit zugeordneten Seite der Membran angeordnet. Dies hat den Vorteil, dass chemische Reaktionen der Flüssigkeit mit der Beschichtung ermöglicht werden.

In einer bevorzugten Variante ist die Membran mit einem Metalloxid, insbesondere Kupferoxid, beschichtet. Die Flüssigkeit ist dabei bevorzugt Wasser oder enthält Wasser. In einer Variante dazu kann die Flüssigkeit aber auch kein Wasser enthalten. Wenn die Flüssigkeit Wasser enthält, so wird der Vorteil erreicht, dass sich einerseits Kohlendioxid im Wasser löst und Kohlensäure bildet und dass andererseits in der Beschichtung der Membran mit Metalloxid, insbesondere Kupferoxid, Metallhydroxid bzw. Kupferhydroxid entsteht, was eine schwache Base ist. Diese schwache Base bildet in Reaktion mit der Kohlensäure ein Metallkarbonat bzw. Kupferkarbonat, wodurch Kohlendioxid gebunden wird. Sofern die Kohlendioxidabscheidevorrichtung zugleich eine Stickoxidabscheidevorrichtung ist, wird zudem der Vorteil erreicht, dass sich die Stickoxide im Wasser lösen und eine Säure bilden. Sofern die Kohlendioxidabscheidevorrichtung zugleich eine Schwefeloxidabscheidevorrichtung ist, wird zudem der Vorteil erreicht, dass sich die Schwefeloxide im Wasser lösen und eine Säure bilden. Diese Säuren reagieren ebenfalls mit dem Metallhydroxid bzw. Kupferhydroxid zu Nitraten. Vorteilhafterweise umfasst dabei die Beschichtung der Membran dabei Kalium oder Calcium. Dies hat den Vorteil, dass Nitrate, Carbonate bzw. Sulfate entstehen, welche als Pflanzenwachstumsförderer eingesetzt werden können.

Bevorzugt ist die Beschichtung auf einer der Luft des Luftstroms abgewandten Seite der Membran und damit auf einer der Flüssigkeit zugeordneten Seite der Membran angeordnet. Dies hat den Vorteil, dass chemische Reaktionen der Flüssigkeit mit der Beschichtung ermöglicht werden.

Bevorzugt ist dabei die Beschichtung der Membran als Kathode einer elektrochemischen Zelle ausgebildet, wobei die Flüssigkeit ein wässriger Elektrolyt ist. Dies hat den Vorteil, dass die Reaktion zu einem Metallkarbonat bzw. Kupferkarbonat reversibel ist.

In einer bevorzugten Variante ist die Membran mit einer Keramik beschichtet. Die Keramik kann beispielsweise aus einem Gemisch von Metalloxiden bestehen sein. Bevorzugt ist dabei die Keramik eine poröse Keramik. Eine poröse Keramik hat den Vorteil, dass eine Oberfläche der Keramik im Vergleich zu einer nicht porösen Keramik vergrössert wird. Entsprechend weist eine poröse Keramik eine vergleichsweise grosse Oberfläche auf, auf welcher chemische Reaktionen ablaufen können.

In einer Variante dazu besteht aber auch die Möglichkeit, dass die Membran nicht mit Metall, nicht mit einem Metalloxid und nicht mit einer Keramik beschichtet ist und somit metallbeschichtungsfrei und keramikbeschichtungsfrei ist.

Bevorzugt umfasst die Membran einen Kunststoff, insbesondere einen oder mehrere Fluorpolymere. In einer bevorzugten Variante davon enthält die Membran zudem ein oder mehrere Metalle oder ein oder mehrere Metalloxide.

In einer besonders bevorzugten Variante umfasst die Membran Polytetrafluorethylen (PTFE). Dies hat den Vorteil, dass die Membran sehr reaktionsträge ist und entsprechend langlebig ist. Als Variante dazu besteht aber auch die Möglichkeit, dass die Membran kein Polytetrafluorethylen (PTFE) umfasst. So kann die Membran beispielsweise Polysulfone, Polyethersulfon (PES) Cellulose, Celluloseester (Celluloseacetat, Cellulosenitrat), Regenerierte Cellulose (RC), Silikone, Polyamide, Polyamidimid, Polyamid Harnstoff, Polycarbonate, Keramik, Edelstahl, Silber, Silizium, Zeolithe (Alumosilicate), Polyacrylnitril (PAN), Polyethylen (PE), Polypropylen (PP), Polyvinylidenfluorid (PVDF), Polyvinylchlorid (PVC), Polypiperazinamid oder Kombinationen davon mit oder ohne Polytetrafluorethylen (PTFE) umfassen.

Alternativ zu diesen Varianten besteht aber auch die Möglichkeit, dass die Kohlendioxidabscheidevorrichtung keine Membran umfasst.

Bevorzugt enthält die Flüssigkeit ein Propylenglykol. Dies hat den Vorteil, dass aufgrund der wasserlöslichen und hygroskopischen Eigenschaften von Propylenglykolen ein Wasserhaushalt in der Kohlendioxidabscheidevorrichtung einfacher regulierbar ist. Als Variante dazu besteht aber auch die Möglichkeit, dass die Flüssigkeit kein Propylenglykol enthält.

Alternativ zu diesen Varianten besteht auch die Möglichkeit, dass die Kohlendioxidabscheidevorrichtung keine Flüssigkeit enthält.

Vorzugsweise umfasst die Doppelfassadenanordnung einen Partikelfilter zum Herausfiltern von Aerosolpartikeln aus dem Luftstrom. Dies hat den Vorteil, dass Russ und Dreck sowie Feinpartikel, welche beispielsweise durch Strassenverkehr erzeugt werden, aus der Luft gefiltert werden können.

In einer bevorzugten Variante davon ist der Partikelfilter zum Herausfiltern von Aerosolpartikeln aus dem Luftstrom in Luftstromrichtung gesehen vor der Kohlendioxidabscheidevorrichtung angeordnet. Dies hat den Vorteil, dass der Unterhaltsaufwand der Kohlendioxidabscheidevorrichtung reduziert wird. Alternativ dazu besteht aber auch die Möglichkeit, dass der Partikelfilter erst nach der Kohlendioxidabscheidevorrichtung angeordnet ist.

In einer besonders bevorzugten Variante ist der Partikelfilter in Luftstromrichtung gesehen vor dem Lufteinlass oder im Lufteinlass angeordnet. In einer bevorzugten Variante davon ist der Partikelfilter hingegen zwar in Luftstromrichtung nach dem Lufteinlass, aber unterhalb einer sich zwischen dem Lufteinlass und dem Luftauslass befindenden Mitte der Doppelfassade im Fassadenzwischenraum angeordnet. In beiden Varianten wird der Vorteil erreicht, dass weniger Russ, Dreck und Feinpartikel in den Fassadenzwischenraum gelangen, wodurch der Wartungsaufwand der Doppelfassade reduziert wird.

Alternativ zu diesen Varianten besteht aber auch die Möglichkeit, dass die Doppelfassadenanordnung keinen solchen Partikelfilter zum Herausfiltern von Aerosolpartikeln aus dem Luftstrom aufweist.

Um mittels Kamineffekt den vertikal gerichteten Luftstrom zu erzeugen, ist bevorzugt entweder eine Temperatur T₁ des Luftstroms in einem Bereich des Lufteinlasses und damit in einem unteren Bereich des Fassadenzwischenraums grösser als eine Temperatur T₂ des Luftstroms in einem Bereich des Luftauslasses und damit in einem oberen Bereich des Fassadenzwischenraums oder die Temperatur T₁ des Luftstroms im Bereich des Lufteinlasses ist gleich wie die Temperatur T₂ des Luftstroms im Bereich des Luftauslasses, wobei die Temperatur T₁ des Luftstroms im Bereich des Lufteinlasses und die Temperatur T₂ des Luftstroms im Bereich des Luftauslasses grösser als eine Temperatur T_{U} der Luft in der Umgebung des Hochbaus und damit der Umgebungsluft ist. Im ersten Fall wird der vertikal gerichtete Luftstrom zusätzlich verstärkt, wenn zudem die Temperatur T₁ des Luftstroms im Bereich des Lufteinlasses grösser als die Temperatur T_{U} der Luft in der Umgebung des Hochbaus und damit der Umgebungsluft ist. Weiter wird im ersten Fall der vertikal gerichtete Luftstrom verstärkt, wenn die Temperatur T₂ des Luftstroms im Bereich des Luftauslasses grösser als die Temperatur T_{U} der Luft aus der Umgebung des Hochbaus und damit der Umgebungsluft ist. Diese Temperaturrelationen haben den Vorteil, dass der Kamineffekt optimal erzeugt und erhalten werden kann, sodass der vertikal gerichtete Luftstrom erzeugt wird und erhalten bleibt. Um die beschriebenen Temperaturrelationen zu erreichen, sind nachfolgend unterschiedliche bevorzugte Merkmale der Doppelfassadenanordnung beschrieben.Anspruch 3: (Aussenfassade ist eine Glasfassade) Vorteilhafterweise ist die Aussenfassade eine Glasfassade und umfasst somit Aussenfassadenglas. Dies bedeutet, dass bevorzugt wenigstens 70%, besonders bevorzugt wenigstens 80%, am bevorzugtesten wenigstens 90% einer Oberfläche der Aussenfassade durch Aussenfassadenglas gebildet ist. Indem die Aussenfassade eine Glasfassade ist wird der Vorteil erreicht, dass der Kamineffekt zur Erzeugung des vertikal gerichteten Luftstroms auf einfache Art und Weise sehr effizient durch Sonneneinstrahlung erzielt und erhalten werden kann.

Alternativ dazu besteht aber auch die Möglichkeit, dass die Aussenfassade keine Glasfassade ist. So kann beispielsweise weniger als 70% der Oberfläche der Aussenfassade durch Aussenfassadenglas gebildet sein, oder die Aussenfassade kann auch gänzlich ohne Aussenfassadenglas auskommen. Letzteres kann beispielsweise der Fall sein, wenn der Hochbau ein Silo, eine Brückenstütze oder ein Brückenpfeiler ist.

Falls die Aussenfassade eine Glasfassade ist und somit Aussenfassadenglas umfasst, so ist unterhalb einer sich zwischen dem Lufteinlass und dem Luftauslass befindenden Mitte der Doppelfassade vorzugsweise wenigstens 50% des Aussenfassadenglases Weissglas. Dabei ist diese im vorliegenden Text mehrfach erwähnte Mitte der Doppelfassade nicht unbedingt die geometrische Mitte der Doppelfassade. Vielmehr befindet sich die im vorliegenden Text erwähnte Mitte der Doppelfassade in vertikaler Richtung gesehen auf halber Distanz zwischen dem Lufteinlass und dem Luftauslass. Somit hängt die Position der hier gemeinten Mitte der Doppelfassade von der Position des Lufteinlasses und des Luftauslasses ab und kann sich somit oberhalb oder unterhalb geometrische Mitte der Doppelfassade oder auch gerade auf der geometrischen Mitte der Doppelfassade befinden.

Das hier erwähnte Weissglas ist ein Glas, in welchem eisenoxidarme Rohstoffe in die Materialmatrix eingeschmolzen sind, um die Lichttransparenz des Glases und die Durchlässigkeit des Glases für Wärmestrahlung zu steigern. Dabei weist das Weissglas bevorzugt einen Eisenoxidanteil von weniger als 200 ppm auf. Bevorzugt ist dieses Weissglas ein Floatglas. Somit ist das Weissglas bevorzugt in einem Floatprozess oder auch Floatglasverfahren, hergestellt. Dies ist ein endlos-kontinuierlicher Prozess, bei welchem flüssige Glasschmelze fortlaufend von einer Seite auf ein Bad aus flüssigem Zinn geleitet wird, auf welchem das Glas schwimmt. In einer Variante dazu kann das Weissglas aber auch mit einem anderen Verfahren hergestellt sein.

Wenn unterhalb der sich zwischen dem Lufteinlass und dem Luftauslass befindenden Mitte der Doppelfassade das Aussenfassadenglas wenigstens 50% Weissglas aufweist, so wird der Effekt erreicht, dass unterhalb der Mitte der Doppelfassade mehr Sonnenstrahlung in den Fassadenzwischenraum und zur Innenfassade gelangt. Dadurch wird Luft, welche sich im Fassadenzwischenraum unterhalb der Mitte der Doppelfassade befindet, bei Sonneneinstrahlung stärker erwärmt, womit die Temperatur T₁ der Luft in einem Bereich des Lufteinlasses erhöht wird. Dies hat den Vorteil, dass der Kamineffekt und somit der Luftstrom verstärkt wird.

Als Alternative besteht auch die Möglichkeit, dass das Aussenfassadenglas unterhalb der sich zwischen dem Lufteinlass und dem Luftauslass befindenden Mitte der Doppelfassade weniger als 50% Weissglas aufweist. Darin enthalten ist auch eine Variante, in welcher das Aussenfassadenglas unterhalb der sich zwischen dem Lufteinlass und dem Luftauslass befindenden Mitte der Doppelfassade gar kein Weissglas aufweist.

Vorteilhafterweise ist oberhalb der sich zwischen dem Lufteinlass und dem Luftauslass befindenden Mitte der Doppelfassade wenigstens 10%, besonders bevorzugt wenigstens 50% des Aussenfassadenglases sonnenstrahlenabsorbierend und/oder sonnenstrahlenreflektierend. Sonnenstrahlenabsorbierendes Glas bzw. Aussenfassadenglas kann beispielsweise einen erhöhten Eisenoxidgehalt aufweisen. Vorzugsweise liegt dabei der Eisenoxidgehalt von sonnenstrahlenabsorbierendem Glas bzw. Aussenfassadenglas im Bereich von 0.2 Gewichtsprozent bis 1.0 Gewichtsprozent. Der Eisenoxidgehalt von sonnenstrahlenabsorbierendem Glas bzw. Aussenfassadenglas kann aber auch gleich 1.0 Gewichtsprozent oder grösser sein. Zusammen mit einem erhöhten Eisenoxidgehalt oder anstelle eines erhöhten Eisenoxidgehalts kann sonnenstrahlenabsorbierendes Glas bzw. Aussenfassadenglas beispielsweise auch wenigstens zwei Lagen mit einer zwischen den wenigstens zwei Lagen angeordneten, sonnenstrahlenabsorbierenden Zwischenlage aufweisen. Sonnenstrahlenreflektierendes Glas bzw. Aussenfassadenglas kann beispielsweise wenigstens zwei Lagen mit einer zwischen den wenigstens zwei Lagen angeordneten, sonnenstrahlenreflektierenden Zwischenlage aufweisen.

Alternativ dazu besteht aber auch die Möglichkeit, dass oberhalb der sich zwischen dem Lufteinlass und dem Luftauslass befindenden Mitte der Doppelfassade weniger als 10% des Aussenfassadenglases sonnenstrahlenabsorbierend und/oder sonnenstrahlenreflektierend.

Unabhängig davon, wie die sonnenstrahlenabsorbierenden bzw. sonnenstrahlenreflektierenden Eigenschaften des Aussenfassadenglases erzielt wurden, wird dadurch der Vorteil erreicht, dass oberhalb der sich zwischen dem Lufteinlass und dem Luftauslass befindenden Mitte der Doppelfassade weniger Sonnenstrahlung in den Fassadenzwischenraum und zur Innenfassade gelangen kann. Dadurch wird Luft, welche sich im Fassadenzwischenraum oberhalb der Mitte der Doppelfassade befindet, bei Sonneneinstrahlung weniger stark erwärmt. Damit wird die Temperatur T₂ der Luft in einem Bereich des Luftauslasses reduziert bzw. weniger stark erwärmt. Dies hat den Vorteil, dass der Kamineffekt und somit der Luftstrom verstärkt wird.

Falls oberhalb der sich zwischen dem Lufteinlass und dem Luftauslass befindenden Mitte der Doppelfassade wenigstens 10%, besonders bevorzugt wenigstens 50% des Aussenfassadenglases wenigstens zwei Lagen mit einer zwischen den wenigstens zwei Lagen angeordneten, sonnenstrahlenabsorbierenden und/oder sonnenstrahlenreflektierenden Zwischenlage aufweist, so ist diese Zwischenlage in einer bevorzugten Variante eine elektrochrome Zwischenlage und sonnenstrahlenabsorbierend und/oder sonnenstrahlenreflektierend. Im Falle einer sonnenstrahlenabsorbierenden, elektrochromen Zwischenlage kann die Farbe und damit der Lichtdurchlass der Zwischenlage durch Anlegen einer elektrischen Spannung geändert werden. Eine solche Zwischenlage kann beispielsweise aus Wolframtrioxid oder Polyanilin gefertigt sein. Im Falle einer sonnenstrahlenreflektierenden, elektrochromen Zwischenlage kann die Sonnenstrahlenreflexion und damit der Lichtdurchlass der Zwischenlage durch Anlegen einer elektrischen Spannung geändert werden.

Wenn die Zwischenlage eine elektrochrome Zwischenlage ist, wird der Vorteil erreicht, dass durch Anlegen einer elektrischen Spannung an der Zwischenlage gesteuert werden kann, wie viel Sonnenstrahlung in den Fassadenzwischenraum gelangt. Entsprechend kann dadurch die Temperatur T₂ der Luft in einem Bereich des Luftauslasses beeinflusst werden, wodurch die Stärke des Kamineffekts und somit des Luftstroms gesteuert werden kann.

Falls oberhalb der sich zwischen dem Lufteinlass und dem Luftauslass befindenden Mitte der Doppelfassade wenigstens 10%, besonders bevorzugt wenigstens 50% des Aussenfassadenglases wenigstens zwei Lagen mit einer zwischen den wenigstens zwei Lagen angeordneten, sonnenstrahlenabsorbierenden und/oder sonnenstrahlenreflektierenden Zwischenlage aufweist, so ist diese Zwischenlage in einer weiteren bevorzugten Variante eine thermochrome Zwischenlage und sonnenstrahlenabsorbierend und/oder sonnenstrahlenreflektierend. Im Falle einer sonnenstrahlenabsorbierenden, thermochromen Zwischenlage nimmt die Sonnenstrahlenabsorption mit zunehmender Temperatur der Zwischenlage bevorzugt zu. Im Falle einer sonnenstrahlenreflektierenden, thermochromen Zwischenlage nimmt die Sonnenstrahlenreflexion mit zunehmender Temperatur der Zwischenlage bevorzugt zu.

Wenn die Zwischenlage eine solche thermochrome Zwischenlage ist, wird der Vorteil erreicht, dass bei stärkerer Sonnenstrahlung weniger Sonnenstrahlung in den Fassadenzwischenraum gelangt. Entsprechend wird dadurch die Temperatur T₂ der Luft in einem Bereich des Luftauslasses bei stärkerer Sonnenstrahlung proportional weniger stark erhöht, während bei geringerer Sonneneinstrahlung die Temperatur T₂ proportional stärker erhöht wird. Entsprechend wird dadurch eine Selbstregulation des Kamineffekts und somit des Luftstroms erreicht.

Alternativ zu diesen Varianten besteht aber auch die Möglichkeit, dass oberhalb der sich zwischen dem Lufteinlass und dem Luftauslass befindenden Mitte der Doppelfassade nicht wenigstens 10% des Aussenfassadenglases sonnenstrahlenabsorbierend und/oder sonnenstrahlenreflektierend sind.

Bevorzugt weist oberhalb der sich zwischen dem Lufteinlass und dem Luftauslass befindenden Mitte der Doppelfassade wenigstens 10%, besonders bevorzugt wenigstens 50% des Aussenfassadenglases eine Aussenfassadenglasbeschichtung auf, wobei die Aussenfassadenglasbeschichtung sonnenstrahlenabsorbierend und/oder sonnenstrahlenreflektierend ist.

Eine derartige sonnenstrahlenabsorbierende und/oder sonnenstrahlenreflektierende Aussenfassadenglasbeschichtung oberhalb der sich zwischen dem Lufteinlass und dem Luftauslass befindenden Mitte der Doppelfassade hat den Vorteil, dass oberhalb der sich zwischen dem Lufteinlass und dem Luftauslass befindenden Mitte der Aussenfassade weniger Sonnenstrahlung in den Fassadenzwischenraum und zur Innenfassade gelangen kann. Dadurch wird Luft, welche sich im Fassadenzwischenraum oberhalb dieser Mitte der Aussenfassade befindet, bei Sonneneinstrahlung weniger stark erwärmt, womit die Temperatur T₂ der Luft in einem Bereich des Luftauslasses reduziert bzw. weniger stark erwärmt wird. Dies hat den Vorteil, dass der Kamineffekt und somit der Luftstrom verstärkt wird.

In einer bevorzugten Variante weist oberhalb der sich zwischen dem Lufteinlass und dem Luftauslass befindenden Mitte der Doppelfassade wenigstens 10%, besonders bevorzugt wenigstens 50% des Aussenfassadenglases eine Aussenfassadenglasbeschichtung auf, welche eine elektrochrome Beschichtung und sonnenstrahlenabsorbierend und/oder sonnenstrahlenreflektierend ist. Im Falle einer sonnenstrahlenabsorbierenden, elektrochromen Aussenfassadenglasbeschichtung kann die Farbe und damit der Lichtdurchlass der Aussenfassadenglasbeschichtung durch Anlegen einer elektrischen Spannung geändert werden. Eine solche Aussenfassadenglasbeschichtung kann beispielsweise aus Wolframtrioxid oder Polyanilin gefertigt sein. Im Falle einer sonnenstrahlenreflektierenden, elektrochromen Aussenfassadenglasbeschichtung kann die Sonnenstrahlenreflexion und damit der Lichtdurchlass der Aussenfassadenglasbeschichtung durch Anlegen einer elektrischen Spannung geändert werden.

Wenn die Aussenfassadenglasbeschichtung eine elektrochrome Beschichtung ist, wird der Vorteil erreicht, dass durch Anlegen einer elektrischen Spannung an der Aussenfassadenglasbeschichtung gesteuert werden kann, wie viel Sonnenstrahlung in den Fassadenzwischenraum gelangt. Entsprechend kann dadurch die Temperatur T₂ der Luft in einem Bereich des Luftauslasses beeinflusst werden, wodurch die Stärke des Kamineffekts und somit des Luftstroms gesteuert werden kann.

In einer weiteren bevorzugten Variante weist oberhalb der sich zwischen dem Lufteinlass und dem Luftauslass befindenden Mitte der Doppelfassade wenigstens 10%, besonders bevorzugt wenigstens 50% des Aussenfassadenglases eine Aussenfassadenglasbeschichtung auf, welche eine thermochrome Beschichtung und sonnenstrahlenabsorbierend und/oder sonnenstrahlenreflektierend ist. Im Falle einer sonnenstrahlenabsorbierenden, thermochromen Aussenfassadenglasbeschichtung nimmt die Sonnenstrahlenabsorption mit zunehmender Temperatur der Aussenfassadenglasbeschichtung bevorzugt zu. Im Falle einer sonnenstrahlenreflektierenden, thermochromen Aussenfassadenglasbeschichtung nimmt die Sonnenstrahlenreflexion mit zunehmender Temperatur der Aussenfassadenglasbeschichtung bevorzugt zu.

Wenn die Aussenfassadenglasbeschichtung eine thermochrome Beschichtung ist, wird der Vorteil erreicht, dass bei stärkerer Sonnenstrahlung weniger Sonnenstrahlung in den Fassadenzwischenraum gelangt. Entsprechend wird dadurch die Temperatur T₂ der Luft in einem Bereich des Luftauslasses bei stärkerer Sonnenstrahlung weniger stark erhöht, während bei geringerer Sonneneinstrahlung die Temperatur T₂ stärker erwärmt wird. Entsprechend entsteht dadurch eine Selbstregulation des Kamineffekts und somit des Luftstroms.

Falls das Aussenfassadenglas eine sonnenstrahlenabsorbierende und/oder sonnenstrahlenreflektierende Aussenfassadenglasbeschichtung aufweist, so ist unerheblich, wie diese Aussenfassadenglasbeschichtung auf das Aussenfassadenglas aufgetragen worden ist. So kann die Beschichtung mit einem chemischen oder physikalischen Prozess erfolgt sein. Beispielsweise kann die Beschichtung mittels pyrolytischem Beschichtungsverfahren, mittels PVD-Beschichtungsverfahren wie beispielsweise einem Magnetron-Sputter-Beschichtungsverfahren, mittels CVD-Beschichtungsverfahren, mittels plasmagestütztem Beschichtungsverfahren, mittels Lackierung, Bedruckung, Laminierung mit einer Folie oder einer Kombination dieser Verfahren erfolgt sein. Besonders vorteilhaft ist dabei eine mittels Magnetron-Sputter-verfahren aufgetragene Aussenfassadenglasbeschichtung, weil dieses Verfahren eine sehr effiziente und kostengünstige, grossflächige Beschichtung ermöglicht.

Alternativ dazu besteht aber auch die Möglichkeit, dass oberhalb der sich zwischen dem Lufteinlass und dem Luftauslass befindenden Mitte der Doppelfassade nicht wenigstens 10% des Aussenfassadenglases eine sonnenstrahlenabsorbierende und/oder sonnenstrahlenreflektierende Aussenfassadenglasbeschichtung aufweist. Darunter fällt auch eine Variante, bei welcher oberhalb der sich zwischen dem Lufteinlass und dem Luftauslass befindenden Mitte der Doppelfassade das Aussenfassadenglas gar keine sonnenstrahlenabsorbierende oder sonnenstrahlenreflektierende Aussenfassadenglasbeschichtung aufweist.

Vorteilhafterweise umfasst die Innenfassade Innenfassadenglas, wobei eine dem Fassadenzwischenraum zugewandte Oberfläche der Innenfassade mindestens zu 30%, bevorzugt mindestens zu 50%, besonders bevorzugt mindestens zu 70% aus Innenfassadenglas gebildet ist. Dabei kann die dem Fassadenzwischenraum zugewandte Oberfläche der Innenfassade auch zu 100% aus Innenfassadenglas gebildet sein. Falls die dem Fassadenzwischenraum zugewandte Oberfläche der Innenfassade nicht zu 100% aus Innenfassadenglas gebildet ist, so ist unerheblich, aus welchen Materialien der nicht aus Innenfassadenglas gebildete Anteil der Oberfläche gebildet ist. So kann dieser Anteil aus einem oder mehreren anderen Materialien wie zum Beispiel Beton, Stein, Ziegel, Metall, Fasermaterialien aus Stoffgeweben wie Glasfaser oder Materialienverbunden aus Kunststoff zusammen mit anderen Baustoffen gebildet sein.

Wenn die dem Fassadenzwischenraum zugewandte Oberfläche der Innenfassade mindestens zu 30%, mindestens zu 50%, mindestens zu 70% oder gar zu 100% aus Innenfassadenglas gebildet ist, so wird der Vorteil erreicht, dass ausreichend Tageslicht ins Innere des Hochbaus gelangen kann. Dabei kann der Anteil an Tageslicht, welcher ins Innere des Hochbaus gelangt, je nach Verwendungszweck angepasst werden. Je grösser dabei der Anteil an Innenfassadenglas ist, desto mehr Tageslicht kann ins Innere des Hochbaus gelangen.

Als Alternative besteht auch die Möglichkeit, dass die dem Fassadenzwischenraum zugewandte Oberfläche der Innenfassade zu weniger als 30% aus Innenfassadenglas gebildet ist oder gar kein Innenfassadenglas umfasst. Letzteres kann beispielsweise der Fall sein, wenn der Hochbau ein Silo, eine Brückenstütze oder ein Brückenpfeiler ist.

Falls die Innenfassade Innenfassadenglas umfasst, so ist vorteilhafterweise unterhalb der sich zwischen dem Lufteinlass und dem Luftauslass befindenden Mitte der Doppelfassade wenigstens 10%, besonders bevorzugt wenigstens 50% des Innenfassadenglases sonnenstrahlenabsorbierend und/oder sonnenstrahlenreflektierend. Sonnenstrahlenabsorbierendes Glas bzw. Innenfassadenglas kann beispielsweise einen erhöhten Eisenoxidgehalt aufweisen. Vorzugsweise liegt dabei der Eisenoxidgehalt von sonnenstrahlenabsorbierendem Glas bzw. Innenfassadenglas im Bereich von 0.2 Gewichtsprozent bis 1.0 Gewichtsprozent. Der Eisenoxidgehalt von sonnenstrahlenabsorbierendem Glas bzw. Innenfassadenglas kann aber auch gleich 1.0 Gewichtsprozent oder grösser sein. Zusammen mit einem erhöhten Eisenoxidgehalt oder anstelle eines erhöhten Eisenoxidgehalts kann sonnenstrahlenabsorbierendes Glas bzw. Innenfassadenglas beispielsweise auch wenigstens zwei Lagen mit einer zwischen den wenigstens zwei Lagen angeordneten, sonnenstrahlenabsorbierenden Zwischenlage aufweisen. Sonnenstrahlenreflektierendes Glas bzw. Innenfassadenglas kann beispielsweise wenigstens zwei Lagen mit einer zwischen den wenigstens zwei Lagen angeordneten, sonnenstrahlenreflektierenden Zwischenlage aufweisen.

Unabhängig davon, wie die sonnenstrahlenabsorbierenden bzw. sonnenstrahlenreflektierenden Eigenschaften des Innenfassadenglases erzielt wurden, wird dadurch der Effekt erreicht, dass unterhalb dieser Mitte der Doppelfassade das Innenfassadenglas aufgrund der Sonnenstrahlenabsorption stärker erwärmt wird bzw. aufgrund der erhöhten Sonnenstrahlenreflexion mehr Sonnenstrahlen in den Fassadenzwischenraum zurückreflektiert werden und damit ein zweites Mal durch den Fassadenzwischenraum verlaufen. Beides bewirkt, dass Luft, welche sich im Fassadenzwischenraum unterhalb dieser Mitte der Doppelfassade befindet, bei Sonneneinstrahlung stärker erwärmt wird. Damit wird die Temperatur T₁ der Luft in einem Bereich des Lufteinlasses erhöht. Dies hat den Vorteil, dass der Kamineffekt und somit der Luftstrom verstärkt wird.

Falls unterhalb der sich zwischen dem Lufteinlass und dem Luftauslass befindenden Mitte der Doppelfassade wenigstens 10%, besonders bevorzugt wenigstens 50% des Aussenfassadenglases wenigstens zwei Lagen mit einer zwischen den wenigstens zwei Lagen angeordneten, sonnenstrahlenabsorbierenden und/oder sonnenstrahlenreflektierenden Zwischenlage aufweist, so ist diese Zwischenlage in einer bevorzugten Variante eine elektrochrome Zwischenlage und sonnenstrahlenabsorbierend und/oder sonnenstrahlenreflektierend. Im Falle einer sonnenstrahlenabsorbierenden, elektrochromen Zwischenlage kann die Farbe und damit der Lichtdurchlass der Zwischenlage durch Anlegen einer elektrischen Spannung geändert werden. Eine solche Zwischenlage kann beispielsweise aus Wolframtrioxid oder Polyanilin gefertigt sein. Im Falle einer sonnenstrahlenreflektierenden, elektrochromen Zwischenlage kann die Sonnenstrahlenreflexion und damit der Lichtdurchlass der Zwischenlage durch Anlegen einer elektrischen Spannung geändert werden.

Wenn die Zwischenlage eine elektrochrome Zwischenlage ist, wird der Vorteil erreicht, dass durch Anlegen einer elektrischen Spannung an der Zwischenlage gesteuert werden kann, wie stark unterhalb der Mitte der Doppelfassade das Innenfassadenglas aufgrund der Sonnenstrahlenabsorption erwärmt wird bzw. wie viel Sonnenstrahlung aufgrund der erhöhten Sonnenstrahlenreflexion in den Fassadenzwischenraum zurück reflektiert wird. Da sowohl die erhöhte Sonnenstrahlenabsorption als auch die erhöhte Sonnenstrahlenreflexion bewirken, dass Luft, welche sich im Fassadenzwischenraum unterhalb der Mitte der Doppelfassade befindet, bei Sonneneinstrahlung stärker erwärmt wird, kann somit dank der elektrochromen Zwischenlage die Temperatur T₁ der Luft in einem Bereich des Lufteinlasses beeinflusst werden, wodurch die Stärke des Kamineffekts und somit des Luftstroms gesteuert werden kann.

Falls unterhalb der sich zwischen dem Lufteinlass und dem Luftauslass befindenden Mitte der Doppelfassade wenigstens 10%, besonders bevorzugt wenigstens 50% des Innenfassadenglases wenigstens zwei Lagen mit einer zwischen den wenigstens zwei Lagen angeordneten, sonnenstrahlenabsorbierenden und/oder sonnenstrahlenreflektierenden Zwischenlage aufweist, so ist diese Zwischenlage in einer weiteren bevorzugten Variante eine thermochrome Zwischenlage und sonnenstrahlenabsorbierend und/oder sonnenstrahlenreflektierend. Im Falle einer sonnenstrahlenabsorbierenden, thermochromen Zwischenlage nimmt die Sonnenstrahlenabsorption mit zunehmender Temperatur der Zwischenlage bevorzugt ab. Im Falle einer sonnenstrahlenreflektierenden, thermochromen Zwischenlage nimmt die Sonnenstrahlenreflexion mit zunehmender Temperatur der Zwischenlage bevorzugt ab.

Wenn die Zwischenlage eine solche thermochrome Zwischenlage ist, wird der Vorteil erreicht, dass bei stärkerer Sonnenstrahlung aufgrund der reduzierten Sonnenstrahlenabsorption das Innenfassadenglas mit der Zwischenlage weniger stark erwärmt wird bzw. dass aufgrund der reduzierten Sonnenstrahlenreflexion weniger Sonnenstrahlung in den Fassadenzwischenraum zurück reflektiert wird. Entsprechend wird dadurch die Temperatur T₁ der Luft in einem Bereich des Lufteinlasses bei stärkerer Sonnenstrahlung proportional weniger stark erhöht, während bei geringerer Sonneneinstrahlung die Temperatur T₁ proportional stärker erhöht wird. Entsprechend wird dadurch eine Selbstregulation des Kamineffekts und somit des Luftstroms erreicht.

Alternativ zu diesen Varianten besteht auch die Möglichkeit, dass unterhalb der sich zwischen dem Lufteinlass und dem Luftauslass befindenden Mitte der Doppelfassade nicht wenigstens 10% des Innenfassadenglases sonnenstrahlenabsorbierend und/oder sonnenstrahlenreflektierend sind.

Bevorzugt weist unterhalb der sich zwischen dem Lufteinlass und dem Luftauslass befindenden Mitte der Doppelfassade wenigstens 10%, besonders bevorzugt wenigstens 50% des Innenfassadenglases eine Innenfassadenglasbeschichtung auf, wobei die Innenfassadenglasbeschichtung sonnenstrahlenabsorbierend und/oder sonnenstrahlenreflektierend ist.

Eine derartige sonnenstrahlenabsorbierende und/oder sonnenstrahlenreflektierende Innenfassadenglasbeschichtung unterhalb der sich zwischen dem Lufteinlass und dem Luftauslass befindenden Mitte der Doppelfassade hat den Effekt, dass unterhalb der Mitte der Doppelfassade das Innenfassadenglas aufgrund der Sonnenstrahlenabsorption stärker erwärmt wird bzw. aufgrund der erhöhten Sonnenstrahlenreflexion mehr Sonnenstrahlen durch den Fassadenzwischenraum verlaufen. Dies bewirkt, dass Luft, welche sich im Fassadenzwischenraum unterhalb dieser Mitte der Doppelfassade befindet, bei Sonneneinstrahlung stärker erwärmt wird, womit die Temperatur T₁ der Luft in einem Bereich des Lufteinlasses erhöht wird. Dies hat den Vorteil, dass der Kamineffekt und somit der Luftstrom verstärkt wird.

In einer bevorzugten Variante weist unterhalb der sich zwischen dem Lufteinlass und dem Luftauslass befindenden Mitte der Doppelfassade wenigstens 10%, besonders bevorzugt wenigstens 50% des Innenfassadenglases eine Innenfassadenglasbeschichtung auf, welche eine elektrochrome Beschichtung ist und sonnenstrahlenabsorbierend und/oder sonnenstrahlenreflektierend ist. Im Falle einer sonnenstrahlenabsorbierenden, elektrochromen Innenfassadenbeschichtung kann die Farbe und damit der Lichtdurchlass der Innenfassadenbeschichtung durch Anlegen einer elektrischen Spannung geändert werden. Eine solche Innenfassadenbeschichtung kann beispielsweise aus Wolframtrioxid oder Polyanilin gefertigt sein. Im Falle einer sonnenstrahlenreflektierenden, elektrochromen Innenfassadenbeschichtung kann die Sonnenstrahlenreflexion und damit der Lichtdurchlass der Innenfassadenbeschichtung durch Anlegen einer elektrischen Spannung geändert werden.

Wenn die Innenfassadenglasbeschichtung eine elektrochrome Beschichtung ist, wird der Vorteil erreicht, dass durch Anlegen einer elektrischen Spannung an der Zwischenlage gesteuert werden kann, wie stark unterhalb der Mitte der Doppelfassade das Innenfassadenglas aufgrund der Sonnenstrahlenabsorption erwärmt wird bzw. wie viel Sonnenstrahlung aufgrund der erhöhten Sonnenstrahlenreflexion in den Fassadenzwischenraum zurück reflektiert wird. Da sowohl die erhöhte Sonnenstrahlenabsorption als auch die erhöhte Sonnenstrahlenreflexion bewirken, dass Luft, welche sich im Fassadenzwischenraum unterhalb der Mitte der Doppelfassade befindet, bei Sonneneinstrahlung stärker erwärmt wird, kann somit dank der elektrochromen Innenfassadenglasbeschichtung die Temperatur T₁ der Luft in einem Bereich des Lufteinlasses beeinflusst werden, wodurch die Stärke des Kamineffekts und somit des Luftstroms gesteuert werden kann.

In einer weiteren bevorzugten Variante weist unterhalb der sich zwischen dem Lufteinlass und dem Luftauslass befindenden Mitte der Doppelfassade wenigstens 10%, besonders bevorzugt wenigstens 50% des Innenfassadenglases eine Innenfassadenglasbeschichtung auf, welche eine thermochrome Beschichtung und sonnenstrahlenabsorbierend und/oder sonnenstrahlenreflektierend ist. Im Falle einer sonnenstrahlenabsorbierenden, thermochromen Innenfassadenbeschichtung nimmt die Sonnenstrahlenabsorption mit zunehmender Temperatur der Innenfassadenbeschichtung bevorzugt ab. Im Falle einer sonnenstrahlenreflektierenden, thermochromen Innenfassadenbeschichtung nimmt die Sonnenstrahlenreflexion mit zunehmender Temperatur der Innenfassadenbeschichtung bevorzugt ab.

Wenn die Innenfassadenglasbeschichtung eine solche thermochrome Beschichtung ist, wird der Vorteil erreicht, dass bei stärkerer Sonnenstrahlung aufgrund der reduzierten Sonnenstrahlenabsorption das Innenfassadenglas mit der Beschichtung weniger stark erwärmt wird bzw. dass aufgrund der reduzierten Sonnenstrahlenreflexion weniger Sonnenstrahlung in den Fassadenzwischenraum zurück reflektiert wird. Entsprechend wird dadurch die Temperatur T₁ der Luft in einem Bereich des Lufteinlasses bei stärkerer Sonnenstrahlung proportional weniger stark erhöht, während bei geringerer Sonneneinstrahlung die Temperatur T₁ proportional stärker erhöht wird. Entsprechend wird dadurch eine Selbstregulation des Kamineffekts und somit des Luftstroms erreicht.

Falls das Innenfassadenglas eine sonnenstrahlenabsorbierende und/oder sonnenstrahlenreflektierende Innenfassadenglasbeschichtung aufweist, so ist unerheblich, wie diese Innenfassadenglasbeschichtung auf das Innenfassadenglas aufgetragen worden ist. So kann die Beschichtung mit einem chemischen oder physikalischen Prozess erfolgt sein. Beispielsweise kann die Beschichtung mittels pyrolytischem Beschichtungsverfahren, mittels PVD-Beschichtungsverfahren wie beispielsweise einem Magnetron-Sputter-Beschichtungsverfahren, mittels CVD-Beschichtungsverfahren, mittels plasmagestütztem Beschichtungsverfahren, mittels Lackierung, Bedruckung, Laminierung mit einer Folie oder einer Kombination dieser Verfahren erfolgt sein. Besonders vorteilhaft ist dabei eine mittels Magnetron-Sputter-verfahren aufgetragene Innenfassadenglasbeschichtung, weil dieses Verfahren eine sehr effiziente und kostengünstige, grossflächige Beschichtung ermöglicht.

Alternativ dazu besteht aber auch die Möglichkeit, dass unterhalb der sich zwischen dem Lufteinlass und dem Luftauslass befindenden Mitte der Doppelfassade nicht wenigstens 10% des Innenfassadenglases eine sonnenstrahlenabsorbierende und/oder sonnenstrahlenreflektierende Innenfassadenglasbeschichtung aufweist. Darunter fällt auch eine Variante, bei welcher unterhalb der sich zwischen dem Lufteinlass und dem Luftauslass befindenden Mitte der Doppelfassade das Innenfassadenglas gar keine sonnenstrahlenabsorbierende oder sonnenstrahlenreflektierende Innenfassadenglasbeschichtung aufweist.

Vorteilhafterweise umfasst die Doppelfassade eine im Fassadenzwischenraum zwischen der Aussenfassade und der Innenfassade angeordnete Zwischenfassade zur Führung des Luftstroms im Fassadenzwischenraum aussenfassadenseitig und innenfassadenseitig der Zwischenfassade. Eine solche Zwischenfassade hat den Vorteil, dass innerhalb des Fassadenzwischenraums die Temperatur der Luft des Luftstroms kontrolliert werden kann, um den Kamineffekt optimal zu erzeugen und zu erhalten. Dabei ist unerheblich, wie die Zwischenfassade gebildet ist. Beispielsweise kann die Zwischenfassade Zwischenfassadenglas umfassen. In einem weiteren Beispiel ist die Zwischenfassade durch ein mechanisches, verstellbares Abschattungssystem, insbesondere Rollläden und/oder Storen gebildet. Weiter kann die Zwischenfassade beispielsweise auch das Abschattungssystem sowie Zwischenfassadenglas umfassen.

Vorteilhafterweise umfasst die Zwischenfassade Zwischenfassadenglas, wobei eine Oberfläche der Zwischenfassade mindestens zu 30%, bevorzugt mindestens zu 50%, besonders bevorzugt mindestens zu 70% aus Zwischenfassadenglas gebildet ist. Dabei kann die dem Fassadenzwischenraum zugewandte Oberfläche der Zwischenfassade auch zu 100% aus Zwischenfassadenglas gebildet sein. Falls die Oberfläche der Zwischenfassade nicht zu 100% aus Zwischenfassadenglas gebildet ist, so ist unerheblich, aus welchen Materialien der nicht aus Zwischenfassadenglas gebildete Anteil der Oberfläche gebildet ist. So kann dieser Anteil aus einem oder mehreren anderen Materialien wie zum Beispiel Beton, Stein, Ziegel, Metall, Fasermaterialien aus Stoffgeweben wie Glasfaser oder Materialienverbunden aus Kunststoff zusammen mit anderen Baustoffen gebildet sein.

Wenn die Oberfläche der Zwischenfassade mindestens zu 30%, mindestens zu 50%, mindestens zu 70% oder gar zu 100% aus Zwischenfassadenglas gebildet ist, so wird der Vorteil erreicht, dass ausreichend Tageslicht zur Innenfassade und gegebenenfalls ins Innere des Hochbaus gelangen kann. Dabei kann der Anteil an Tageslicht, welcher zur Innenfassade und gegebenenfalls ins Innere des Hochbaus gelangt, je nach Verwendungszweck angepasst werden. Je grösser dabei der Anteil an Zwischenfassadenglas ist, desto mehr Tageslicht kann zur Innenfassade und gegebenenfalls ins Innere des Hochbaus gelangen.

Als Alternative besteht auch die Möglichkeit, dass die Oberfläche der Innenfassade zu weniger als 30% aus Innenfassadenglas gebildet ist oder gar kein Innenfassadenglas umfasst. Letzteres kann beispielsweise der Fall sein, wenn der Hochbau ein Silo, eine Brückenstütze oder ein Brückenpfeiler ist.

Alternativ zu diesen Varianten besteht aber auch die Möglichkeit, dass die Doppelfassade keine im Fassadenzwischenraum angeordnete Zwischenfassade umfasst.

Falls die Zwischenfassade Zwischenfassadenglas umfasst, so ist vorteilhafterweise unterhalb der sich zwischen dem Lufteinlass und dem Luftauslass befindenden Mitte der Doppelfassade wenigstens 10%, besonders bevorzugt wenigstens 50% des Zwischenfassadenglases sonnenstrahlenabsorbierend und/oder sonnenstrahlenreflektierend. Sonnenstrahlenabsorbierendes Glas bzw. Zwischenfassadenglas kann beispielsweise einen erhöhten Eisenoxidgehalt aufweisen. Vorzugsweise liegt dabei der Eisenoxidgehalt von sonnenstrahlenabsorbierendem Glas bzw. Innenfassadenglas im Bereich von 0.2 Gewichtsprozent bis 1.0 Gewichtsprozent. Der Eisenoxidgehalt von sonnenstrahlenabsorbierendem Glas bzw. Zwischenfassadenglas kann aber auch gleich 1.0 Gewichtsprozent oder grösser sein. Zusammen mit einem erhöhten Eisenoxidgehalt oder anstelle eines erhöhten Eisenoxidgehalts kann sonnenstrahlenabsorbierendes Glas bzw. Zwischenfassadenglas beispielsweise auch wenigstens zwei Lagen mit einer zwischen den wenigstens zwei Lagen angeordneten, sonnenstrahlenabsorbierenden Zwischenlage aufweisen. Sonnenstrahlenreflektierendes Glas bzw. Zwischenfassadenglas kann beispielsweise wenigstens zwei Lagen mit einer zwischen den wenigstens zwei Lagen angeordneten, sonnenstrahlenreflektierenden Zwischenlage aufweisen.

Unabhängig davon, wie die sonnenstrahlenabsorbierenden bzw. sonnenstrahlenreflektierenden Eigenschaften des Zwischenfassadenglases erzielt wurden, wird dadurch der Effekt erreicht, dass unterhalb dieser Mitte der Doppelfassade das Zwischenfassadenglas aufgrund der Sonnenstrahlenabsorption stärker erwärmt wird bzw. aufgrund der erhöhten Sonnenstrahlenreflexion mehr Sonnenstrahlen in den Zwischenraum zwischen der Zwischenfassade und der Aussenfassade zurückreflektiert werden und damit ein zweites Mal durch den Zwischenraum verlaufen. Beides bewirkt, dass Luft, welche sich im Fassadenzwischenraum unterhalb dieser Mitte der Doppelfassade befindet, bei Sonneneinstrahlung stärker erwärmt wird. Damit wird die Temperatur T₁ der Luft in einem Bereich des Lufteinlasses erhöht. Dies hat den Vorteil, dass der Kamineffekt und somit der Luftstrom verstärkt wird.

Falls unterhalb der sich zwischen dem Lufteinlass und dem Luftauslass befindenden Mitte der Doppelfassade wenigstens 10%, besonders bevorzugt wenigstens 50% des Zwischenfassadenglases wenigstens zwei Lagen mit einer zwischen den wenigstens zwei Lagen angeordneten, sonnenstrahlenabsorbierenden und/oder sonnenstrahlenreflektierenden Zwischenlage aufweist, so ist diese Zwischenlage in einer bevorzugten Variante eine elektrochrome Zwischenlage und sonnenstrahlenabsorbierend und/oder sonnenstrahlenreflektierend. Im Falle einer sonnenstrahlenabsorbierenden, elektrochromen Zwischenlage kann die Farbe und damit der Lichtdurchlass der Zwischenlage durch Anlegen einer elektrischen Spannung geändert werden. Eine solche Zwischenlage kann beispielsweise aus Wolframtrioxid oder Polyanilin gefertigt sein. Im Falle einer sonnenstrahlenreflektierenden, elektrochromen Zwischenlage kann die Sonnenstrahlenreflexion und damit der Lichtdurchlass der Zwischenlage durch Anlegen einer elektrischen Spannung geändert werden.

Wenn die Zwischenlage eine elektrochrome Zwischenlage ist, wird der Vorteil erreicht, dass durch Anlegen einer elektrischen Spannung an der Zwischenlage gesteuert werden kann, wie stark unterhalb der Mitte der Doppelfassade das Zwischenfassadenglas aufgrund der Sonnenstrahlenabsorption erwärmt wird bzw. wie viel Sonnenstrahlung aufgrund der erhöhten Sonnenstrahlenreflexion in den Fassadenzwischenraum zurück reflektiert wird. Da sowohl die erhöhte Sonnenstrahlenabsorption als auch die erhöhte Sonnenstrahlenreflexion bewirken, dass Luft, welche sich im Fassadenzwischenraum unterhalb der Mitte der Doppelfassade befindet, bei Sonneneinstrahlung stärker erwärmt wird, kann somit dank der elektrochromen Zwischenlage die Temperatur T₁ der Luft in einem Bereich des Lufteinlasses beeinflusst werden, wodurch die Stärke des Kamineffekts und somit des Luftstroms gesteuert werden kann.

Falls unterhalb der sich zwischen dem Lufteinlass und dem Luftauslass befindenden Mitte der Doppelfassade wenigstens 10%, besonders bevorzugt wenigstens 50% des Zwischenfassadenglases wenigstens zwei Lagen mit einer zwischen den wenigstens zwei Lagen angeordneten, sonnenstrahlenabsorbierenden und/oder sonnenstrahlenreflektierenden Zwischenlage aufweist, so ist diese Zwischenlage in einer weiteren bevorzugten Variante eine thermochrome Zwischenlage und sonnenstrahlenabsorbierend und/oder sonnenstrahlenreflektierend. Im Falle einer sonnenstrahlenabsorbierenden, thermochromen Zwischenlage nimmt die Sonnenstrahlenabsorption mit zunehmender Temperatur der Zwischenlage bevorzugt ab. Im Falle einer sonnenstrahlenreflektierenden, thermochromen Zwischenlage nimmt die Sonnenstrahlenreflexion mit zunehmender Temperatur der Zwischenlage bevorzugt ab.

Wenn die Zwischenlage eine solche thermochrome Zwischenlage ist, wird der Vorteil erreicht, dass bei stärkerer Sonnenstrahlung aufgrund der reduzierten Sonnenstrahlenabsorption das Zwischenfassadenglas mit der Zwischenlage weniger stark erwärmt wird bzw. dass aufgrund der reduzierten Sonnenstrahlenreflexion weniger Sonnenstrahlung in den Zwischenraum zwischen der Zwischenfassade und der Aussenfassade zurück reflektiert wird. Entsprechend wird dadurch die Temperatur T₁ der Luft in einem Bereich des Lufteinlasses bei stärkerer Sonnenstrahlung proportional weniger stark erhöht, während bei geringerer Sonneneinstrahlung die Temperatur T₁ proportional stärker erhöht wird. Entsprechend wird dadurch eine Selbstregulation des Kamineffekts und somit des Luftstroms erreicht.

Alternativ zu diesen Varianten besteht auch die Möglichkeit, dass unterhalb der sich zwischen dem Lufteinlass und dem Luftauslass befindenden Mitte der Doppelfassade nicht wenigstens 10% des Zwischenfassadenglases sonnenstrahlenabsorbierend und/oder sonnenstrahlenreflektierend sind.

Bevorzugt weist unterhalb der sich zwischen dem Lufteinlass und dem Luftauslass befindenden Mitte der Doppelfassade wenigstens 10%, besonders bevorzugt wenigstens 50% des Zwischenfassadenglases eine Zwischenfassadenglasbeschichtung auf, wobei die Zwischenfassadenglasbeschichtung sonnenstrahlenabsorbierend und/oder sonnenstrahlen-reflektierend ist.

Eine derartige sonnenstrahlenabsorbierende und/oder sonnenstrahlenreflektierende Zwischenfassadenglasbeschichtung unterhalb der sich zwischen dem Lufteinlass und dem Luftauslass befindenden Mitte der Doppelfassade hat den Effekt, dass unterhalb der Mitte der Doppelfassade das Zwischenfassadenglas aufgrund der Sonnenstrahlenabsorption stärker erwärmt wird bzw. aufgrund der erhöhten Sonnenstrahlenreflexion mehr Sonnenstrahlen durch den Zwischenraum zwischen der Zwischenfassade und der Aussenfassade verlaufen. Dies bewirkt, dass Luft, welche sich im Fassadenzwischenraum unterhalb dieser Mitte der Doppelfassade befindet, bei Sonneneinstrahlung stärker erwärmt wird, womit die Temperatur T₁ der Luft in einem Bereich des Lufteinlasses erhöht wird. Dies hat den Vorteil, dass der Kamineffekt und somit der Luftstrom verstärkt wird.

In einer bevorzugten Variante weist unterhalb der sich zwischen dem Lufteinlass und dem Luftauslass befindenden Mitte der Doppelfassade wenigstens 10%, besonders bevorzugt wenigstens 50% des Zwischenfassadenglases eine Zwischenfassadenglasbeschichtung auf, welche eine elektrochrome Beschichtung ist und sonnenstrahlenabsorbierend und/oder sonnenstrahlenreflektierend ist. Im Falle einer sonnenstrahlenabsorbierenden, elektrochromen Zwischenfassadenbeschichtung kann die Farbe und damit der Lichtdurchlass der Zwischenfassadenbeschichtung durch Anlegen einer elektrischen Spannung geändert werden. Eine solche Zwischenfassadenbeschichtung kann beispielsweise aus Wolframtrioxid oder Polyanilin gefertigt sein. Im Falle einer sonnenstrahlenreflektierenden, elektrochromen Zwischenfassadenbeschichtung kann die Sonnenstrahlenreflexion und damit der Lichtdurchlass der Zwischenfassadenbeschichtung durch Anlegen einer elektrischen Spannung geändert werden.

Wenn die Zwischenfassadenglasbeschichtung eine elektrochrome Beschichtung ist, wird der Vorteil erreicht, dass durch Anlegen einer elektrischen Spannung an der Zwischenlage gesteuert werden kann, wie stark unterhalb der Mitte der Doppelfassade das Zwischenfassadenglas aufgrund der Sonnenstrahlenabsorption erwärmt wird bzw. wie viel Sonnenstrahlung aufgrund der erhöhten Sonnenstrahlenreflexion in den Zwischenraum zwischen der Zwischenfassade und der Aussenfassade zurück reflektiert wird. Da sowohl die erhöhte Sonnenstrahlenabsorption als auch die erhöhte Sonnenstrahlenreflexion bewirken, dass Luft, welche sich im Fassadenzwischenraum unterhalb der Mitte der Doppelfassade befindet, bei Sonneneinstrahlung stärker erwärmt wird, kann somit dank der elektrochromen Zwischenfassadenglasbeschichtung die Temperatur T₁ der Luft in einem Bereich des Lufteinlasses beeinflusst werden, wodurch die Stärke des Kamineffekts und somit des Luftstroms gesteuert werden kann.

In einer weiteren bevorzugten Variante weist unterhalb der sich zwischen dem Lufteinlass und dem Luftauslass befindenden Mitte der Doppelfassade wenigstens 10%, besonders bevorzugt wenigstens 50% des Zwischenfassadenglases eine Zwischenfassadenglasbeschichtung auf, welche eine thermochrome Beschichtung und sonnenstrahlenabsorbierend und/oder sonnenstrahlenreflektierend ist. Im Falle einer sonnenstrahlenabsorbierenden, thermochromen Zwischenfassadenbeschichtung nimmt die Sonnenstrahlenabsorption mit zunehmender Temperatur der Zwischenfassadenbeschichtung bevorzugt ab. Im Falle einer sonnenstrahlenreflektierenden, thermochromen Zwischenfassadenbeschichtung nimmt die Sonnenstrahlenreflexion mit zunehmender Temperatur der Zwischenfassadenbeschichtung bevorzugt ab.

Wenn die Zwischenfassadenglasbeschichtung eine solche thermochrome Beschichtung ist, wird der Vorteil erreicht, dass bei stärkerer Sonnenstrahlung aufgrund der reduzierten Sonnenstrahlenabsorption das Zwischenfassadenglas mit der Beschichtung weniger stark erwärmt wird bzw. dass aufgrund der reduzierten Sonnenstrahlenreflexion weniger Sonnenstrahlung in den Zwischenraum zwischen der Zwischenfassade und der Aussenfassade zurück reflektiert wird. Entsprechend wird dadurch die Temperatur T₁ der Luft in einem Bereich des Lufteinlasses bei stärkerer Sonnenstrahlung proportional weniger stark erhöht, während bei geringerer Sonneneinstrahlung die Temperatur T₁ proportional stärker erhöht wird. Entsprechend wird dadurch eine Selbstregulation des Kamineffekts und somit des Luftstroms erreicht.

Falls das Zwischenfassadenglas eine sonnenstrahlenabsorbierende und/oder sonnenstrahlenreflektierende Zwischenfassadenglasbeschichtung aufweist, so ist unerheblich, wie diese Zwischenfassadenglasbeschichtung auf das Zwischenfassadenglas aufgetragen worden ist. So kann die Beschichtung mit einem chemischen oder physikalischen Prozess erfolgt sein. Beispielsweise kann die Beschichtung mittels pyrolytischem Beschichtungsverfahren, mittels PVD-Beschichtungsverfahren wie beispielsweise einem Magnetron-Sputter-Beschichtungsverfahren, mittels CVD-Beschichtungsverfahren, mittels plasmagestütztem Beschichtungsverfahren, mittels Lackierung, Bedruckung, Laminierung mit einer Folie oder einer Kombination dieser Verfahren erfolgt sein. Besonders vorteilhaft ist dabei eine mittels Magnetron-Sputter-verfahren aufgetragene Zwischenfassadenglasbeschichtung, weil dieses Verfahren eine sehr effiziente und kostengünstige, grossflächige Beschichtung ermöglicht.

Alternativ dazu besteht aber auch die Möglichkeit, dass unterhalb der sich zwischen dem Lufteinlass und dem Luftauslass befindenden Mitte der Doppelfassade nicht wenigstens 10% des Zwischenfassadenglases eine sonnenstrahlenabsorbierende und/oder sonnenstrahlenreflektierende Innenfassadenglasbeschichtung aufweist. Darunter fällt auch eine Variante, bei welcher unterhalb der sich zwischen dem Lufteinlass und dem Luftauslass befindenden Mitte der Doppelfassade das Zwischenfassadenglas gar keine sonnenstrahlenabsorbierende oder sonnenstrahlenreflektierende Zwischenfassadenglasbeschichtung aufweist.

Alternativ zu diesen Varianten besteht auch die Möglichkeit, dass die Doppelfassade keine Zwischenfassade umfasst.

Vorteilhafterweise umfasst die Doppelfassadenanordnung eine Heizvorrichtung, insbesondere einen Wärmetauscher oder eine Wärmepumpe, zum Erwärmen des Luftstroms im Fassadenzwischenraum unterhalb der sich zwischen dem Lufteinlass und dem Luftauslass befindenden Mitte der Doppelfassade. Da diese Heizvorrichtung zum Erwärmen des Luftstroms im Fassadenzwischenraum unterhalb der sich zwischen dem Lufteinlass und dem Luftauslass befindenden Mitte der Doppelfassade dient, kann sie auch als untere Heizvorrichtung bezeichnet werden. Dabei ist nicht erforderlich, dass die untere Heizvorrichtung ein Wärmetauscher oder eine Wärmepumpe ist. So kann die untere Heizvorrichtung auch nach einem anderen Prinzip funktionieren. Beispielsweise kann die untere Heizvorrichtung eine elektrische Heizvorrichtung oder eine mit Öl oder Gas betriebene Heizvorrichtung sein.

Unabhängig davon, nach welchem Prinzip die untere Heizvorrichtung funktioniert, hat die untere Heizvorrichtung den Vorteil, dass Luft, welche sich im Fassadenzwischenraum unterhalb dieser Mitte der Doppelfassade befindet, bei Bedarf erwärmt werden kann. Dadurch kann bei Bedarf die Temperatur T₁ der Luft in einem Bereich des Lufteinlasses erhöht und der Kamineffekt und somit der Luftstrom verstärkt werden. Entsprechend wird dadurch eine aktive Steuerung des Kamineffekts und somit des Luftstroms ermöglicht.

Falls die untere Heizvorrichtung eine Wärmetauscher oder eine Wärmepumpe ist, so bildet vorzugsweise ein Fluid, insbesondere Luft oder Wasser, aus einem Inneren des Hochbaus ein Reservoir thermischer Energie, wobei durch diese thermische Energie der Luftstrom mit dem Wärmetauscher bzw. der Wärmepumpe erwärmbar ist. Dies hat den Vorteil, dass mittels dem Fluid, bzw. Luft oder Wasser, aus dem Inneren des Hochbaus das Innere des Hochbaus gekühlt werden kann. Dies kann zur Kühlung einer Apparatur im Hochbau oder zur Klimatisierung des Hochbaus verwendet werden.

Alternativ zu diesen Varianten besteht auch die Möglichkeit, dass die Doppelfassadenanordnung keine solche untere Heizvorrichtung umfasst.

Vorzugsweise umfasst die Doppelfassadenanordnung eine Temperiervorrichtung, insbesondere einen Wärmetauscher oder eine Wärmepumpe, zum Kühlen und/oder Heizen des Luftstroms im Fassadenzwischenraum oberhalb der sich zwischen dem Lufteinlass und dem Luftauslass befindenden Mitte der Doppelfassade.

Im Falle eines Wärmetauschers oder einer Wärmepumpe als Temperiervorrichtung bildet vorzugsweise ein Fluid aus dem Inneren des Hochbaus eine Senke bzw. ein Reservoir thermischer Energie, mittels welcher der Luftstrom mit dem Wärmetauscher bzw. der Wärmepumpe kühlbar bzw. erwärmbar ist. Falls der Luftstrom mit der Temperiervorrichtung kühlbar ist, so ist das Fluid aufgrund der beim Kühlen des Luftstroms dem Fluid zugeführten thermischen Energie vorzugsweise zum Heizen des Inneren des Hochbaus verwendbar. Falls der Luftstrom mit der Temperiervorrichtung erwärmbar ist, so ist das Fluid aufgrund der beim Erwärmen des Luftstroms dem Fluid entzogenen thermischen Energie vorzugsweise zum Kühlen des Inneren des Hochbaus verwendbar. In beiden Fällen ist das Fluid aus dem Inneren des Hochbaus vorzugsweise Luft oder Wasser.

Unabhängig davon, ob die Temperiervorrichtung ein Wärmetauscher oder eine Wärmepumpe ist oder nicht, hat die Temperiervorrichtung den Vorteil, dass sie eine aktive Steuerung des Kamineffekts und somit des Luftstroms ermöglicht. Wenn die Temperiervorrichtung zum Kühlen des Luftstroms im Fassadenzwischenraum oberhalb der sich zwischen dem Lufteinlass und dem Luftauslass befindenden Mitte der Doppelfassade geeignet ist, so wird der Vorteil erreicht, dass die Luft, welche sich im Fassadenzwischenraum oberhalb dieser Mitte der Aussenfassade befindet, bei Bedarf gekühlt werden kann, womit die Temperatur T₂ der Luft im Bereich des Luftauslasses reduziert wird. Falls die Temperatur T₂ der Luft im Bereich des Luftauslasses dabei immer noch grösser ist als die Temperatur T_{U} der Umgebungsluft kann dadurch der Kamineffekt und somit der Luftstrom verstärkt werden, indem der Temperaturunterschied zwischen der Temperatur T₁ der Luft im Bereich des Lufteinlasses und der Temperatur T₂ im Bereich des Luftauslasses vergrössert wird.

Wenn die Temperiervorrichtung zum Heizen des Luftstroms im Fassadenzwischenraum oberhalb der sich zwischen dem Lufteinlass und dem Luftauslass befindenden Mitte der Doppelfassade geeignet ist, so wird der Vorteil erreicht, dass die Luft, welche sich im Fassadenzwischenraum oberhalb dieser Mitte der Aussenfassade befindet, bei Bedarf geheizt werden kann, womit die Temperatur T₂ der Luft in einem Bereich des Luftauslasses erhöht wird. Dadurch kann sichergestellt werden, dass die Temperatur T₂ der Luft im Bereich des Luftauslasses grösser ist als die Temperatur T_{U} der Umgebungsluft ist womit der Kamineffekt und der Luftstrom auf einfache Art und Weise erhalten werden kann

Wenn die Temperiervorrichtung sowohl zum Kühlen als auch zum Heizen des Luftstroms im Fassadenzwischenraum oberhalb der sich zwischen dem Lufteinlass und dem Luftauslass befindenden Mitte der Doppelfassade geeignet ist, so können beide vorgenannten Vorteile erreicht werden.

Alternativ zu diesen Varianten besteht aber auch die Möglichkeit, dass die Doppelfassadenanordnung keine solche Temperiervorrichtung umfasst.

Bevorzugt umfasst die Doppelfassadenanordnung eine Propellervorrichtung mit einem im Fassadenzwischenraum angeordneten Propeller zum Verhindern einer nach unten gerichteten Strömung und damit zur Ausbildung einer vertikal nach oben gerichteten Strömung des Luftstroms durch Steuerung eines Drehwiderstands des Propellers. Dies hat den Vorteil, dass eine gleichmässigere Strömung des Luftstroms erreicht werden kann. Dabei ist nicht erforderlich, dass mit der Propellervorrichtung elektrische Energie erzeugt werden kann. Vielmehr weist der Propeller ein Drehmoment auf, welches von der Strömungsenergie der Luft überwunden werden muss, damit die Luft am Propeller vorbei abwärts strömen kann. Dabei kann die Propellervorrichtung einen Antrieb aufweisen, um den Propeller in Bewegung zu setzen und damit anfänglich das Drehmoment des Propellers zu erzeugen.

Alternativ dazu besteht auch die Möglichkeit, dass die Doppelfassadenanordnung keine solche Propellervorrichtung aufweist.

Vorteilhafterweise umfasst die Doppelfassadenanordnung wenigstens eine Klappe und/oder wenigstens einen Schieber zur Regulierung des Luftstroms. Dies hat den Vorteil, dass eine Stärke des Luftstroms optimal gesteuert werden kann. Zudem kann durch wenigstens eine solche Klappe und/oder wenigstens einen solchen Schieber auch zur Frischluft-Zufuhr in den Hochbau bzw. zur Entsorgung von Abluft aus dem Hochbau genutzt werden.

Alternativ dazu besteht auch die Möglichkeit, dass die Doppelfassadenanordnung keine Klappe und keinen Schieber zur Regulierung des Luftstroms umfasst.

Vorzugsweise umfasst die Doppelfassadenanordnung ein mechanisches, verstellbares Abschattungssystem, insbesondere Rollläden und/oder Storen. Dies hat den Vorteil, dass die Menge an Sonneneinstrahlung, welche in den Fassadenzwischenraum gelangt, gesteuert werden kann, wodurch die Stärke des Luftstroms gesteuert werden kann. Zudem kann dadurch auch bei Bedarf das Innere des Hochbaus vor direkter Sonneneinstrahlung geschützt werden. Um diese Vorteile zu erlangen, ist unerheblich, ob das Abschattungssystem rein mechanisch funktioniert oder ob das Abschattungssystem einen oder mehrere elektrische Antriebe sowie allenfalls eine elektrische Steuerung aufweist. Zudem ist unerheblich, ob das Abschattungssystem Bestandteil einer Zwischenfassade ist, eine Zwischenfassade bildet oder an der Innenfassade oder an der Aussenfassade angeordnet ist.

Alternativ dazu besteht auch die Möglichkeit, dass die Doppelfassadenanordnung kein solches mechanisches Abschattungssystem umfasst.

Bevorzugt weist die Doppelfassadenanordnung im Bereich des Luftauslasses einen Zugverstärker auf, um den Luftstrom aktiv zu verstärken. Besonders bevorzugt ist der Zugverstärker durch Wind in der Umgebungsluft antreibbar. Dies hat den Vorteil, dass der Luftstrom konstant erhalten werden kann.

Alternativ dazu besteht aber auch die Möglichkeit, dass die Doppelfassadenanordnung keinen solchen Zugverstärker aufweist.

Vorteilhafterweise umfasst die Doppelfassadenanordnung eine Turbine mit einem im Fassadenzwischenraum angeordneten Turbinenrad zur Gewinnung von elektrischer Energie. Dies hat den Vorteil, dass auf einfache Art und Weise mit dem Luftstrom auch elektrische Energie gewonnen werden kann.

Alternativ dazu besteht aber auch die Möglichkeit, dass die Doppelfassadenanordnung keine solche Turbine umfasst.

Bevorzugt umfasst die Doppelfassadenanordnung wenigstens ein Photovoltaikmodul zur Gewinnung von elektrischer Energie. Bevorzugt ist dieses wenigstens eine Photovoltaikmodul an oder auf der Aussenfassade angeordnet. Alternativ dazu besteht aber auch die Möglichkeit, dass das wenigstens eine Photovoltaikmodul im Fassadenzwischenraum, an oder auf der Innenfassade oder an einer anderen Position des Hochbaus angeordnet ist.

Alternativ dazu besteht aber auch die Möglichkeit, dass die Doppelfassadenanordnung kein Photovoltaikmodul zur Gewinnung von elektrischer Energie aufweist.

Falls die Doppelfassadenanordnung eine Turbine mit einem im Fassadenzwischenraum angeordneten Turbinenrad zur Gewinnung von elektrischer Energie und/oder wenigstens ein Photovoltaikmodul zur Gewinnung von elektrischer Energie aufweist, so hat dies den Vorteil, dass mit dieser elektrischen Energie Elemente der Doppelfassadenanordnung angetrieben und/oder gesteuert werden können. Solche Elemente sind Schieber und/oder Klappen, der Zugverstärker, die untere Heizvorrichtung, die Temperiervorrichtung, das mechanische, verstellbare Abschattungssystem, elektrochrome Beschichtungen sowie elektrochrome Zwischenlagen. Um die Verwendung der elektrischen Energie für den Antrieb bzw. die Steuerung derartiger Elemente auch in der Nacht sowie bei wenig Sonnenstrahlung zu ermöglichen, weist die Doppelfassadenanordnung in diesem Fall bevorzugt einen Speicher für elektrische Energie wie beispielsweise eine Batterie auf.

Vorteilhafterweise weist in einem Anteil von wenigstens 70% einer Fläche der Doppelfassade ein Abstand zwischen der Aussenfassade und der Innenfassade einen Wert in einem Bereich von 30 cm bis 150 cm, besonders bevorzugt von 50 cm bis 120 cm auf. Dies hat den Vorteil, dass der Fassadenzwischenraum ausreichend breit ist, das der Luftstrom mittels Kamineffekt erzeugt und erhalten werden kann und dass der Luftstrom ausreichen stark ist, sodass die Kohlendioxidabscheidevorrichtung mit ausreichend Luft des Luftstroms zugeführt erhält, um zumindest einen Teil des Kohlendioxids aus dieser Luft abzuscheiden. Gleichzeitig hat dies den Vorteil, dass der Fassadenzwischenraum nicht zu breit ist, sodass die Doppelfassade nicht zu viel Raum um den Hochbau beansprucht und sodass sich Personen im Inneren des Hochbaus nicht durch die Doppelfassade von der Umgebung des Hochbaus isoliert fühlen.

Alternativ dazu besteht auch die Möglichkeit, dass nicht in wenigstens 70% einer Fläche der Doppelfassade ein Abstand zwischen der Aussenfassade und der Innenfassade und damit eine Dimensionen des Fassadenzwischenraumes in einem Bereich von 30 cm bis 150 cm liegt.

Bevorzugt ist der Fassadenzwischenraum hyperbolisch geformt und weist eine zwischen dem Lufteinlass und dem Luftauslass angeordnete Taillenstelle auf, wodurch der Abstand zwischen der Aussenfassade und der Innenfassade sowohl ausgehend vom Lufteinlass zur Taillenstelle hin als auch ausgehend vom Luftauslass zur Taillenstelle hin abnimmt. Dabei ist unerheblich, ob sowohl die Aussenfassade als auch die Innenfassade hyperbolisch geformt sind oder ob nur die Aussenfassade oder nur die Innenfassade hyperbolisch geformt ist. Dies hat den Vorteil, dass der Luftstrom zusätzlich verstärkt wird.

Im Falle eines derart hyperbolisch geformten Fassadenzwischenraumes liegt der Abstand zwischen der Aussenfassade und der Innenfassade in wenigstens 70% der Fläche der Doppelfassade zwischen dem Lufteinlass und dem Luftauslass bevorzugt in einem Bereich von 30 cm bis 150 cm, besonders bevorzugt von 50 cm bis 120 cm. Damit werden die bereits genannten Vorteile dieses Abstands zwischen der Aussenfassade und der Innenfassade erreicht.

Es besteht aber auch die Möglichkeit, dass der Fassadenzwischenraum hyperbolisch geformt ist und dass der Abstand zwischen der Aussenfassade und der Innenfassade nicht in wenigstens 70% der Fläche der Doppelfassade zwischen dem Lufteinlass und dem Luftauslass in einem Bereich von 30 cm bis 150 cm liegt.

Alternativ zu diesen Varianten besteht auch die Möglichkeit, dass der Fassadenzwischenraum nicht hyperbolisch geformt ist. Beispielsweise kann der Abstand zwischen der Aussenfassade und der Innenfassade zwischen Lufteinlass und Luftauslass im Wesentlichen konstant gleich sein. Das bedeutet bevorzugt, dass der Abstand zwischen der Aussenfassade und der Innenfassade in wenigstens 70% der Fläche der Doppelfassade zwischen dem Lufteinlass und dem Luftauslass gleich ist.

In einer ersten bevorzugten Variante ist der Lufteinlass wenigstens zwei Meter, bevorzugt wenigstens drei Meter, besonders bevorzugt wenigstens vier Meter über einem den Hochbau umgebenden und direkt an den Hochbau anschliessenden Boden direkt an der Doppelfassade angeordnet und verbindet somit die Umgebung des Hochbaus mit dem Fassadenzwischenraum. Dies hat den Vorteil, dass Umgebungsluft, welche mit dem Luftstrom durch den Lufteinlass in den Fassadenzwischenraum gelangt, weniger Staub, Dreck und Aerosolpartikel, welche beispielsweise durch Strassenverkehr entstehen, enthält. Entsprechend gelangt dadurch weniger Staub, Dreck und Aerosolpartikel in den Fassadenzwischenraum, womit der Unterhalt der Doppelfassadenanordnung gesenkt werden kann. Dieser Vorteil wird grösser, je weiter der Lufteinlass über dem den Hochbau umgebenden und direkt an den Hochbau anschliessenden Boden angeordnet ist.

In einer zweiten bevorzugten Variante umfasst die Doppelfassadenanordnung eine Luftleitung, welche mit dem Lufteinlass verbunden ist, wobei Umgebungsluft durch die Luftleitung via den Lufteinlass in den Fassadenzwischenraum führbar ist, wobei die Luftleitung einen Einlass umfasst, welcher in den den Hochbau umgebenden Boden führt und durch welchen Umgebungsluft aus der Umgebung des Hochbaus in die Luftleitung eingelassen werden kann. Besonders bevorzugt ist dieser Einlass in oder neben einer neben dem Hochbau verlaufenden Strasse, angeordnet, um Abgase vom Strassenverkehr von der Strasse nach unten in den Boden wegzusaugen und durch die Luftleitung via den Lufteinlass in den Fassadenzwischenraum der Doppelfassade zur Behandlung mit der Kohlendioxidabscheidevorrichtung zu führen. Dies hat den Vorteil, dass Staub, Dreck, Aerosolpartikel und Abgase, insbesondere Kohlendioxid, welche durch Strassenverkehr erzeugt werden, direkt abgesaugt und der Kohlendioxidabscheidevorrichtung zur Abscheidung des Kohlendioxids zugeführt werden können. Dadurch wird die Belastung von Fussgängern durch Luftschadstoffe in der Umgebung des Hochbaus reduziert.

In einer weiteren Variante ist der Lufteinlass weniger als zwei Meter über einem den Hochbau umgebenden und direkt an den Hochbau anschliessenden Boden direkt an der Doppelfassade angeordnet und verbindet somit die Umgebung des Hochbaus mit dem Fassadenzwischenraum.

In einer weiteren Variante umfasst die Doppelfassadenanordnung eine Luftleitung, welche mit dem Lufteinlass verbunden ist, wobei Umgebungsluft durch die Luftleitung via den Lufteinlass in den Fassadenzwischenraum führbar ist, wobei die Luftleitung einen Einlass umfasst, durch welchen Umgebungsluft aus der Umgebung des Hochbaus in die Luftleitung eingelassen werden kann, wobei der Einlass in einem in der Umgebung des Hochbaus angeordneten, weiteren Hochbau angeordnet ist.

Vorteilhafterweise umfasst ein Hochbau, insbesondere ein Gebäude, eine Brückenstütze, ein Brückenpfeiler oder eine Lärmschutzwand, eine erfindungsgemässe Doppelfassadenanordnung.

Bei diesem Hochbau ist der Luftauslass der Doppelfassadenanordnung bevorzugt mit einem Gebäudeinnenraum in einem Inneren des Hochbaus verbunden, um den durch den Luftauslass aus dem Fassadenzwischenraum ausströmenden Luftstrom aufzunehmen und auf eine Temperatur T_{I}, welche kleiner als die Temperatur T₂ des Luftstroms im Bereich des Luftauslasses ist, zu kühlen. Dies hat den Vorteil, dass, auch wenn die Temperatur T₂ des Luftstroms im Bereich des Luftauslasses tiefer als die Temperatur T_{U} der Luft in der Umgebung des Hochbaus ist, der Kamineffekt und damit der Luftstrom optimal erzielt und erhalten werden kann.

Vorzugsweise ist der Gebäudeinnenraum thermisch isoliert. Bevorzugt bedeutet dies, dass eine den der Gebäudeinnenraum unmittelbar umhüllende Wandung eine Isolationsschicht umfasst. Durch die thermische Isolierung kann erreicht werden, dass die Temperatur T_{I} im Gebäudeinnenraum kleiner als die Temperatur T₂ des Luftstroms im Bereich des Luftauslasses ist. Dadurch kann wiederum erreicht werden, dass ein Luftdruck im Gebäudeinnenraum kleiner als ein Luftdruck in einer Umgebung des Hochbaus und damit einer Umgebungsluft ist. Entsprechend kann dadurch der Kamineffekt und damit der Luftstrom optimal erzielt und erhalten werden.

Alternativ dazu ist der Gebäudeinnenraum nicht thermisch isoliert.

Vorzugsweise umfasst der Hochbau eine Kühlvorrichtung, mit welcher der Gebäudeinnenraum kühlbar ist. Dadurch kann sichergestellt werden, dass die Temperatur T_{I} im Gebäudeinnenraum kleiner als die Temperatur T₂ des Luftstroms im Bereich des Luftauslasses ist, womit auch sichergestellt werden kann, dass der Luftdruck im Gebäudeinnenraum kleiner als der Luftdruck in der Umgebung des Hochbaus und damit der Umgebungsluft ist. Um einen Energieverbrauch der Kühlvorrichtung zu reduzieren ist der Gebäudeinnenraum zudem bevorzugt thermisch isoliert. Unter Verzicht auf die Energieverbrauchsersparnis kann der Gebäudeinnenraum aber auch nicht thermisch isoliert sein.

Alternativ dazu besteht auch die Möglichkeit, dass der Hochbau keine Kühlvorrichtung umfasst, mit welcher der Gebäudeinnenraum kühlbar ist.

Vorzugweise ist ein Volumen des Gebäudeinnenraums grösser als ein Volumen des Fassadenzwischenraums. Dies hat den Vorteil, dass eine adiabatische Expansion der Luft im Gebäudeinnenraum ermöglicht wird, wodurch die Luft im Gebäudeinnenraum kühler als im Fassadenzwischenraum wird. Entsprechend kann damit erreicht werden, dass die Temperatur T_{I} im Gebäudeinnenraum kleiner als die Temperatur T₂ des Luftstroms im Bereich des Luftauslasses ist. Dadurch kann wiederum erreicht werden, dass ein Luftdruck im Gebäudeinnenraum kleiner als ein Luftdruck in einer Umgebung des Hochbaus und damit einer Umgebungsluft ist. Entsprechend kann dadurch der Kamineffekt und damit der Luftstrom optimal erzielt und erhalten werden.

In einer Variante dazu besteht aber auch die Möglichkeit, dass das Volumen des Gebäudeinnenraums gleich gross wie oder kleiner als das Volumen des Fassadenzwischenraums ist.

Als Alternative kann der Luftauslass der Doppelfassadenanordnung auch nicht mit einem Gebäudeinnenraum in einem Inneren des Hochbaus verbunden sein, um den durch den Luftauslass aus dem Fassadenzwischenraum ausströmenden Luftstrom aufzunehmen und auf eine Temperatur T_{I}, welche kleiner als die Temperatur T₂ des Luftstroms im Bereich des Luftauslasses ist, zu kühlen.

Vorteilhafterweise wird eine erfindungsgemässe Doppelfassadenanordnung zur Erzeugung eines vertikal gerichteten Luftstroms mittels Kamineffekt und zur Abscheidung von Kohlendioxid aus der Luft des Luftstroms verwendet. In einer Bevorzugten Variante dazu wird ein vorgehend beschriebener Hochbau, insbesondere ein Gebäude, eine Brückenstütze oder ein Brückenpfeiler, mit einer erfindungsgemässen Doppelfassadenanordnung zur Erzeugung eines vertikal gerichteten Luftstroms mittels Kamineffekt und zur Abscheidung von Kohlendioxid aus der Luft des Luftstroms verwendet.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine vereinfachte, schematische Darstellung eines Querschnitts durch einen Hochbau mit einer erfindungsgemässen Doppelfassadenanordnung,
- Fig. 2: eine vereinfachte, schematische Darstellung eines Querschnitts durch einen weiteren Hochbau mit einer weiteren erfindungsgemässen Doppelfassadenanordnung,
- Fig. 3: eine vereinfachte, schematische Darstellung eines Querschnitts durch einen weiteren Hochbau mit einer weiteren erfindungsgemässen Doppelfassadenanordnung,
- Fig. 4: eine vereinfachte, schematische Darstellung eines Querschnitts durch einen weiteren Hochbau mit einer weiteren erfindungsgemässen Doppelfassadenanordnung, und
- Fig. 5a, b: je eine vereinfachte, schematische Darstellung eines Querschnitts durch eine Variante einer Kohlendioxidabscheidevorrichtung.

Grundsätzlich sind in den Figuren gleiche Teile mit gleichen Bezugszeichen versehen.

### Wege zur Ausführung der Erfindung

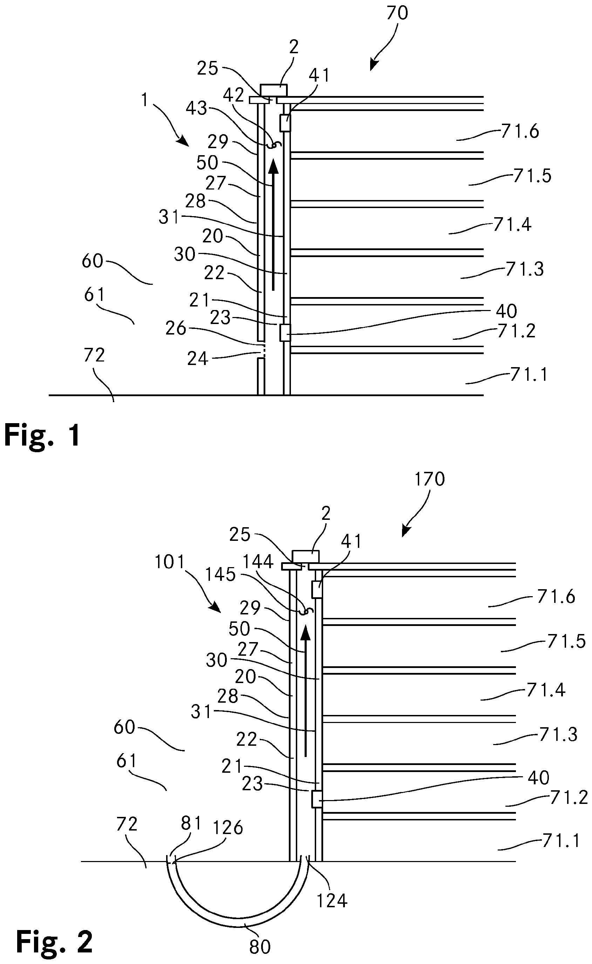

Figur 1 zeigt eine vereinfachte, schematische Darstellung eines Querschnitts durch einen Hochbau 70 mit einer erfindungsgemässen Doppelfassadenanordnung 1 mit einer Doppelfassade 20 zur Erzeugung eines vertikal gerichteten Luftstroms 50 mittels Kamineffekt und einer Kohlendioxidabscheidevorrichtung 2 zum Abscheiden zumindest eines Teils des Kohlendioxids aus der Luft des Luftstroms 50. Dabei ist der dargestellte Querschnitt vertikal und rechtwinklig zu einer Aussenfläche der Doppelfassade 20 ausgerichtet und verläuft durch die Doppelfassade 20. Zudem ist im Querschnitt auch ein Teil eines Inneren des Hochbaus 70 gezeigt. Allerdings zeigt die Darstellung nicht den vollen Querschnitt durch den gesamten Hochbau 70, sondern endet auf der rechten Seite der Figur 1 inmitten des Hochbaus 100. Der Grund dafür ist, dass inmitten des Hochbaus 70 keine weiteren Elemente der Doppelfassadenanordnung 1 mehr angeordnet sind und somit eine Darstellung dieses Teils des Hochbaus 70 überflüssig ist.

Im vorliegenden Beispiel ist der Hochbau 70 ein Bürohochbau mit sechs Stockwerken 101.1, 101.6. Der Bürohochbau kann aber auch eine beliebige andere Anzahl Stockwerke aufweisen. Zudem ist der Hochbau 70 nicht auf einen Bürohochbau eingeschränkt. So kann der Hochbau 70 auch ein Wohn- oder Hotelhochbau sein. Genauso kann er aber auch ein Industriebau, ein Konferenzzentrum, ein Stadion, ein Silo oder ein beliebiges anderes Gebäude sein. Auch kann der Hochbau 70 ein Brückenpfeiler oder eine Brückenstütze sein.

Unabhängig vom Typ des Hochbaus 70 umfasst die Doppelfassadenanordnung 1 wie bereits erwähnt die Doppelfassade 20 zur Erzeugung des vertikal gerichteten Luftstroms 50 mittels Kamineffekt sowie die Kohlendioxidabscheidevorrichtung 2 zum Abscheiden zumindest eines Teils des Kohlendioxids aus der Luft des Luftstroms 50. Diese Kohlendioxidabscheidevorrichtung 2 ist zugleich eine Stickoxidabscheidevorrichtung zum Abscheiden zumindest eines Teils der Stickoxide aus der Luft des Luftstroms 50 sowie eine Schwefeloxidabscheidevorrichtung zum Abscheiden zumindest eines Teils der Schwefeloxide aus der Luft des Luftstroms 50. Dabei umfasst die Doppelfassade 20 eine Innenfassade 21 und eine Aussenfassade 22. Zwischen dieser Innenfassade 21 und dieser Aussenfassade 22 besteht ein Fassadenzwischenraum 23 zur Führung des Luftstroms 50. Hierzu grenzt die Innenfassade 21 den Fassadenzwischenraum 23 zum restlichen Hochbau 70 hin ab, während die Aussenfassade 22 den Fassadenzwischenraum 23 zu einer Umgebung 60 des Hochbaus 70 hin abgrenzt. In einem Anteil von 70% einer Fläche der Doppelfassade 20 weist ein Abstand zwischen der Aussenfassade 22 und der Innenfassade 21 einen Wert von 100 cm auf. Dieser Abstand kann aber auch andere Werte aufweisen. In beispielhaften Varianten beträgt der Abstand 31 cm, 45 cm, 50 cm, 120 cm, 130 cm bzw. 150 cm.

Weiter umfasst die Doppelfassade 20 einen Lufteinlass 24 zum Einlassen des Luftstroms 50 mit Luft aus der Umgebung 60 des Hochbaus 70 und damit mit Umgebungsluft 61 in den Fassadenzwischenraum 23. Damit mit dem Luftstrom 50 nicht zu viel Russ und Dreck und Feinpartikel in den Fassadenzwischenraum 23 gelangen, ist im Lufteinlass 24 ein Partikelfilter 26 zum Herausfiltern von Aerosolpartikeln aus dem Luftstrom 50 angeordnet.

In der vorliegenden Ausführungsform ist der Lufteinlass 24 in der Aussenfassade 23 zwei Meter über einem den Hochbau 70 umgebenden und direkt an den Hochbau 70 anschliessenden Boden 72 in der Aussenfassade 22 angeordnet und verbindet somit die Umgebung 60 des Hochbaus 70 mit dem Fassadenzwischenraum 23. In Varianten dazu ist der Lufteinlass 24 noch höher angeordnet. So ist er in einer Variante drei Meter über dem Boden 72 angeordnet. In einer weiteren Variante hingegen ist er vier Meter über dem Boden angeordnet. Er kann aber auch noch höher angeordnet sein.

Oberhalb des Lufteinlasses 24 umfasst die Doppelfassade 20 einen Luftauslass 25 zum Auslassen zumindest eines Teils des Luftstroms 50 aus dem Fassadenzwischenraum 23. In der in Figur 1 gezeigten Ausführungsform dient der Luftauslass 25 zum Auslassen des gesamten Luftstroms 50 aus dem Fassadenzwischenraum 23. Allerdings besteht auch die Möglichkeit, dass die Aussenfassade 22 im Bereich des Luftauslasses 25 zusätzlich Klappen oder Schieber zur Regulierung des Luftstroms 50 aufweist, mit welchen beispielsweise weitere Öffnungen in der Aussenfassade 22 geöffnet werden können. In diesem Fall dient der Luftauslass 25 nur zum Auslassen eines Teils des Luftstroms 50 aus dem Fassadenzwischenraum 23, da der restliche Teil des Luftstroms 50 durch die weiteren Öffnungen aus dem Fassadenzwischenraum 23 austreten kann.

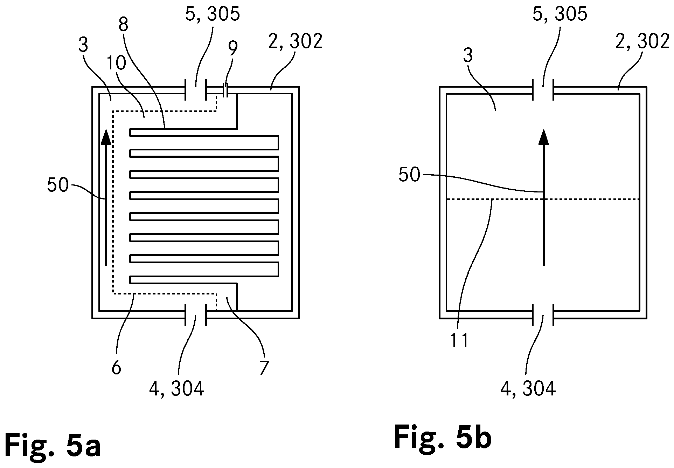

In der in Figur 1 gezeigten Ausführungsform ist der Luftauslass 25 an einem oberen Ende des Fassadenzwischenraums 23 angeordnet. Gerade an den Luftauslass 25 anschliessend ist über dem Luftauslass 25 die Kohlendioxidabscheidevorrichtung 2 angeordnet. Wie in den Figuren 5a und 5b in zwei Varianten etwas detaillierter dargestellt, weist die Kohlendioxidabscheidevorrichtung 2 einen Innenraum 3 sowie einen Luftstromlufteinlass 4 zum Einlassen zumindest eines Teils des Luftstroms 50 auf. In dieser Anordnung fliesst der gesamte Anteil des Luftstroms 50, welcher durch den Luftauslass 25 aus dem Fassadenzwischenraum 23 fliesst, durch den Luftstromlufteinlass 4 in den Innenraum 3 der Kohlendioxidabscheidevorrichtung 2 zur Abscheidung des Kohlendioxids. Weiter umfasst die Kohlendioxidabscheidevorrichtung 2 einen Luftstromluftauslass 5 zum Auslassen der in den Innenraum 3 der Kohlendioxidabscheidevorrichtung 2 gelangten Luft in die Umgebung 60 des Hochbaus 100.

Die Aussenfassade 22 ist eine Glasfassade und umfasst Aussenfassadenglas 27. Dabei ist 99% einer zur Umgebung 60 weisenden Oberfläche der Aussenfassade 22 durch Aussenfassadenglas 27 gebildet. In Varianten davon ist ein anderer Anteil der Oberfläche der Aussenfassade 22 durch Aussenfassadenglas 27 gebildet. So ist in einer Variante 70% der Oberfläche der Aussenfassade 22 durch Aussenfassadenglas 27 gebildet. In einer weiteren Variante ist 80% der Oberfläche der Aussenfassade 22 durch Aussenfassadenglas 27 gebildet. In einer weiteren Variante ist 90% Oberfläche der Aussenfassade 22 durch Aussenfassadenglas 27 gebildet.

Da die Aussenfassade 22 eine Glasfassade ist, dringt bei Tageslicht bzw. Sonnenlicht durch die Aussenfassade 22 in den Fassadenzwischenraum 23. Das bedeutet, dass je nach Sonnenstand und Ausrichtung der Doppelfassade 20 direkte Sonnenstrahlung oder indirekte Sonnenstrahlung durch die Aussenfassade 22 in den Fassadenzwischenraum 23 dringt. Durch diese direkte bzw. indirekte Sonnenstrahlung wird die Luft im Fassadenzwischenraum 23 erwärmt, womit ein Kamineffekt in Gang gesetzt und entsprechend der Luftstrom 50 erzeugt und erhalten wird.

Um mittels Kamineffekt den vertikal gerichteten Luftstrom 50 zu erzeugen, ist entweder eine Temperatur T₁ des Luftstroms 50 in einem Bereich des Lufteinlasses 24 und damit in einem unteren Bereich des Fassadenzwischenraums 23 grösser als eine Temperatur T₂ des Luftstroms 50 in einem Bereich des Luftauslasses 25 und damit in einem oberen Bereich des Fassadenzwischenraums 23 oder die Temperatur T₁ des Luftstroms im Bereich des Lufteinlasses 24 ist gleich wie die Temperatur T₂ des Luftstroms 50 im Bereich des Luftauslasses 25, wobei die Temperatur T₁ des Luftstroms 50 im Bereich des Lufteinlasses 24 und die Temperatur T₂ des Luftstroms 50 im Bereich des Luftauslasses 25 grösser als eine Temperatur T_{U} der Luft in der Umgebung 60 des Hochbaus 70 und damit der Umgebungsluft 61 ist. Im ersten Fall wird der Luftstrom 50 zusätzlich verstärkt, wenn zudem die Temperatur T₁ des Luftstroms 50 im Bereich des Lufteinlasses 24 grösser als die Temperatur T_{U} der Umgebungsluft 61 ist. Weiter wird im ersten Fall der Luftstrom 50 verstärkt, wenn die Temperatur T₂ des Luftstroms 50 im Bereich des Luftauslasses 25 grösser als die Temperatur T_{U} der Umgebungsluft 50 ist.

Unterhalb einer sich zwischen dem Lufteinlass 24 und dem Luftauslass 25 befindenden Mitte 28 der Doppelfassade 20 ist 50% des Aussenfassadenglases 27 Weissglas. Dadurch gelangt unterhalb der Mitte 28 der Doppelfassade 20 mehr Sonnenstrahlung in den Fassadenzwischenraum 23 und zur Innenfassade 21. Entsprechend wird Luft, welche sich im Fassadenzwischenraum 23 unterhalb der Mitte 28 der Doppelfassade 20 befindet, bei Sonneneinstrahlung stärker erwärmt, womit die Temperatur T₁ der Luft im Bereich des Lufteinlasses 24 erhöht wird. Dadurch wird der Kamineffekt und somit der Luftstrom 50 verstärkt. In Varianten davon kann der Anteil Weissglas am Aussenfassadenglas 27 auch anders gewählt sein. So ist in beispielhaften Varianten unterhalb der sich zwischen dem Lufteinlass 24 und dem Luftauslass 25 befindenden Mitte 28 der Doppelfassade 20 60%, 70%, 80%, 90% oder 100% des Aussenfassadenglases 27 Weissglas. In einer weiteren Variante hingegen ist kein Aussenfassadenglas 27 unterhalb der sich zwischen dem Lufteinlass 24 und dem Luftauslass 25 befindenden Mitte 28 der Doppelfassade 20 Weissglas.

Oberhalb der sich zwischen dem Lufteinlass 24 und dem Luftauslass 25 befindenden Mitte 28 der Doppelfassade 20 ist 10% des Aussenfassadenglases 27 sonnenstrahlenabsorbierend. In einer Variante davon ist 50% des Aussenfassadenglases 27 Sonnenstrahlenabsorbierend. In einer weiteren Variante davon ist 100% des Aussenfassadenglases 27 sonnenstrahlenabsorbierend. In einer ersten Variante weist das sonnenstrahlenabsorbierende Aussenfassadenglas einen Eisenoxidgehalt von 0.3 Gewichtsprozent auf. In einer zweiten Variante weist das sonnenstrahlenabsorbierende Aussenfassadenglas einen Eisenoxidgehalt von 0.5 Gewichtsprozent auf. In einer dritten Variante weist das sonnenstrahlenabsorbierende Aussenfassadenglas einen Eisenoxidgehalt von 0.8 Gewichtsprozent auf. In einer vierten Variante weist das sonnenstrahlenabsorbierende Aussenfassadenglas einen Eisenoxidgehalt von 1.0 Gewichtsprozent auf. In Varianten von diesen Varianten liegt der Eisenoxidgehalt noch höher. In einer weiteren Variante weist oberhalb der sich zwischen dem Lufteinlass 24 und dem Luftauslass 25 befindenden Mitte 28 der Doppelfassade 20 das Aussenfassadenglas 27 einen Eisenoxidgehalt von höchstens 0.2 Gewichtsprozent oder gar kein Eisenoxid auf.

In einer Variante zu den vorgenannten Varianten mit sonnenstrahlenabsorbierendem Aussenfassadenglas 27 weist oberhalb der sich zwischen dem Lufteinlass 24 und dem Luftauslass 25 befindenden Mitte 28 der Doppelfassade 20 10% des Aussenfassadenglases 27 wenigstens zwei Lagen mit einer zwischen den wenigstens zwei Lagen angeordneten, sonnenstrahlenabsorbierenden Zwischenlage auf. Derartiges zweilagiges Glas mit einer sonnenstrahlenabsorbierenden Zwischenlage ist bekannt. In einer weiteren Variante weist oberhalb der sich zwischen dem Lufteinlass 24 und dem Luftauslass 25 befindenden Mitte 28 der Doppelfassade 20 50% des Aussenfassadenglases 27 wenigstens zwei Lagen mit einer zwischen den wenigstens zwei Lagen angeordneten, sonnenstrahlenabsorbierenden Zwischenlage auf. In einer weiteren Variante weist oberhalb der sich zwischen dem Lufteinlass 24 und dem Luftauslass 25 befindenden Mitte 28 der Doppelfassade 20 100% des Aussenfassadenglases 27 wenigstens zwei Lagen mit einer zwischen den wenigstens zwei Lagen angeordneten, sonnenstrahlenabsorbierenden Zwischenlage auf. Bei weiteren drei Varianten ist anstelle der sonnenstrahlenabsorbierenden Zwischenlage eine sonnenstrahlenreflektierende Zwischenlage eingesetzt. Derartige sonnenstrahlenreflektierende Zwischenlagen sind ebenfalls bekannt. In weiteren drei Varianten ist die Zwischenlage nicht nur sonnenstrahlenabsorbierend oder nur sonnenstrahlenreflektierend, sondern sowohl sonnenstrahlenabsorbierend als auch sonnenstrahlenreflektierend. Derartige sowohl sonnenstrahlenabsorbierende als auch sonnenstrahlenreflektierende Zwischenlagen sind ebenfalls bekannt. In weiteren Varianten weist oberhalb der sich zwischen dem Lufteinlass 24 und dem Luftauslass 25 befindenden Mitte 28 der Doppelfassade 20 der genannte Anteil des Aussenfassadenglases 27 einen Eisenoxidgehalt von mehr als 0.2 Gewichtsprozent auf und der genannte Anteil des Aussenfassadenglases 27 weist wenigstens zwei Lagen und eine dazwischen angeordnete, sonnenstrahlenabsorbierende, sonnenstrahlenreflektierende, oder sowohl sonnenstrahlenabsorbierende als auch sonnenstrahlenreflektierende Zwischenlage auf. Dabei kann Aussenfassadenglas 27 auch wenigstens zwei Lagen und eine derartige Zwischenlage sowie einen Eisenoxidgehalt von mehr als 0.2 Gewichtsprozent aufweisen. In diesem Fall reicht es aus, wenn eine der wenigstens zwei Lagen einen solchen Eisenoxidgehalt aufweist. Selbstverständlich können aber auch zwei oder alle der wenigstens zwei Lagen einen solchen Eisenoxidgehalt aufweisen, oder das Aussenfassadenglas kann einen erhöhten Anteil einer anderen Komponente als Eisenoxid enthalten, um die sonnenstrahlenabsorbierenden Eigenschaften des Aussenfassadenglases zu erreichen.

In allen diesen Varianten ist oberhalb der sich zwischen dem Lufteinlass 24 und dem Luftauslass 25 befindenden Mitte 28 der Doppelfassade 20 10%, bzw. 50% bzw. 100% des Aussenfassadenglases 27 sonnenstrahlenabsorbierend bzw. sonnenstrahlenreflektierend bzw. sowohl sonnenstrahlenabsorbierend als auch sonnenstrahlenreflektierend. Entsprechend dringt oberhalb der sich zwischen dem Lufteinlass 24 und dem Luftauslass 25 befindenden Mitte 28 der Doppelfassade 20 weniger Sonnenstrahlung in den Fassadenzwischenraum 23 und zur Innenfassade 21. Dadurch wird Luft, welche sich im Fassadenzwischenraum 23 oberhalb der Mitte 28 der Doppelfassade 20 befindet, bei Sonneneinstrahlung weniger stark erwärmt. Damit wird die Temperatur T₂ der Luft in einem Bereich des Luftauslasses 25 reduziert bzw. weniger stark erwärmt, womit der Kamineffekt und somit der Luftstrom 50 verstärkt wird.

In einer ersten Variante, welche den gleichen Effekt erzielt, weist oberhalb der sich zwischen dem Lufteinlass 24 und dem Luftauslass 25 befindenden Mitte 28 der Doppelfassade 20 10% des Aussenfassadenglases 27 eine sonnenstrahlenabsorbierende Aussenfassadenglasbeschichtung 29 auf. In einer zweiten Variante, welche ebenfalls den gleichen Effekt erzielt, weist oberhalb der sich zwischen dem Lufteinlass 24 und dem Luftauslass 25 befindenden Mitte 28 der Doppelfassade 20 50% des Aussenfassadenglases 27 eine sonnenstrahlenabsorbierende Aussenfassadenglasbeschichtung 29 auf. In einer dritten Variante, welche ebenfalls den gleichen Effekt erzielt, weist oberhalb der sich zwischen dem Lufteinlass 24 und dem Luftauslass 25 befindenden Mitte 28 der Doppelfassade 20 100% des Aussenfassadenglases 27 eine sonnenstrahlenabsorbierende Aussenfassadenglasbeschichtung 29 auf. In drei weiteren Varianten, welche den gleichen Effekt erzielen, weist oberhalb der sich zwischen dem Lufteinlass 24 und dem Luftauslass 25 befindenden Mitte 28 der Doppelfassade 20 10% bzw. 50% bzw. 100% des Aussenfassadenglases 27 eine sonnenstrahlenreflektierende Aussenfassadenglasbeschichtung 29 auf. In drei weiteren Varianten, welche den gleichen Effekt erzielen, weist oberhalb der sich zwischen dem Lufteinlass 24 und dem Luftauslass 25 befindenden Mitte 28 der Doppelfassade 20 10% bzw. 50% bzw. 100% des Aussenfassadenglases 27 eine sowohl sonnenstrahlenreflektierende als auch sonnenstrahlenreflektierende Aussenfassadenglasbeschichtung 29 auf.

Auch bei diesen neun Varianten ist oberhalb der sich zwischen dem Lufteinlass 24 und dem Luftauslass 25 befindenden Mitte 28 der Doppelfassade 20 10%, bzw. 50% bzw. 100% des Aussenfassadenglases 27 sonnenstrahlenabsorbierend bzw. sonnenstrahlenreflektierend bzw. sowohl sonnenstrahlenabsorbierend als auch sonnenstrahlenreflektierend.

Die vorgenannten neun Varianten mit einer Aussenfassadenglasbeschichtung 29 können für sich alleine, ohne die vorhergehenden Varianten, bei welchen Aussenfassadenglas 27 sonnenstrahlenabsorbierend ist und hierzu einen Eisenoxidgehalt von mehr als 0.2 Gewichtsprozent enthält bzw. wenigstens zwei Lagen mit einer zwischen den wenigstens zwei Lagen angeordneten, sonnenstrahlenabsorbierenden bzw. sonnenstrahlenreflektierenden Zwischenlage aufweist, bestehen. Sie können aber auch in Kombination mit einer der vorhergehenden Varianten, bei welchen Aussenfassadenglas 27 sonnenstrahlenabsorbierend ist und hierzu einen Eisenoxidgehalt von mehr als 0.2 bzw. wenigstens zwei Lagen mit einer zwischen den wenigstens zwei Lagen angeordneten, sonnenstrahlenabsorbierenden bzw. sonnenstrahlenreflektierenden Zwischenlage aufweist, bestehen. Grundsätzlich gilt dabei, dass der Kamineffekt und damit der Luftstrom 50 stärker verstärkt wird, je grösser der Anteil an sonnenstrahlenreflektierendem bzw. sonnenstrahlenabsorbierendem Aussenfassadenglas 27 oberhalb der Mitte 28 des Doppelfassade 20 ist.

In Varianten der vorgenannten Varianten mit Aussenfassadenglasbeschichtung 29 ist die Aussenfassadenglasbeschichtung 29 eine elektrochrome Beschichtung, welche bei Anlegen einer Spannung sonnenstrahlenabsorbierend wird. In weiteren Varianten der vorgenannten Varianten mit Aussenfassadenglasbeschichtung 29 ist die Aussenfassadenglasbeschichtung 29 eine elektrochrome Beschichtung, welche bei Anlegen einer Spannung sonnenstrahlenreflektierend wird. In weiteren Varianten der vorgenannten Varianten mit Aussenfassadenglasbeschichtung 29 ist die Aussenfassadenglasbeschichtung 29 eine thermochrome Beschichtung, welche mit zunehmender Temperatur zunehmend sonnenstrahlenabsorbierend wird. In weiteren Varianten der vorgenannten Varianten mit Aussenfassadenglasbeschichtung 29 ist die Aussenfassadenglasbeschichtung 29 eine thermochrome Beschichtung, welche mit zunehmender Temperatur zunehmend sonnenstrahlenreflektierend wird.

In Varianten der vorgenannten Varianten mit wenigstens zweilagigem Aussenfassadenglas 27 mit einer Zwischenlage ist die Zwischenlage eine elektrochrome Zwischenlage, welche bei Anlegen einer Spannung sonnenstrahlenabsorbierend wird. In weiteren Varianten der vorgenannten Varianten mit wenigstens zweilagigem Aussenfassadenglas 27 mit einer Zwischenlage ist die Zwischenlage eine elektrochrome Zwischenlage, welche bei Anlegen einer Spannung sonnenstrahlenreflektierend wird. In weiteren Varianten der vorgenannten Varianten mit wenigstens zweilagigem Aussenfassadenglas 27 mit einer Zwischenlage ist die Zwischenlage eine thermochrome Zwischenlage, welche mit zunehmender Temperatur zunehmend sonnenstrahlenabsorbierend wird. In weiteren Varianten der vorgenannten Varianten mit wenigstens zweilagigem Aussenfassadenglas 27 mit einer Zwischenlage ist die Zwischenlage eine thermochrome Zwischenlage, welche mit zunehmender Temperatur zunehmend sonnenstrahlenreflektierend wird.

Die Innenfassade 21 umfasst Innenfassadenglas 30. Dabei ist eine dem Fassadenzwischenraum 23 zugewandte Oberfläche der Innenfassade 21 zu 80% aus Innenfassadenglas 30 gebildet. In Varianten davon ist ein anderer Anteil dieser Oberfläche der Innenfassade 21 aus Innenfassadenglas 30 gebildet. So ist in einer Variante 70% der Oberfläche der Innenfassade 21 aus Innenfassadenglas 30 gebildet. In einer weiteren Variante ist 50% der Oberfläche der Innenfassade 21 aus Innenfassadenglas 30 gebildet. In einer weiteren Variante 30% ist der Oberfläche der Innenfassade 21 aus Innenfassadenglas 30 gebildet.

Unterhalb der sich zwischen dem Lufteinlass 24 und dem Luftauslass 25 befindenden Mitte 28 der Doppelfassade 20 ist 10% des Innenfassadenglases 30 sonnenstrahlenabsorbierend. In einer Variante davon ist 50% des Innenfassadenglases 30 sonnenstrahlenabsorbierend. In einer weiteren Variante davon ist 100% des Innenfassadenglases 30 sonnenstrahlenabsorbierend. In einer ersten Variante weist das sonnenstrahlenabsorbierende Innenfassadenglas einen Eisenoxidgehalt von 0.3 Gewichtsprozent auf. In einer zweiten Variante weist das sonnenstrahlenabsorbierende Innenfassadenglas einen Eisenoxidgehalt von 0.5 Gewichtsprozent auf. In einer dritten Variante weist das sonnenstrahlenabsorbierende Innenfassadenglas einen Eisenoxidgehalt von 0.8 Gewichtsprozent auf. In einer vierten Variante weist das sonnenstrahlenabsorbierende Innenfassadenglas einen Eisenoxidgehalt von 1.0 Gewichtsprozent auf. In weiteren Varianten besteht auch die Möglichkeit, dass der Eisenoxidgehalt höher liegt. In einer weiteren Variante weist unterhalb der sich zwischen dem Lufteinlass 24 und dem Luftauslass 25 befindenden Mitte 28 der Doppelfassade 20 das Innenfassadenglas 30 einen Eisenoxidgehalt von höchstens 0.2 Gewichtsprozent oder gar kein Eisenoxid auf.

In einer Variante zu den vorgenannten Varianten mit Innenfassadenglas 27 mit einen Eisenoxidgehalt von mehr als 0.2 Gewichtsprozent weist unterhalb der sich zwischen dem Lufteinlass 24 und dem Luftauslass 25 befindenden Mitte 28 der Doppelfassade 20 10% des Innenfassadenglases 30 wenigstens zwei Lagen mit einer zwischen den wenigstens zwei Lagen angeordneten, sonnenstrahlenabsorbierenden Zwischenlage auf. Derartiges zweilagiges Glas mit einer sonnenstrahlenabsorbierenden Zwischenlage ist bekannt. In einer weiteren Variante weist unterhalb der sich zwischen dem Lufteinlass 24 und dem Luftauslass 25 befindenden Mitte 28 der Doppelfassade 20 50% des Innenfassadenglases 30 wenigstens zwei Lagen mit einer zwischen den wenigstens zwei Lagen angeordneten, sonnenstrahlenabsorbierenden Zwischenlage auf. In einer weiteren Variante weist unterhalb der sich zwischen dem Lufteinlass 24 und dem Luftauslass 25 befindenden Mitte 28 der Doppelfassade 20 100% des Innenfassadenglases 30 wenigstens zwei Lagen mit einer zwischen den wenigstens zwei Lagen angeordneten, sonnenstrahlenabsorbierenden Zwischenlage auf. Bei weiteren drei Varianten ist anstelle der sonnenstrahlenabsorbierenden Zwischenlage eine sonnenstrahlenreflektierende Zwischenlage eingesetzt. Derartige sonnenstrahlenreflektierende Zwischenlagen sind ebenfalls bekannt. In weiteren drei Varianten ist die Zwischenlage nicht nur sonnenstrahlenabsorbierend oder nur sonnenstrahlenreflektierend, sondern sowohl sonnenstrahlenabsorbierend als auch sonnenstrahlenreflektierend. Derartige sowohl sonnenstrahlenabsorbierende als auch sonnenstrahlenreflektierende Zwischenlagen sind ebenfalls bekannt. In weiteren Varianten weist unterhalb der sich zwischen dem Lufteinlass 24 und dem Luftauslass 25 befindenden Mitte 28 der Doppelfassade 20 der genannte Anteil des Innenfassadenglases 30 einen Eisenoxidgehalt von mehr als 0.2 Gewichtsprozent auf und der genannte Anteil des Innenfassadenglases 30 weist wenigstens zwei Lagen und eine dazwischen angeordnete, sonnenstrahlenabsorbierende, sonnenstrahlenreflektierende, oder sowohl sonnenstrahlenabsorbierende als auch sonnenstrahlenreflektierende Zwischenlage auf. Dabei kann Innenfassadenglas 30 auch wenigstens zwei Lagen und eine derartige Zwischenlage sowie einen Eisenoxidgehalt von mehr als 0.2 Gewichtsprozent aufweisen. In diesem Fall reicht es aus, wenn eine der wenigstens zwei Lagen einen solchen Eisenoxidgehalt aufweist. Selbstverständlich können aber auch zwei oder alle der wenigstens zwei Lagen diesen Eisenoxidgehalt aufweisen.

In allen diesen Varianten ist unterhalb der sich zwischen dem Lufteinlass 24 und dem Luftauslass 25 befindenden Mitte 28 der Doppelfassade 20 10% bzw. 50% bzw. 100% des Innenfassadenglases 30 sonnenstrahlenabsorbierend bzw. sonnenstrahlenreflektierend bzw. sowohl sonnenstrahlenabsorbierend als auch sonnenstrahlenreflektierend. Entsprechend wird unterhalb der sich zwischen dem Lufteinlass 24 und dem Luftauslass 25 befindenden Mitte 28 der Doppelfassade 20 von der Innenfassade 21 mehr Sonnenstrahlung absorbiert bzw. reflektiert. Bei verstärkter Absorption wärmt sich die Innenfassade 21 stärker auf, womit Luft im Fassadenzwischenraum 23 stärker erwärmt wird. Bei verstärkter Reflexion hingegen wird mehr Sonnenstrahlung von der Innenfassade 21 zurück in den Fassadenzwischenraum 23 reflektiert, womit Luft im Fassadenzwischenraum 23 ebenfalls stärker erwärmt wird. Somit wird durch beide Effekte die Temperatur T₁ im Bereich des Lufteinlasses 24 stärker erhöht, womit der Kamineffekt und somit der Luftstrom 50 verstärkt wird.

In einer ersten Variante, welche den gleichen Effekt erzielt, weist unterhalb der sich zwischen dem Lufteinlass 24 und dem Luftauslass 25 befindenden Mitte 28 der Doppelfassade 20 10% des Innenfassadenglases 30 eine sonnenstrahlenabsorbierende Innenfassadenglasbeschichtung 31 auf. In einer zweiten Variante, welche ebenfalls den gleichen Effekt erzielt, weist unterhalb der sich zwischen dem Lufteinlass 24 und dem Luftauslass 25 befindenden Mitte 28 der Doppelfassade 20 50% des Innenfassadenglases 30 eine sonnenstrahlenabsorbierende Innenfassadenglasbeschichtung 31 auf. In einer dritten Variante, welche ebenfalls den gleichen Effekt erzielt, weist oberhalb der sich zwischen dem Lufteinlass 24 und dem Luftauslass 25 befindenden Mitte 28 der Doppelfassade 20 100% des Innenfassadenglases 30 eine sonnenstrahlenabsorbierende Innenfassadenglasbeschichtung 31 auf. In drei weiteren Varianten, welche den gleichen Effekt erzielen, weist unterhalb der sich zwischen dem Lufteinlass 24 und dem Luftauslass 25 befindenden Mitte 28 der Doppelfassade 20 10% bzw. 50% bzw. 100% des Innenfassadenglases 27 eine sonnenstrahlenreflektierende Innenfassadenglasbeschichtung 31 auf. In drei weiteren Varianten, welche den gleichen Effekt erzielen, weist unterhalb der sich zwischen dem Lufteinlass 24 und dem Luftauslass 25 befindenden Mitte 28 der Doppelfassade 20 10% bzw. 50% bzw. 100% des Innenfassadenglases 30 eine sowohl sonnenstrahlenreflektierende als auch sonnenstrahlenreflektierende Innenfassadenglasbeschichtung 31 auf.

Auch bei diesen neun Varianten ist unterhalb der sich zwischen dem Lufteinlass 24 und dem Luftauslass 25 befindenden Mitte 28 der Doppelfassade 20 10%, bzw. 50% bzw. 100% des Innenfassadenglases 30 sonnenstrahlenabsorbierend bzw. sonnenstrahlenreflektierend bzw. sowohl sonnenstrahlenabsorbierend als auch sonnenstrahlenreflektierend.

Die vorgenannten neun Varianten mit einer Innenfassadenglasbeschichtung 31 können für sich alleine, ohne die vorhergehenden Varianten, bei welchen Innenfassadenglas 30 sonnenstrahlenabsorbierend ist bzw. einen Eisenoxidgehalt von mehr als 0.2 Gewichtsprozent bzw. wenigstens zwei Lagen mit einer zwischen den wenigstens zwei Lagen angeordneten, sonnenstrahlenabsorbierenden bzw. sonnenstrahlenreflektierenden Zwischenlage aufweist, bestehen. Sie können aber auch in Kombination mit einer der vorgehenden Varianten, bei welchen Innenfassadenglas 30 einen Eisenoxidgehalt von mehr als 0.2 Gewichtsprozent bzw. wenigstens zwei Lagen mit einer zwischen den wenigstens zwei Lagen angeordneten, sonnenstrahlenabsorbierenden bzw. sonnenstrahlenreflektierenden Zwischenlage aufweist, bestehen. Grundsätzlich gilt dabei, dass der Kamineffekt und damit der Luftstrom 50 stärker verstärkt wird, je grösser der Anteil an sonnenstrahlenreflektierendem bzw. sonnenstrahlenabsorbierendem Innenfassadenglas 30 unterhalb der Mitte 28 des Doppelfassade 20 ist.

In Varianten der vorgenannten Varianten mit Innenfassadenglasbeschichtung 31 ist die Innenfassadenglasbeschichtung 31 eine elektrochrome Beschichtung, welche bei Anlegen einer Spannung sonnenstrahlenabsorbierend wird. In weiteren Varianten der vorgenannten Varianten mit Innenfassadenglasbeschichtung 31 ist die Innenfassadenglasbeschichtung 31 eine elektrochrome Beschichtung, welche bei Anlegen einer Spannung sonnenstrahlenreflektierend wird. In weiteren Varianten der vorgenannten Varianten mit Innenfassadenglasbeschichtung 31 ist die Innenfassadenglasbeschichtung 31 eine thermochrome Beschichtung, welche mit zunehmender Temperatur abnehmend sonnenstrahlenabsorbierend wird. In weiteren Varianten der vorgenannten Varianten mit Innenfassadenglasbeschichtung 31 ist die Innenfassadenglasbeschichtung 31 eine thermochrome Beschichtung, welche mit zunehmender Temperatur abnehmend sonnenstrahlenreflektierend wird.

In Varianten der vorgenannten Varianten mit wenigstens zweilagigem Innenfassadenglas 30 mit einer Zwischenlage ist die Zwischenlage eine elektrochrome Zwischenlage, welche bei Anlegen einer Spannung sonnenstrahlenabsorbierend wird. In weiteren Varianten der vorgenannten Varianten mit wenigstens zweilagigem Innenfassadenglas 30 mit einer Zwischenlage ist die Zwischenlage eine elektrochrome Zwischenlage, welche bei Anlegen einer Spannung sonnenstrahlenreflektierend wird. In weiteren Varianten der vorgenannten Varianten mit wenigstens zweilagigem Innenfassadenglas 30 mit einer Zwischenlage ist die Zwischenlage eine thermochrome Zwischenlage, welche mit zunehmender Temperatur abnehmend sonnenstrahlenabsorbierend wird. In weiteren Varianten der vorgenannten Varianten mit wenigstens zweilagigem Innenfassadenglas 27 mit einer Zwischenlage ist die Zwischenlage eine thermochrome Zwischenlage, welche mit zunehmender Temperatur abnehmend sonnenstrahlenreflektierend wird.

Die in Figur 1 gezeigte Doppelfassadenanordnung 1 umfasst eine Heizvorrichtung 40 zum Erwärmen des Luftstroms 50 im Fassadenzwischenraum 23. Diese Heizvorrichtung 40 ist an der Innenfassade 21 knapp über dem Lufteinlass 24 angeordnet und dient damit zum Erwärmen des Luftstroms 50 im Fassadenzwischenraum 23 unterhalb der sich zwischen Lufteinlass 24 und Luftauslass 25 befindenden Mitte 28 der Doppelfassade 20. Bei der Heizvorrichtung 40 handelt es sich um eine Wärmepumpe, welche dem Inneren des Hochbaus 70 Wärme entzieht und dem Luftstrom 50 zuführt. In einer Variante davon ist die Heizvorrichtung 40 ein Wärmetauscher, welcher Wärme aus dem Inneren des Hochbaus 70 an den Luftstrom 50 abgibt. In einer weiteren Variante ist die Heizvorrichtung 40 eine andere Art von Heizvorrichtung wie zum Beispiel eine elektrische Heizvorrichtung oder eine mit Öl oder Gas betriebene Heizvorrichtung.

Zusätzlich umfasst die Doppelfassadenanordnung 1 eine Temperiervorrichtung 41 zum Kühlen und Heizen des Luftstroms 50 im Fassadenzwischenraum 23. Da die Temperiervorrichtung 41 beim Luftauslass 25 angeordnet ist, dient sie zum Kühlen und Heizen des Luftstroms 50 im Fassadenzwischenraum 23 oberhalb der sich zwischen Lufteinlass 24 und Luftauslass 25 befindenden Mitte 28 der Doppelfassade 20. Bei der Temperiervorrichtung 41 handelt es sich um eine Wärmepumpe. In einer Variante davon handelt es sich bei der Temperiervorrichtung 41 um einen Wärmetauscher. Unabhängig von der Konstruktion und Funktionsweise der Temperiervorrichtung 41 dient die Temperiervorrichtung 41 in einer ersten Variante nur dem Heizen des Luftstroms 50 oberhalb der sich zwischen dem Lufteinlass 24 und dem Luftauslass 25 befindenden Mitte 28 der Doppelfassade 20. In einer zweiten Variante dient die Temperiervorrichtung 41 nur dem Kühlen des Luftstroms 50 oberhalb der sich zwischen dem Lufteinlass 24 und dem Luftauslass 25 befindenden Mitte 28 der Doppelfassade 20. In einer dritten Variante dient die Temperiervorrichtung 41 sowohl dem Heizen als auch dem Kühlen des Luftstroms 50 oberhalb der sich zwischen dem Lufteinlass 24 und dem Luftauslass 25 befindenden Mitte 28 der Doppelfassade 20, indem der Luftstrom 50 bei Bedarf geheizt und bei Bedarf gekühlt werden kann.

Die Doppelfassadenanordnung 1 umfasst eine Propellervorrichtung 42 mit einem im Fassadenzwischenraum 23 angeordneten Propeller 43 zum Verhindern einer nach unten gerichteten Strömung und damit zur Ausbildung einer vertikal nach oben gerichteten Strömung des Luftstroms 50 durch Steuerung eines Drehwiderstands des Propellers 43.

Figur 2 zeigt eine vereinfachte, schematische Darstellung eines Querschnitts durch einen weiteren Hochbau 170 mit einer weiteren erfindungsgemässen Doppelfassadenanordnung 101, wobei der Hochbau 170 und die Doppelfassadenanordnung 101 beinahe identisch mit dem in Figur 1 in verschiedenen Varianten gezeigten Hochbau 70 bzw. der in Figur 1 in verschiedenen Varianten gezeigten Doppelfassadenanordnung 1 aufgebaut sind. Auch ist die Darstellung der Figur 2 in weiten Teilen identisch mit der Darstellung der Figur 1.

Im Gegensatz zur in Figur 1 gezeigten Doppelfassadenanordnung 1 ist bei der in Figur 2 gezeigten Doppelfassadenanordnung 101 der Lufteinlass 124 nicht in der Aussenfassade 22, sondern am unteren Ende des Fassadenzwischenraums 23 in den Boden 72 führend angeordnet. Dabei umfasst die Doppelfassadenanordnung 101 eine Luftleitung 80, welche mit dem Lufteinlass 124 verbunden ist, wobei Umgebungsluft 61 durch die Luftleitung 80 via den Lufteinlass 124 in den Fassadenzwischenraum 23 führbar ist. Dabei umfasst die Luftleitung einen Einlass 81, welcher in den den Hochbau 170 umgebenden Boden 72 führt und durch welchen Umgebungsluft 61 aus der Umgebung des Hochbaus 170 in die Luftleitung eingelassen werden kann. Wenn eine Strasse durch die Umgebung des Hochbaus 170 führt, so ist der Einlass 81 in oder neben der Strasse angeordnet. Dadurch werden Abgase aus dem Strassenverkehr von der Strasse nach unten in den Boden 72 gesaugt und durch die Luftleitung 80 via Lufteinlass 124 in den Fassadenzwischenraum 23 der Doppelfassade 20 zur Behandlung mit der Kohlendioxidabscheidevorrichtung 2 geführt. Um dabei nicht auch Russ, Dreck und Feinpartikel des Strassenverkehrs in den Fassadenzwischenraum 23 zu leiten, ist im Einlass 81 ein Partikelfilter 126 angeordnet.

Weiter umfasst die in Figur 2 gezeigte Doppelfassadenanordnung 101 anstelle der Propellervorrichtung 42 mit dem Propeller 43 eine Turbine 144 mit einem im Fassadenzwischenraum 23 angeordneten Turbinenrad 145 zur Gewinnung von elektrischer Energie. Diese elektrische Energie kann zum Betrieb des Hochbaus 100 oder eines Elements der Doppelfassadenanordnung 101 verwendet werden. Auch kann diese elektrische Energie ins Stromversorgungsnetz eingespiesen werden. In einer Variante umfasst die Doppelfassadenanordnung 101 zudem einen Stromspeicher, insbesondere eine Batterie, um von der Turbine 144 erzeugte elektrische Energie speichern und bei Bedarf später verwenden zu können.

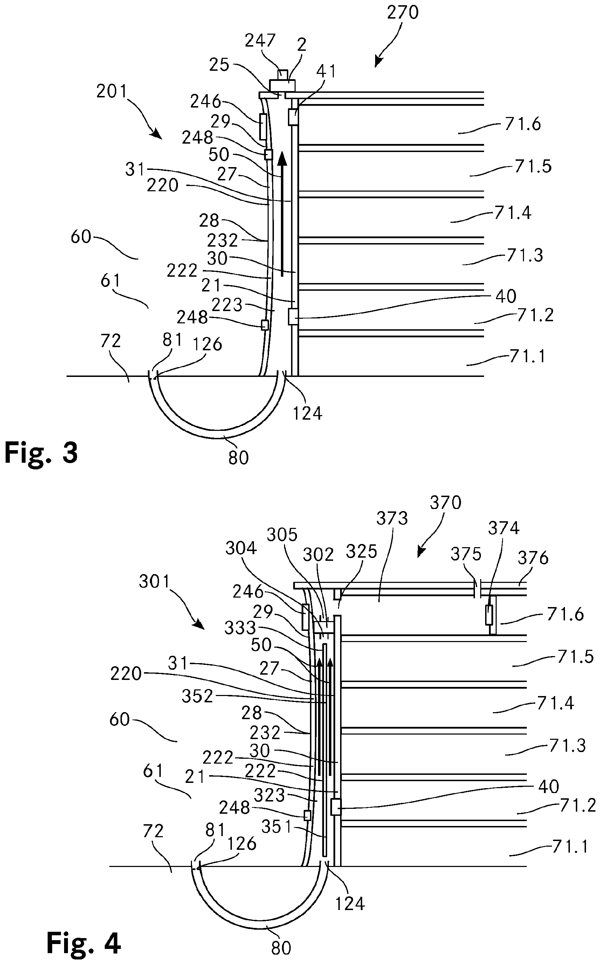

Figur 3 zeigt eine vereinfachte, schematische Darstellung eines Querschnitts durch einen weiteren Hochbau 270 mit einer weiteren erfindungsgemässen Doppelfassadenanordnung 201, wobei der Hochbau 270 und die Doppelfassadenanordnung 201 beinahe identisch mit dem in Figur 2 in verschiedenen Varianten gezeigten Hochbau 170 bzw. der in Figur 2 in verschiedenen Varianten gezeigten Doppelfassadenanordnung 101 aufgebaut sind. Auch ist die Darstellung der Figur 3 in weiten Teilen identisch mit der Darstellung der Figuren 1 und 2.

Im Gegensatz zu den in Figuren 1 und 2 gezeigten Doppelfassadenanordnungen 1, 101 ist bei der in Figur 3 gezeigten Doppelfassadenanordnung 201 der Fassadenzwischenraum 223 hyperbolisch geformt und weist eine zwischen dem Lufteinlass 124 und dem Luftauslass 25 angeordnete Taillenstelle 232 auf, wodurch der Abstand zwischen der Aussenfassade 222 und der Innenfassade 21 sowohl ausgehend vom Lufteinlass 124 zur Taillenstelle 232 hin als auch ausgehend vom Luftauslass 25 zur Taillenstelle 232 hin abnimmt. Um dies zu erreichen, ist die Aussenfassade 222 der Doppelfassade 220 hyperbolisch geformt und entsprechend gekrümmt. In einer Variante davon ist anstelle der Aussenfassade 222 die Innenfassade 21 hyperbolisch geformt. In einer weiteren Variante davon sind sowohl die Aussenfassade 222 als auch die Innenfassade 21 hyperbolisch geformt.

Weiter umfasst die in Figur 3 gezeigte Doppelfassadenanordnung 201 anstelle der Propellervorrichtung 42 mit dem Propeller 43 und anstelle der Turbine 144 mit dem Turbinenrad 145 ein Photovoltaikmodul 246 zur Gewinnung von elektrischer Energie. Dieses Photovoltaikmodul 246 ist an der Aussenfassade 222 angeordnet.

Weiter umfasst die in Figur 3 gezeigte Doppelfassadenanordnung 201 einen Zugverstärker 247, um den Luftstrom 50 aktiv zu verstärken. Dieser Zugverstärker 247 ist über der Kohlendioxidabscheidevorrichtung 2 im Luftstromluftauslass 5 angeordnet. Damit ist der Zugverstärker 247 im Bereich des Luftauslasses 25 angeordnet und zieht aktiv Luft durch den Luftstromluftauslass 5 aus dem Innenraum 3 der Kohlendioxidabscheidevorrichtung 2 und damit durch den Luftstromlufteinlass 4 und den Luftauslass 25 aus dem Fassadenzwischenraum 223. In der vorliegenden Ausführungsform ist der Zugverstärker 247 durch Wind in der Umgebungsluft 61 angetrieben. In einer Variante dazu umfasst der Zugverstärker 247 aber einen Elektromotor als Antrieb, welcher durch elektrische Energie des Photovoltaikmoduls 246 angetrieben ist. Falls die Doppelfassadenanordnung die Turbine 144 umfasst, kann der Elektromotor aber auch durch elektrische Energie von der Turbine 144 angetrieben sein.

Weiter umfasst die in Figur 3 gezeigte Doppelfassadenanordnung 201 eine in der Aussenfassade 222 angeordnete Klappe 248 und einen in der Aussenfassade 222 angeordneten Schieber 249. Beide können mit elektrischer Energie aus dem Photovoltaikmodul 246 angetrieben geöffnet und geschlossen werden. In der vorliegenden Ausführungsform ist die Klappe 248 drei Meter über dem Boden 72 angeordnet. Damit befindet sie sich unterhalb der Mitte 28 der Doppelfassade 220. Wenn die Klappe 248 geöffnet ist, so dient sie als zusätzlicher Lufteinlass, um Umgebungsluft 61 in den Fassadenzwischenraum 223 einzulassen. Weiter ist in der vorliegenden Ausführungsform der Schieber 249 gerade unterhalb des Photovoltaikmoduls 246 aber immer noch deutlich oberhalb der Mitte 28 der Doppelfassade 220 angeordnet. Wenn der Schieber 249 geöffnet ist, so dient er als zusätzlicher Luftauslass, um einen Teil des Luftstroms 50 aus dem Fassadenzwischenraum 223 in die Umgebung 60 des Hochbaus 270 zu lassen. Somit kann sowohl mit der Klappe 248 als auch mit dem Schieber 249 eine Stärke des Luftstroms 50 reguliert werden.

Figur 4 zeigt eine vereinfachte, schematische Darstellung eines Querschnitts durch einen weiteren Hochbau 370 mit einer weiteren erfindungsgemässen Doppelfassadenanordnung 301, wobei der Hochbau 370 und die Doppelfassadenanordnung 301 beinahe identisch mit dem in Figur 3 in verschiedenen Varianten gezeigten Hochbau 270 bzw. der in Figur 2 in verschiedenen Varianten gezeigten Doppelfassadenanordnung 201 aufgebaut sind. Auch ist die Darstellung der Figur 4 in weiten Teilen identisch mit der Darstellung der Figuren 1, 2 und 3.

Im Gegensatz zu den in Figuren 1, 2 und 3 gezeigten Doppelfassadenanordnungen 1, 101, 201 umfasst die in der Figur 4 gezeigte Doppelfassadenanordnung 301 ein mechanisches, verstellbares Abschattungssystem 333, welches Rollläden und Storen aufweist. Die Steuerung dieses Abschattungssystems 333 erfolgt elektronisch, wobei zum Betrieb elektrische Energie, welche mit dem Photovoltaikmoduls 246 erzeugt wird, verwendet wird. Wie in Figur 4 ersichtlich, ist das Abschattungssystem 333 mittig zwischen Aussenfassade 222 und Innenfassade 21 angeordnet. Entsprechend verläuft der Luftstrom 50 sowohl auf einer der Aussenfassade 222 zugeordneten Seite des Abschattungssystems 333 als auch auf einer der Innenfassade 21 angeordneten Seite des Abschattungssystems 333. Somit ist das Abschattungssystem 333 Bestandteil einer Zwischenfassade 351. In einer Variante dazu ist das Abschattungssystem 333 direkt an der Aussenfassade 222 angeordnet. In einer weiteren Variante hingegen ist das Abschattungssystem 333 direkt an der Innenfassade 21 angeordnet. In all diesen Varianten, und zudem unabhängig davon, ob die Doppelfassadenanordnung ein Abschattungssystem 333 umfasst oder nicht, kann die Doppelfassade zudem eine oder mehrere Zwischenfassaden aufweisen, welche zwischen der Aussenfassade und der Innenfassade angeordnet sind, sodass der Luftstrom sowohl aussenfassadenseitig als auch innenfassadenseitig der einen oder mehreren Zwischenfassaden im Fassadenzwischenraum verläuft. Als Illustration davon kann Figur 4 herangezogen werden. Zu Illustrationszwecken ist dabei einfach das Abschattungssystem 333 als Zwischenfassade 351 anzusehen. Dabei ist unerheblich, ob die Zwischenfassade 351 durch das Abschattungssystem 333 gebildet ist oder ob die einen oder mehreren Zwischenfassaden beispielsweise jeweils Glasfassaden sind.

In einer Variante umfasst die Zwischenfassade 351 umfasst Zwischenfassadenglas 352. Dabei ist eine Oberfläche der Zwischenfassade 21 zu 80% aus Zwischenfassadenglas 352 gebildet. In Varianten davon ist ein anderer Anteil dieser Oberfläche der Zwischenfassade 351 aus Zwischenfassadenglas 352 gebildet. So ist in einer Variante 70% der Oberfläche der Zwischenfassade 351 aus Zwischenfassadenglas 352 gebildet. In einer weiteren Variante ist 50% der Oberfläche der Zwischenfassade 351 aus Zwischenfassadenglas 352 gebildet. In einer weiteren Variante 30% ist der Oberfläche der Zwischenfassade 351 aus Zwischenfassadenglas 351 gebildet.

Unterhalb der sich zwischen dem Lufteinlass 24 und dem Luftauslass 25 befindenden Mitte 28 der Doppelfassade 20 ist 10% des Zwischenfassadenglases 352 sonnenstrahlenabsorbierend. In einer Variante davon ist 50% des Zwischenfassadenglases 352 sonnenstrahlenabsorbierend. In einer weiteren Variante davon ist 100% des Zwischenfassadenglases 352 sonnenstrahlenabsorbierend. In einer ersten Variante weist das sonnenstrahlenabsorbierende Zwischenfassadenglas einen Eisenoxidgehalt von 0.3 Gewichtsprozent auf. In einer zweiten Variante weist das sonnenstrahlenabsorbierende Zwischenfassadenglas einen Eisenoxidgehalt von 0.5 Gewichtsprozent auf. In einer dritten Variante weist das sonnenstrahlenabsorbierende Zwischenfassadenglas einen Eisenoxidgehalt von 0.8 Gewichtsprozent auf. In einer vierten Variante weist das sonnenstrahlenabsorbierende Zwischenfassadenglas einen Eisenoxidgehalt von 1.0 Gewichtsprozent auf. In weiteren Varianten besteht auch die Möglichkeit, dass der Eisenoxidgehalt höher liegt. In einer weiteren Variante weist unterhalb der sich zwischen dem Lufteinlass 24 und dem Luftauslass 25 befindenden Mitte 28 der Doppelfassade 20 das Zwischenfassadenglas 352 einen Eisenoxidgehalt von höchstens 0.2 Gewichtsprozent oder gar kein Eisenoxid auf.

In einer Variante zu den vorgenannten Varianten mit Zwischenfassadenglas 352 mit einen Eisenoxidgehalt von mehr als 0.2 Gewichtsprozent weist unterhalb der sich zwischen dem Lufteinlass 24 und dem Luftauslass 25 befindenden Mitte 28 der Doppelfassade 20 10% des Zwischenfassadenglases 352 wenigstens zwei Lagen mit einer zwischen den wenigstens zwei Lagen angeordneten, sonnenstrahlenabsorbierenden Zwischenlage auf. Derartiges zweilagiges Glas mit einer sonnenstrahlenabsorbierenden Zwischenlage ist bekannt. In einer weiteren Variante weist unterhalb der sich zwischen dem Lufteinlass 24 und dem Luftauslass 25 befindenden Mitte 28 der Doppelfassade 20 50% des Zwischenfassadenglases 352 wenigstens zwei Lagen mit einer zwischen den wenigstens zwei Lagen angeordneten, sonnenstrahlenabsorbierenden Zwischenlage auf. In einer weiteren Variante weist unterhalb der sich zwischen dem Lufteinlass 24 und dem Luftauslass 25 befindenden Mitte 28 der Doppelfassade 20 100% des Zwischenfassadenglases 352 wenigstens zwei Lagen mit einer zwischen den wenigstens zwei Lagen angeordneten, sonnenstrahlenabsorbierenden Zwischenlage auf. Bei weiteren drei Varianten ist anstelle der sonnenstrahlenabsorbierenden Zwischenlage eine sonnenstrahlenreflektierende Zwischenlage eingesetzt. Derartige sonnenstrahlenreflektierende Zwischenlagen sind ebenfalls bekannt. In weiteren drei Varianten ist die Zwischenlage nicht nur sonnenstrahlenabsorbierend oder nur sonnenstrahlenreflektierend, sondern sowohl sonnenstrahlenabsorbierend als auch sonnenstrahlenreflektierend. Derartige sowohl sonnenstrahlenabsorbierende als auch sonnenstrahlenreflektierende Zwischenlagen sind ebenfalls bekannt. In weiteren Varianten weist unterhalb der sich zwischen dem Lufteinlass 24 und dem Luftauslass 25 befindenden Mitte 28 der Doppelfassade 20 der genannte Anteil des Zwischenfassadenglases 352 einen Eisenoxidgehalt von mehr als 0.2 Gewichtsprozent auf und der genannte Anteil des Zwischenfassadenglases 352 weist wenigstens zwei Lagen und eine dazwischen angeordnete, sonnenstrahlenabsorbierende, sonnenstrahlenreflektierende, oder sowohl sonnenstrahlenabsorbierende als auch sonnenstrahlenreflektierende Zwischenlage auf. Dabei kann Zwischenfassadenglas 352 auch wenigstens zwei Lagen und eine derartige Zwischenlage sowie einen Eisenoxidgehalt von mehr als 0.2 Gewichtsprozent aufweisen. In diesem Fall reicht es aus, wenn eine der wenigstens zwei Lagen einen solchen Eisenoxidgehalt aufweist. Selbstverständlich können aber auch zwei oder alle der wenigstens zwei Lagen diesen Eisenoxidgehalt aufweisen.

In allen diesen Varianten ist unterhalb der sich zwischen dem Lufteinlass 24 und dem Luftauslass 25 befindenden Mitte 28 der Doppelfassade 20 10% bzw. 50% bzw. 100% des Zwischenfassadenglases 352 sonnenstrahlenabsorbierend bzw. sonnenstrahlenreflektierend bzw. sowohl sonnenstrahlenabsorbierend als auch sonnenstrahlenreflektierend. Entsprechend wird unterhalb der sich zwischen dem Lufteinlass 24 und dem Luftauslass 25 befindenden Mitte 28 der Doppelfassade 20 von der Zwischenfassade 351 mehr Sonnenstrahlung absorbiert bzw. reflektiert. Bei verstärkter Absorption wärmt sich die Zwischenfassade 351 stärker auf, womit Luft im Fassadenzwischenraum 23 stärker erwärmt wird. Bei verstärkter Reflexion hingegen wird mehr Sonnenstrahlung von der Zwischenfassade 351 zurück in den Zwischenraum zwischen der Aussenfassade 222 und der Innenfassade 21 reflektiert, womit Luft im Zwischenraum ebenfalls stärker erwärmt wird. Somit wird durch beide Effekte die Temperatur T₁ im Bereich des Lufteinlasses 24 stärker erhöht, womit der Kamineffekt und somit der Luftstrom 50 verstärkt wird.

In einer ersten Variante, welche den gleichen Effekt erzielt, weist unterhalb der sich zwischen dem Lufteinlass 24 und dem Luftauslass 25 befindenden Mitte 28 der Doppelfassade 20 10% des Zwischenfassadenglases 352 eine sonnenstrahlenabsorbierende Zwischenfassadenglasbeschichtung 353 auf. In einer zweiten Variante, welche ebenfalls den gleichen Effekt erzielt, weist unterhalb der sich zwischen dem Lufteinlass 24 und dem Luftauslass 25 befindenden Mitte 28 der Doppelfassade 20 50% des Zwischenfassadenglases 352 eine sonnenstrahlenabsorbierende Zwischenfassadenglasbeschichtung 353 auf. In einer dritten Variante, welche ebenfalls den gleichen Effekt erzielt, weist oberhalb der sich zwischen dem Lufteinlass 24 und dem Luftauslass 25 befindenden Mitte 28 der Doppelfassade 20 100% des Zwischenfassadenglases 352 eine sonnenstrahlenabsorbierende Zwischenfassadenglasbeschichtung 353 auf. In drei weiteren Varianten, welche den gleichen Effekt erzielen, weist unterhalb der sich zwischen dem Lufteinlass 24 und dem Luftauslass 25 befindenden Mitte 28 der Doppelfassade 20 10% bzw. 50% bzw. 100% des Zwischenfassadenglases 352 eine sonnenstrahlenreflektierende Zwischenfassadenglasbeschichtung 353 auf. In drei weiteren Varianten, welche den gleichen Effekt erzielen, weist unterhalb der sich zwischen dem Lufteinlass 24 und dem Luftauslass 25 befindenden Mitte 28 der Doppelfassade 20 10% bzw. 50% bzw. 100% des Zwischenfassadenglases 352 eine sowohl sonnenstrahlenreflektierende als auch sonnenstrahlenreflektierende Zwischenfassadenglasbeschichtung353 auf.

Auch bei diesen neun Varianten ist unterhalb der sich zwischen dem Lufteinlass 24 und dem Luftauslass 25 befindenden Mitte 28 der Doppelfassade 20 10%, bzw. 50% bzw. 100% des Zwischenfassadenglases 352 sonnenstrahlenabsorbierend bzw. sonnenstrahlenreflektierend bzw. sowohl sonnenstrahlenabsorbierend als auch sonnenstrahlenreflektierend.

Die vorgenannten neun Varianten mit einer Zwischenfassadenglasbeschichtung 353 können für sich alleine, ohne die vorhergehenden Varianten, bei welchen Zwischenfassadenglas 30 sonnenstrahlenabsorbierend ist bzw. einen Eisenoxidgehalt von mehr als 0.2 Gewichtsprozent bzw. wenigstens zwei Lagen mit einer zwischen den wenigstens zwei Lagen angeordneten, sonnenstrahlenabsorbierenden bzw. sonnenstrahlenreflektierenden Zwischenlage aufweist, bestehen. Sie können aber auch in Kombination mit einer der vorgehenden Varianten, bei welchen Zwischenfassadenglas 352 einen Eisenoxidgehalt von mehr als 0.2 Gewichtsprozent bzw. wenigstens zwei Lagen mit einer zwischen den wenigstens zwei Lagen angeordneten, sonnenstrahlenabsorbierenden bzw. sonnenstrahlenreflektierenden Zwischenlage aufweist, bestehen. Grundsätzlich gilt dabei, dass der Kamineffekt und damit der Luftstrom 50 stärker verstärkt wird, je grösser der Anteil an sonnenstrahlenreflektierendem bzw. sonnenstrahlenabsorbierendem Zwischenfassadenglas 352 unterhalb der Mitte 28 des Doppelfassade 20 ist.

In Varianten der vorgenannten Varianten mit Zwischenfassadenglasbeschichtung 353 ist die Zwischenfassadenglasbeschichtung 353 eine elektrochrome Beschichtung, welche bei Anlegen einer Spannung sonnenstrahlenabsorbierend wird. In weiteren Varianten der vorgenannten Varianten mit Zwischenfassadenglasbeschichtung 353 ist die Zwischenfassadenglasbeschichtung 353 eine elektrochrome Beschichtung, welche bei Anlegen einer Spannung sonnenstrahlenreflektierend wird. In weiteren Varianten der vorgenannten Varianten mit Zwischenfassadenglasbeschichtung 353 ist die Zwischenfassadenglasbeschichtung 353 eine thermochrome Beschichtung, welche mit zunehmender Temperatur abnehmend sonnenstrahlenabsorbierend wird. In weiteren Varianten der vorgenannten Varianten mit Zwischenfassadenglasbeschichtung 353 ist die Zwischenfassadenglasbeschichtung 353 eine thermochrome Beschichtung, welche mit zunehmender Temperatur abnehmend sonnenstrahlenreflektierend wird.

In Varianten der vorgenannten Varianten mit wenigstens zweilagigem Zwischenfassadenglas 352 mit einer Zwischenlage ist die Zwischenlage eine elektrochrome Zwischenlage, welche bei Anlegen einer Spannung sonnenstrahlenabsorbierend wird. In weiteren Varianten der vorgenannten Varianten mit wenigstens zweilagigem Zwischenfassadenglas 352 mit einer Zwischenlage ist die Zwischenlage eine elektrochrome Zwischenlage, welche bei Anlegen einer Spannung sonnenstrahlenreflektierend wird. In weiteren Varianten der vorgenannten Varianten mit wenigstens zweilagigem Zwischenfassadenglas 352 mit einer Zwischenlage ist die Zwischenlage eine thermochrome Zwischenlage, welche mit zunehmender Temperatur abnehmend sonnenstrahlenabsorbierend wird. In weiteren Varianten der vorgenannten Varianten mit wenigstens zweilagigem Zwischenfassadenglas 352 mit einer Zwischenlage ist die Zwischenlage eine thermochrome Zwischenlage, welche mit zunehmender Temperatur abnehmend sonnenstrahlenreflektierend wird.

Weiter ist bei der in Figur 4 gezeigten Doppelfassadenanordnung 301 die Kohlendioxidabscheidevorrichtung 302 im Fassadenzwischenraum 323 angeordnet. Dabei passiert der Luftstrom 50 beim Durchlaufen des Fassadenzwischenraums 323 auch die Kohlendioxidabscheidevorrichtung 302, indem er durch den Luftstromlufteinlass 304 in den Innenraum der Kohlendioxidabscheidevorrichtung 302 geleitet wird und durch den Luftstromluftauslass 305 wieder aus dem Innenraum der Kohlendioxidabscheidevorrichtung 302 geleitet wird. Erst nachdem der Luftstrom 50 die Kohlendioxidabscheidevorrichtung 302 passiert hat, wird er durch den Luftauslass 325 aus dem Fassadenzwischenraum 323 geleitet.

In der vorliegenden Ausführungsform führt der Luftauslass 325 vom Fassadenzwischenraum 323 in einen Gebäudeinnenraum 373 des Hochbaus 370. Damit dient der Gebäudeinnenraum 373 dazu, den durch den Luftauslass 325 aus dem Fassadenzwischenraum 323 ausströmenden Luftstrom 50 aufzunehmen und auf eine Temperatur T_{I}, welche kleiner als die Temperatur T₂ des Luftstroms 50 im Bereich des Luftauslasses 325 ist, zu kühlen. Hierzu ist einerseits der Gebäudeinnenraum 373 thermisch isoliert. Andererseits umfasst der Hochbau 370 eine Kühlvorrichtung 374, mit welcher der Gebäudeinnenraum 373 gekühlt werden kann. Zudem ist ein Volumen des Gebäudeinnenraums 373 grösser als ein Volume des Fassadenzwischenraums 323, damit eine adiabatische Expansion der Luft im Gebäudeinnenraum 373 ermöglicht wird, wenn sie aus dem Fassadenzwischenraum 323 in den Gebäudeinnenraum 373 strömt. Damit die Luft des Luftstroms 50 aus dem Gebäudeinnenraum 373 entweichen kann, weist der Gebäudeinnenraum 373 einen Auslass 375 in die Umgebung 60 des Hochbaus 370 auf. In der Darstellung der Figur 4 ist der Auslass 375 zwar im Dach 376 des Hochbaus 370 angeordnet gezeigt. Dies ist nicht notwendig. So ist der Auslass 375 in einer Variante am unteren Ende der Doppelfassade 220 gerade über dem Boden 72 angeordnet.

Im Betrieb werden die vorgehend im Zusammenhang mit den Figuren 1, 2, 3 und 4 beschriebenen Doppelfassadenanordnungen 1, 101, 201, 301 bzw. Hochbauten 70, 170, 270, 370 mit der jeweiligen Doppelfassadenanordnung 1, 101, 201, 301 zur Erzeugung des vertikal gerichteten Luftstroms 50 mittels Kamineffekt und zur Abscheidung von Kohlendioxid aus der Luft des Luftstroms 50 verwendet.

Figuren 5a und 5b zeigen je eine vereinfachte, schematische Darstellung eines Querschnitts durch die Kohlendioxidabscheidevorrichtung 2, 302 zur Illustration der Funktionsweise der Kohlendioxidabscheidevorrichtung 2, 302. Dabei illustrieren die Figuren 5a und 5b unterschiedliche Varianten der Funktionsweise der Kohlendioxidabscheidevorrichtung 2, 302. In beiden Figuren 5a und 5b ist die Kohlendioxidabscheidevorrichtung mit den Bezugszeichen 2, 302 versehen. Zudem ist in beiden Figuren der Luftstromlufteinlass mit den Bezugszeichen 4, 304 und der Luftstromluftauslass mit den Bezugszeichen 5, 305 versehen. Der Grund dafür ist, dass die in den Figuren 5a und 5b gezeigte Kohlendioxidabscheidevorrichtung 2, 302 unabhängig von ihrer Funktionsweise in jeder der in den Figuren 1 bis 4 in verschiedenen Varianten gezeigten Doppelfassadenanordnungen 1, 101, 201, 301 eingesetzt werden kann.

Wie bereits erwähnt, weist die Kohlendioxidabscheidevorrichtung 2, 302 einen Innenraum 3 auf. Dabei kann Luft des Luftstroms 50 durch den Luftstromlufteinlass 4, 304 in den Innenraum 3 gelangen und durch den Luftstromluftauslass 5, 305 wieder aus dem Innenraum 3 austreten. In der in Figur 5a gezeigten Variante umfasst die Kohlendioxidabscheidevorrichtung 2, 302 im Innenraum 3 eine Membran 6 aus Polytetrafluorethylen (PTFE). Diese Membran 6 dient der Trennung von des Luftstroms 50 und einer sich in einem Flüssigkeitsreservoir 10 befindenden Flüssigkeit 7, wobei es sich im vorliegenden Fall bei der Flüssigkeit 7 um Wasser mit einem Anteil Propylenglykol handelt. Allerdings ist die Membran 6 für Kohlendioxid sowie für Stickoxide und Schwefeloxide permeabel, sodass Kohlendioxid, Stickoxide und Schwefeloxide aus der Luft des Luftstroms 50 in die Flüssigkeit 7 gelangen können. Entsprechend ist die Membran 6 eine Kontaktfläche zur Kontaktierung von Luft des Luftstroms 50 zur Abscheidung von Kohlendioxid, Stickoxiden und Schwefeloxiden aus der Luft des Luftstroms 50. Weiter umfasst die Kohlendioxidabscheidevorrichtung 2, 302 in der in Figur 5a gezeigten Variante eine in der Flüssigkeit 7 angeordnete, nanoporöse Metallfolie 8 mit Kupfernanopartikeln zur Anlagerung von Kohlendioxid. Eine solche Metallfolie 8 ist beispielsweise in der Publikation "High-Selectivity Electrochemical Conversion of CO2 to Ethanol using a Copper Nanoparticle/N-Doped Graphene Electrode" von Yang Song et al., ChemistrySelect 2016, 1, 6055-6061, beschrieben. In der Flüssigkeit 7 gelöstes Kohlendioxid lagert sich an der Metallfolie 8 an und wird dabei in Ethanol umgewandelt. Somit wird in der in Figur 5a gezeigten Variante in einem ersten Schritt Kohlendioxid aus der Luft des Luftstroms 50 durch die Membran 6 in die Flüssigkeit 7 und abgeschieden. In einem zweiten Schritt wird das Kohlendioxid aus der Flüssigkeit 7 in Ethanol umgewandelt und damit aus der Flüssigkeit 7 abgeschieden. Da Wasserdampf aus der Flüssigkeit 7 durch die Membran 6 in den Luftstrom 50 gelangen kann, umfasst die in Figur 5a gezeigte Variante der Kohlendioxidabscheidevorrichtung 2, 302 einen Nachfülleinlass 9 zum Nachfüllen der Flüssigkeit 7 im Flüssigkeitsreservoir 10.

In einer Variante ist dabei die Membran 6 mit einem Metall wie beispielsweise Gold, Silber, Platin, Palladium, Kupfer, Mangan, Tantal, Vanadium oder einer Kombination davon beschichtet und weist selbst eine Kohlendioxidabscheidende Wirkung auf.

In einer weiteren Variante ist die Membran 6 mit Kupferoxid beschichtet. Im Kontakt mit der Flüssigkeit 7 bzw. dem in der Flüssigkeit 7 enthaltenen Wasser bildet sich aus diesem Kupferoxid Kupferhydroxid. Dieses Kupferhydroxid ist leicht basisch und reagiert mit im Wasser zu Kohlensäure gelöstem Kohlendioxid zu Kupferkarbonat, wodurch Kohlendioxid abgeschieden wird. Zudem reagiert das Kupferhydroxid mit im Wasser gelösten Stickoxiden zu Kupfernitraten, wodurch Stickoxide abgeschieden werden. Auch reagiert das Kupferhydroxid mit im Wasser gelösten Schwefeloxiden zu Kupfersulfaten, wodurch Schwefeloxide abgeschieden werden.

In der in Figur 5b gezeigten Variante der Kohlendioxidabscheidevorrichtung 2, 302 umfasst die Kohlendioxidabscheidevorrichtung 2, 302 anstelle der Membran 6, Flüssigkeit 7, Metallfolie 8, Nachfülleinlass 9 und Flüssigkeitsreservoir 10 einen Filter 11 zur Abscheidung des Kohlendioxids aus der Luft des Luftstroms 50. Dabei ist der Filter 11 derart im Innenraum 3 der Kohlendioxidabscheidevorrichtung 2, 302 angeordnet, dass der gesamte Anteil des Luftstroms 50, welcher durch den Innenraum 3 geleitet wird, durch den Filter 11 geführt wird. Dabei bildet die aktive Filteroberfläche, welche mit dem Luftstrom 50 in Berührung kommt, eine Kontaktfläche mit kohlendioxidabscheidender Wirkung.

In weiteren Varianten funktioniert die Kohlendioxidabscheidevorrichtung 2, 302 nach einem anderen Prinzip. In einer Variante enthält die Kohlendioxidabscheidevorrichtung 2, 302 Moos, welches Kohlendioxid, Stickoxide und Schwefeloxide aus der Luft des Luftstroms abscheidet.

Die Erfindung ist nicht auf die vorgehend beschriebenen und anhand der Figuren illustrierten Ausführungsformen beschränkt. Vielmehr sind dem Fachmann aufgrund der Beschreibungsformen auch weitere Varianten, Kombinationen und Ausführungsformen unmittelbar zugänglich.

Zusammenfassend ist festzustellen, dass eine Doppelfassadenanordnung geschaffen wird, welche sowohl klima- und umweltfreundlich ist als auch lokal die Lebensqualität von Menschen, Tieren und Pflanzen in der direkten Umgebung der Doppelfassadenanordnung erhöht.

## Patentansprüche

1. Doppelfassadenanordnung (1, 101, 201, 301) für einen Hochbau (70, 170, 270, 370), insbesondere ein Gebäude, eine Brückenstütze, ein Brückenpfeiler oder eine Lärmschutzwand, umfassend eine Doppelfassade (20, 220) zur Erzeugung eines vertikal gerichteten Luftstroms (50) mittels Kamineffekt,
a) wobei die Doppelfassade (20, 220) eine Innenfassade (21) und eine Aussenfassade (22, 222) umfasst, wobei zwischen der Innenfassade (21) und der Aussenfassade (22, 222) ein Fassadenzwischenraum (23, 223, 323) zur Führung des Luftstroms (50) besteht, wobei die Innenfassade (21) den Fassadenzwischenraum (23, 223, 323) zum Hochbau (70, 170, 270, 370) hin abgrenzt und die Aussenfassade (22, 222) den Fassadenzwischenraum (23, 223, 323) zu einer Umgebung (60) des Hochbaus (70, 170, 270, 370) hin abgrenzt, und
b) wobei die Doppelfassade (20, 220) einen Lufteinlass (24, 124) zum Einlassen des Luftstroms (50) mit Luft aus der Umgebung (60) in den Fassadenzwischenraum (23, 223, 323) und einen oberhalb des Lufteinlasses (24, 124) angeordneten Luftauslass (25, 325) zum Auslassen zumindest eines Teils des Luftstroms (50) aus dem Fassadenzwischenraum (23, 223, 323) umfasst,
**dadurch gekennzeichnet, dass** die Doppelfassadenanordnung (1, 101, 201, 301) eine Kohlendioxidabscheidevorrichtung (2, 302) zum Abscheiden zumindest eines Teils des Kohlendioxids aus der Luft des Luftstroms (50) umfasst.

2. Doppelfassadenanordnung (1, 101, 201, 302) nach Anspruch 1, **dadurch gekennzeichnet, dass** die Kohlendioxidabscheidevorrichtung (2, 302) eine Kontaktfläche zur Kontaktierung von Luft des Luftstroms (50) zur Abscheidung von Kohlendioxid aus der Luft des Luftstroms (50) umfasst, wobei die Kontaktfläche eine Membran (6) ist, mittels welcher Luft des Luftstroms (50) von einer Flüssigkeit (7), insbesondere einer wasserhaltigen Flüssigkeit, trennbar ist, wobei die Membran (6) für Kohlendioxid permeabel ist, wodurch Kohlendioxid aus der Luft des Luftstroms (50) in die Flüssigkeit (7) zur Abscheidung des Kohlendioxids gelangen kann.

3. Doppelfassadenanordnung (1, 101, 201, 301) nach Anspruch 1 oder 2, **dadurch gekennzeichnet, dass** die Aussenfassade (22, 222) eine Glasfassade ist und somit Aussenfassadenglas (27) umfasst.

4. Doppelfassadenanordnung (1, 101, 201, 301) nach Anspruch 3, **dadurch gekennzeichnet, dass** unterhalb einer sich zwischen dem Lufteinlass (24, 124) und dem Luftauslass (25, 325) befindenden Mitte (28) der Doppelfassade (20, 220) wenigstens 50% des Aussenfassadenglases (27) Weissglas ist.

5. Doppelfassadenanordnung (1, 101, 201, 301) nach Anspruch 3 oder 4, **dadurch gekennzeichnet, dass** oberhalb der sich zwischen dem Lufteinlass und dem Luftauslass befindenden Mitte der Doppelfassade wenigstens 10%, besonders bevorzugt wenigstens 50% des Aussenfassadenglases sonnenstrahlenabsorbierend und/oder sonnenstrahlenreflektierend ist.

6. Doppelfassadenanordnung (1, 101, 201, 301) nach einem der Ansprüche 3 bis 5, **dadurch gekennzeichnet, dass** oberhalb der sich zwischen dem Lufteinlass (24, 124) und dem Luftauslass (25, 325) befindenden Mitte (28) der Doppelfassade (20, 220) wenigstens 10%, besonders bevorzugt wenigstens 50% des Aussenfassadenglases (27) eine Aussenfassadenglasbeschichtung (29) aufweist, wobei die Aussenfassadenglasbeschichtung (29) sonnenstrahlenabsorbierend und/oder sonnenstrahlenreflektierend ist.

7. Doppelfassadenanordnung (1, 101, 201, 301) nach einem der Ansprüche 1 bis 6, **dadurch gekennzeichnet, dass** die Innenfassade (21) Innenfassadenglas (30) umfasst, wobei eine dem Fassadenzwischenraum (23, 223, 323) zugewandte Oberfläche der Innenfassade (21) mindestens zu 30%, bevorzugt mindestens zu 50%, besonders bevorzugt mindestens zu 70% aus Innenfassadenglas (30) gebildet ist.

8. Doppelfassadenanordnung (1, 101, 201, 301) nach Anspruch 7, **dadurch gekennzeichnet, dass** unterhalb der sich zwischen dem Lufteinlass (24, 124) und dem Luftauslass (25, 325) befindenden Mitte (28) der Doppelfassade (20, 220) wenigstens 10%, besonders bevorzugt wenigstens 50% des Innenfassadenglases (30) sonnenstrahlenabsorbierend und/oder sonnenstrahlenreflektierend ist.

9. Doppelfassadenanordnung (1, 101, 201, 301) nach Anspruch 7 oder 8, **dadurch gekennzeichnet, dass** unterhalb der sich zwischen dem Lufteinlass (24, 124) und dem Luftauslass (25, 325) befindenden Mitte (28) der Doppelfassade (20, 220) wenigstens 10%, besonders bevorzugt wenigstens 50% des Innenfassadenglases (30) eine Innenfassadenglasbeschichtung (31) aufweist, wobei die Innenfassadenglasbeschichtung (31) sonnenstrahlenabsorbierend und/oder sonnenstrahlenreflektierend ist.

10. Doppelfassadenanordnung (1, 101, 201, 301) nach einem der Ansprüche 1 bis 9, **gekennzeichnet durch** eine Heizvorrichtung (40), insbesondere einen Wärmetauscher oder eine Wärmepumpe, zum Erwärmen des Luftstroms (50) im Fassadenzwischenraum (23, 223, 323) unterhalb der sich zwischen dem Lufteinlass (24, 124) und dem Luftauslass (25, 325) befindenden Mitte (28) der Doppelfassade (20, 220).

11. Doppelfassadenanordnung (1, 101, 201) nach einem der Ansprüche 1 bis 10, **gekennzeichnet durch** eine Temperiervorrichtung (41), insbesondere einen Wärmetauscher oder eine Wärmepumpe, zum Kühlen und/oder Heizen des Luftstroms (50) im Fassadenzwischenraum (23, 223, 323) oberhalb der sich zwischen dem Lufteinlass (24, 124) und dem Luftauslass (25, 325) befindenden Mitte (28) der Doppelfassade (20, 220).

12. Doppelfassadenanordnung (201, 301) nach einem der Ansprüche 1 bis 11, **gekennzeichnet durch** wenigstens eine Klappe (248) und/oder wenigstens einen Schieber (249) zur Regulierung des Luftstroms (50).

13. Doppelfassadenanordnung (1, 101, 201, 301) nach einem der Ansprüche 1 bis 12, **dadurch gekennzeichnet, dass** in wenigstens 70% einer Fläche der Doppelfassade (20, 220) ein Abstand zwischen der Aussenfassade (22, 222) und der Innenfassade (21) einen Wert in einem Bereich von 30 cm bis 150 cm, besonders bevorzugt von 50 cm bis 120 cm aufweist.

14. Hochbau (70, 170, 270, 370), insbesondere ein Gebäude, eine Brückenstütze, ein Brückenpfeiler oder eine Lärmschutzwand, mit einer Doppelfassadenanordnung (1, 101, 201, 301) nach einem der Ansprüche 1 bis 13.

15. Verwendung einer Doppelfassadenanordnung (1, 101, 201, 301) nach einem der Ansprüche 1 bis 14 oder eines Hochbaus (70, 170, 270, 370) nach Anspruch 14 zur Erzeugung eines vertikal gerichteten Luftstroms (50) mittels Kamineffekt und zur Abscheidung von Kohlendioxid aus der Luft des Luftstroms (50).
